# EUROPEAN PATENT APPLICATION

(11) **EP 4 311 173 A1**
(43) Date of publication of application: **24.01.2024**
(21) Application number: 21933897.7
(22) Date of filing: 31.03.2021
(51) Int. Cl.: H04L 25/02

(54) **LINK TRAINING METHOD AND RELATED DEVICE**

(71) Applicant: Huawei Technologies Co., Ltd., Shenzhen, Guangdong 518129 (CN)
(72) Inventor: QIAN, Guang, Shenzhen, Guangdong 518129 (CN); WANG, Jingjing, Shenzhen, Guangdong 518129 (CN); LI, Xiaowei, Shenzhen, Guangdong 518129 (CN)
(74) Representative: Gill Jennings & Every LLP
(86) International application number: PCT/CN2021/084765
(87) International publication number: WO 2022/205237

(57) **Abstract**

Embodiments of this application provide a link training method and a related device. A first device is connected to a second device through a cable, the first device includes a first transmit end and a first receive end, the second device includes a second transmit end and a second receive end, and the cable includes at least one first link from the first transmit end to the second receive end and at least one second link from the second transmit end to the first receive end. The first device performs link training on the at least one first link. When link training is not performed on the at least one second link, or before link training on the at least one second link succeeds, the first device sends data to the second device through at least one first link on which link training succeeds. According to embodiments of this application, mutually independent link training of a bidirectional transmission link can be implemented.

## Description

### TECHNICAL FIELD

This application relates to the field of communication technologies, and in particular, to a link training method and a related device.

### BACKGROUND

With continuous improvement of video processing technologies, demands for high resolution and high frame rates are increasingly high in all walks of life such as industry, medical care, and consumer electronics. Higher resolution and higher frame rates definitely require higher rates and higher bandwidth. A higher rate indicates higher importance of equalized matching between a transmit end and a receive end. If the transmit end uses a fixed parameter configuration for transmission, it is difficult for the receive end to achieve equalized matching with respect to different cables and environments. As a result, a signal cannot be recovered. Through link training (Link Training, LT), the transmit end and the receive end can dynamically adjust parameters based on a current transmission environment and respective performance and statuses, to achieve optimal equalized matching between the two ends.

In existing high-speed media interfaces, training technologies are used for high definition multimedia interface (High Definition Multimedia Interface, HDMI) 2.1, display port (Display Port, DP) 1.4, universal serial bus (Universal Serial Bus, USB) 4.0, and the like to complete link establishment. However, these methods have some limitations. HDMI 2.1 and DP 1.4 support only unidirectional training. In addition, in a training process, only the transmit end can actively query a training state of the receive end, resulting in high requirements on software and high overheads. After training succeeds, if a hardware environment such as a device or a cable does not change, time for retraining at a same rate is basically consistent with that for previous training. Therefore, acceleration cannot be implemented, and training time is long. USB supports bidirectional training, but the training is strongly restricted. For example, a pair of links (Lane) needs to be trained simultaneously, training rates in an upstream direction and a downstream direction need to be completely consistent, and service transmission can be performed only after all links in the upstream direction and the downstream direction are successfully trained. However, with complexity and diversity of application scenarios, it is difficult for an existing link training method to adapt to a new scenario, for example, a new scenario such as bidirectional low-delay audio and video transmission or quick screen-on upon startup.

### SUMMARY

Embodiments of this application disclose a link training method and a related device, to implement mutually independent link training of a bidirectional transmission link.

According to a first aspect, an embodiment of this application provides a link training method, applied to a first device. The first device is connected to a second device through a cable, the first device includes a first transmit end and a first receive end, the second device includes a second transmit end and a second receive end, and the cable includes at least one first link from the first transmit end to the second receive end and at least one second link from the second transmit end to the first receive end. The method includes: performing link training on the at least one first link; and when link training is not performed on the at least one second link, or before link training on the at least one second link succeeds, sending data to the second device through at least one first link on which link training succeeds.

In this embodiment of this application, links between the first device and the second device include the at least one first link from the first transmit end of the first device to the second receive end of the second device and the at least one second link from the second transmit end of the second device to the first receive end of the first device. Performing link training on the links between the first device and the second device includes performing link training on the at least one first link and performing link training on the at least one second link, that is, performing link training on a bidirectional transmission link. When link training is not performed on the at least one second link, or before the link training on the at least one second link succeeds, if the link training on the at least one first link succeeds, the data may be sent to the second device through the at least one first link on which the link training succeeds. Specifically, the data is sent to the second receive end through the first transmit end. Therefore, in this embodiment of this application, mutually independent link training of the bidirectional transmission link can be implemented, and training procedures in all directions are not coupled to each other. Therefore, training rates and link quantities of the bidirectional transmission link are not strongly bound, and link training flexibility is greatly improved. After link training in one direction of the bidirectional transmission link succeeds, service transmission may be performed in the direction. Service transmission can be started without waiting for a success of link training in both directions. Therefore, service transmission is earlier, and more complex and more scenarios can be adapted to.

In a possible implementation, the cable further includes an auxiliary link (SideBand Link, SL), and the performing link training on the at least one first link includes: sending a first rate to the second device through the auxiliary link, where the first rate is a link training rate of the at least one first link; and performing clock locking, equalization calculation, and link check on the at least one first link at the first rate when a parameter of the first transmit end is set to a first training parameter value.

In this embodiment of this application, the cable further includes the auxiliary link, link training is performed on the at least one first link, the first device sends the first rate to the second device through the auxiliary link, and the first rate is the link training rate of the at least one first link. Therefore, the second device can learn of the training rate of the at least one first link. The first device further sets the parameter of the first transmit end to the first training parameter value, and then performs clock locking, equalization calculation, and link check on the at least one first link at the first rate. The second device also cooperates with the first device at the first rate to perform clock locking, equalization calculation, and link check on the at least one first link. When the clock locking, the equalization calculation, and the link check all succeed, the link training on the at least one first link succeeds. The first device sends the training rate to the second device through the auxiliary link, so that the first device and the second device perform link training at the same training rate. This facilitates a success of the link training on the at least one first link.

In a possible implementation, the performing clock locking, equalization calculation, and link check on the at least one first link includes: sending a first clock recovery sequence to the second receive end through the first transmit end; receiving a first clock locking result from the second device through the auxiliary link, where the first clock locking result is that the clock locking succeeds or the clock locking fails; sending a first equalization sequence to the second receive end through the first transmit end when the first clock locking result is that the clock locking succeeds, where the first equalization sequence is used by the second device to perform equalization calculation; and receiving a first equalization calculation result or a first link check result from the second device through the auxiliary link, where the first equalization calculation result is that the equalization calculation fails, and the first link check result is that the link check succeeds or the link check fails.

In this embodiment of this application, the first device sends the first clock recovery sequence to the second receive end through the first transmit end, and the first clock recovery sequence is used by the second device to perform clock recovery and locking, so that a clock of the second device is synchronized with a clock of the first device. After completing clock recovery and locking, the second device sends the first clock locking result to the first device through the auxiliary link. When the clock locking performed by the second device succeeds, the first clock locking result is that the clock locking succeeds. When the clock locking performed by the second device fails, the first clock locking result is that the clock locking fails. If the clock locking performed by the second device times out, it is also considered that the clock locking performed by the second device fails. When the first clock locking result is that the clock locking succeeds, the first device sends the first equalization sequence to the second receive end through the first transmit end, and the first equalization sequence is used by the second device to perform equalization calculation. When the equalization calculation performed by the second device fails, the second device sends the first equalization calculation result through the auxiliary link, and the first equalization calculation result is that the equalization calculation fails. When the equalization calculation performed by the second device succeeds, the second device performs link check, and sends the first link check result to the first device through the auxiliary link after the link check is completed. When the link check performed by the second device fails, the first link check result is that the link check fails. When the link check performed by the second device succeeds, the first link check result is that the link check succeeds. In this way, during link training, if the clock locking succeeds, the first device can be clock-synchronized with the second device. The equalization calculation and the link check can make a link equalized. When the clock locking, the equalization calculation, and the link check on the at least one first link all succeeds, it may be considered that the link training on the at least one first link succeeds. For example, when the equalization calculation performed by the second device succeeds, the second device may also choose to send the first equalization calculation result through the auxiliary link. In this case, the first equalization calculation result is that the equalization calculation succeeds.

In a possible implementation, the first clock locking result includes a clock locking result of each of the at least one first link, and when a first link on which clock locking fails exists in the at least one first link, the first clock locking result is that the clock locking fails; or when no first link on which clock locking fails exists in the at least one first link, the first clock locking result is that the clock locking succeeds.

In this embodiment of this application, the first clock locking result received by the first device from the second device includes the clock locking result of each of the at least one first link. A success of the clock locking on the at least one first link requires that clock locking on each of the at least one first link succeeds. The clock locking on the at least one first link fails provided that the first link on which the clock locking fails exists in the at least one first link. Therefore, the second device sends the clock locking result of each of the at least one first link to the first device by using the first clock locking result. This helps the first device determine the clock locking result of the at least one first link.

In a possible implementation, the parameter of the first transmit end includes a voltage swing of each first link, and the method further includes: determining whether a configuration of a voltage swing of the first link on which the clock locking fails in the at least one first link traverses all preset voltage swing values; if the configuration of the voltage swing of the first link on which the clock locking fails in the at least one first link does not traverse all the preset voltage swing values, updating the configuration of the voltage swing of the first link on which the clock locking fails from a first value to a second value, where all the preset voltage swing values include the first value and the second value, and the second value is a value that has not been configured for the voltage swing of the first link on which the clock locking fails; and sending, to the second device through the auxiliary link, information indicating that configuration update of the voltage swing of the first link on which the clock locking fails is completed, where the first training parameter value includes a voltage swing training value, and the first value is the voltage swing training value when the configuration of the voltage swing of the first link on which the clock locking fails is updated for the first time.

In this embodiment of this application, the parameter of the first transmit end includes the voltage swing of each first link. If a value of a voltage swing configured by the first transmit end is excessively high or excessively low, clock locking performed at the second receive end cannot succeed, that is, clock locking performed by the second device cannot succeed. When the clock locking performed at the second receive end fails, that is, the first link on which the clock locking fails exists in the at least one first link, the first device determines whether the configuration of the voltage swing of the first link on which the clock locking fails traverses all the preset voltage swing values. If the configuration of the voltage swing of the first link on which the clock locking fails does not traverse all the preset voltage swing values, the first device adjusts the configuration of the voltage swing of the first link on which the clock locking fails, for example, updates the configuration of the voltage swing of the first link on which the clock locking fails to a value that has not been configured for the voltage swing. Then, the first device notifies, through the auxiliary link, the second device that the configuration update of the voltage swing of the first link on which the clock locking fails is completed. In this way, the second device may perform clock recovery and locking again. Therefore, when the clock locking performed by the second device cannot succeed, the voltage swing of the first link is adjusted, so that the clock locking performed by the second device succeeds.

In a possible implementation, the first equalization calculation result includes an equalization calculation result of each of the at least one first link, and when a first link on which equalization calculation fails exists in the at least one first link, the first equalization calculation result is that the equalization calculation fails.

In this embodiment of this application, the first equalization calculation result received by the first device from the second device includes the equalization calculation result of each of the at least one first link. A success of the equalization calculation on the at least one first link requires that equalization calculation on each of the at least one first link succeeds. The equalization calculation on the at least one first link fails provided that the first link on which the equalization calculation fails exists in the at least one first link. Therefore, the second device sends the equalization calculation result of each of the at least one first link to the first device by using the first equalization calculation result. This helps the first device determine the equalization calculation result of the at least one first link.

In a possible implementation, the first equalization calculation result further includes a clock loss-of-lock status of each of the at least one first link, and the method further includes: determining whether a first link on which a clock loss-of-lock occurs exists in the at least one first link; and if the first link on which the clock loss-of-lock occurs exists in the at least one first link, sending the first rate to the second device through the auxiliary link, and sending the first clock recovery sequence to the second receive end through the first transmit end.

In this embodiment of this application, an equalization calculation failure may be caused by a clock loss-of-lock of a link during equalization calculation. Therefore, when the equalization calculation performed by the second device fails, the first equalization calculation result received by the first device from the second device further includes the clock loss-of-lock status of each of the at least one first link. If the first link on which the clock loss-of-lock occurs exists in the at least one first link, it indicates that the equalization calculation failure of the second device may be caused by the link loss-of-lock of the first link. In this case, the first device may re-send the first rate to the second device through the auxiliary link, and re-send the first clock recovery sequence to the second receive end through the first transmit end. After re-receiving the first rate and the first clock recovery sequence, the second device re-performs link training. This helps the link training succeed.

In a possible implementation, the parameter of the first transmit end includes a transmit-end feedforward equalization (Feed forward equalization, FFE) parameter of each first link, and if no first link on which a clock loss-of-lock occurs exists in the at least one first link, the method further includes: determining whether a configuration of a transmit-end feedforward equalization parameter of the first link on which the equalization calculation fails in the at least one first link traverses all preset transmit-end feedforward equalization values; if the configuration of the transmit-end feedforward equalization parameter of the first link on which the equalization calculation fails in the at least one first link does not traverse all the preset transmit-end feedforward equalization values, updating the configuration of the transmit-end feedforward equalization parameter of the first link on which the equalization calculation fails from a third value to a fourth value, where all the preset transmit-end feedforward equalization values include the third value and the fourth value, and the fourth value is a value that has not been configured for the transmit-end feedforward equalization parameter of the first link on which the equalization calculation fails; and sending, to the second device through the auxiliary link, information indicating that configuration update of the transmit-end feedforward equalization parameter of the first link on which the equalization calculation fails is completed, where the first training parameter value includes a transmit-end feedforward equalization training value, and the third value is the transmit-end feedforward equalization training value when the configuration of the transmit-end feedforward equalization parameter of the first link on which the equalization calculation fails is updated for the first time.

In this embodiment of this application, the parameter of the first transmit end includes the transmit-end feedforward equalization parameter of each first link. A configuration of a value of the transmit-end feedforward equalization parameter affects link equalization, that is, affects whether the equalization calculation can succeed. When equalization calculation performed at the second receive end fails, that is, the first link on which the equalization calculation fails exists in the at least one first link, the first device determines whether the configuration of the transmit-end feedforward equalization parameter of the first link on which the equalization calculation fails traverses all the preset transmit-end feedforward equalization values. If the configuration of the transmit-end feedforward equalization parameter of the first link on which the equalization calculation fails in the at least one first link does not traverse all the preset transmit-end feedforward equalization values, the first device adjusts the configuration of the transmit-end feedforward equalization parameter of the first link on which the equalization calculation fails, for example, updates the configuration of the transmit-end feedforward equalization parameter of the first link on which the equalization calculation fails to a value that has not been configured for the transmit-end feedforward equalization parameter. Then, the first device notifies, through the auxiliary link, the second device that the configuration update of the transmit-end feedforward equalization parameter of the first link on which the equalization calculation fails is completed. In this way, the second device may perform equalization calculation again. Therefore, when the equalization calculation performed by the second device cannot succeed, the transmit-end feedforward equalization parameter of the first link is adjusted, so that the equalization calculation performed by the second device succeeds. This helps implement a success of the equalization calculation in the link training.

In a possible implementation, the first link check result includes a link check result of each of the at least one first link, and when a first link on which link check fails exists in the at least one first link, the first link check result is that the link check fails; or when no first link on which link check fails exists in the at least one first link, the first link check result is that the link check succeeds, and the link training on the at least one first link succeeds.

In this embodiment of this application, the first link check result received by the first device from the second device includes the link check result of each of the at least one first link. A success of the link check on the at least one first link requires that link check on each of the at least one first link succeeds. The link check on the at least one first link fails provided that the first link on which the link check fails exists in the at least one first link. Therefore, the second device sends the link check result of each of the at least one first link to the first device by using the first link check result. This helps the first device determine the link check result of the at least one first link.

In a possible implementation, the cable stores cable information of the cable, the first device stores device information of the first device, the second device stores device information of the second device, and the method further includes: obtaining the device information of the first device, obtaining the cable information of the cable from the cable, and obtaining the device information of the second device from the second device through the auxiliary link; determining the first rate based on the device information of the first device, the cable information of the cable, and the device information of the second device; and determining the first training parameter value based on the first rate.

In this embodiment of this application, the cable stores the cable information of the cable, and the cable information includes information such as cable capability information, vendor information, an identification code of the cable, insertion loss information, and length information. The first device stores the device information of the first device, and the second device stores the device information of the second device. The device information includes information such as device capability information, a device name, a serial number, production time, and port information of a port in the device. The first device obtains the device information of the first device stored in the first device, obtains the cable information of the cable from the cable, and obtains the device information of the second device from the second device through the auxiliary link. Because the cable information may represent a cable capability, and the device information may represent a device capability, the first device may determine a training rate based on the device information of the first device, the cable information of the cable, and the device information of the second device, and then determine, based on the training rate, the first training parameter value that needs to be configured at the first transmit end. For example, the first rate is determined based on the capability information of the first device, the capability information of the second device, and the capability information of the cable, and then the first training parameter value is determined based on the first rate and the insertion loss information in the cable information. In this way, training does not need to be started under a condition that a rate is the lowest and the parameter of the first transmit end is set to an initial value, but training may be started under a condition that a rate is the determined rate and the parameter of the first transmit end is set to the determined first training parameter value. This helps implement training at a relatively high rate and reduce training time.

In a possible implementation, the method further includes: storing at least one of the following information: the first rate, the cable information of the cable, the device information of the second device, a forward/reverse insertion status of the cable, or a configured value of the parameter of the first transmit end that is determined after the link training on the at least one first link succeeds.

In this embodiment of this application, after the link training succeeds, the first device stores at least one of the training rate, the cable information of the cable (including the identification code of the cable), the device information of the second device (including port information of the second receive end), the forward/reverse insertion status of the cable, and the configured value of the parameter of the first transmit end (including a value of the voltage swing and a value of the transmit-end feedforward equalization parameter that are of each of the at least one first link). When the first device and the second device perform training again by using the cable, these parameter values may be directly used, to reduce training time and improve a training rate.

According to a second aspect, an embodiment of this application provides a link training method, applied to a second device. The second device is connected to a first device through a cable, the first device includes a first transmit end and a first receive end, the second device includes a second transmit end and a second receive end, and the cable includes at least one first link from the first transmit end to the second receive end and at least one second link from the second transmit end to the first receive end. The method includes: performing link training on the at least one first link; and when link training is not performed on the at least one second link, or before link training on the at least one second link succeeds, receiving data from the first device through at least one first link on which link training succeeds.

In a possible implementation, the cable further includes an auxiliary link, and the performing link training on the at least one first link includes: receiving a first rate from the first device through the auxiliary link; and performing clock locking, equalization calculation, and link check on the at least one first link at the first rate when a parameter of the second receive end is set to a second training parameter value.

In a possible implementation, the performing clock locking, equalization calculation, and link check on the at least one first link includes: receiving a first clock recovery sequence from the first transmit end through the second receive end; performing clock locking based on the first clock recovery sequence, and sending a first clock locking result to the first device through the auxiliary link, where the first clock locking result is that the clock locking succeeds or the clock locking fails; when the clock locking succeeds, receiving a first equalization sequence from the first transmit end through the second receive end; performing equalization calculation based on the first equalization sequence; and when the equalization calculation fails, sending a first equalization calculation result to the first device through the auxiliary link, where the first equalization calculation result is that the equalization calculation fails; or when the equalization calculation succeeds, performing link check, and sending a first link check result to the first device through the auxiliary link, where the first link check result is that the link check succeeds or the link check fails. For example, when the equalization calculation performed by the second device succeeds, the second device may also choose to send the first equalization calculation result through the auxiliary link. In this case, the first equalization calculation result is that the equalization calculation succeeds.

In a possible implementation, the clock locking fails when a first link on which clock locking fails exists in the at least one first link; or the clock locking succeeds when no first link on which clock locking fails exists in the at least one first link.

In a possible implementation, the equalization calculation fails when a first link that does not meet at least one of the following conditions exists in the at least one first link: character delimitation succeeds, periodic synchronization succeeds, or a bit error rate is less than a bit error rate 1; or the equalization calculation succeeds when no first link that does not meet at least one of the following conditions exists in the at least one first link: character delimitation succeeds, periodic synchronization succeeds, or a bit error rate is less than a bit error rate 1.

In a possible implementation, the parameter configured for the second receive end includes a continuous time linear equalization (Continuous Time Linear Equalization, CTLE) parameter, and before the performing equalization calculation based on the first equalization sequence, the method further includes: determining whether a first link on which a clock loss-of-lock occurs exists in the at least one first link; and if the first link on which the clock loss-of-lock occurs exists in the at least one first link, updating a configuration of a continuous time linear equalization parameter of the first link on which the clock loss-of-lock occurs, and sending, to the first device through the auxiliary link, clock loss-of-lock information of the first link on which the clock loss-of-lock occurs.

In this embodiment of this application, an equalization calculation failure may be caused by a clock loss-of-lock of a link during equalization calculation. Therefore, before performing equalization calculation, the second device determines whether the first link on which the clock loss-of-lock occurs exists in the at least one first link. If the first link on which the clock loss-of-lock occurs exists, the configuration of the continuous time linear equalization parameter of the first link on which the clock loss-of-lock occurs is updated, and then the clock loss-of-lock information of the first link on which the clock loss-of-lock occurs is notified through the auxiliary link. In this case, the first device may re-send the first rate to the second device through the auxiliary link, and re-send the first clock recovery sequence to the second receive end through the first transmit end. After re-receiving the first rate and the first clock recovery sequence, the second device re-performs link training. This helps the link training succeed.

In a possible implementation, the link check fails when a first link that does not meet at least one of the following conditions exists in the at least one first link: a channel is aligned or a bit error rate is less than a bit error rate 2; or when no first link that does not meet at least one of the following conditions exists in the at least one first link: a channel is aligned or a bit error rate is less than a bit error rate 2, the link check succeeds, and the link training on the at least one first link succeeds.

In a possible implementation, the cable stores cable information of the cable, and the method further includes: obtaining the cable information of the cable from the cable; and determining the second training parameter value based on the cable information of the cable and the first rate. For example, the second training parameter value is determined based on the first rate and insertion loss information in the cable information.

In a possible implementation, the method further includes: storing at least one of the following information: the first rate, the cable information of the cable, device information of the first device, a forward/reverse insertion status of the cable, or a configured value of the parameter of the second receive end that is determined after the link training on the at least one first link succeeds, where the device information of the first device is obtained from the first device through the auxiliary link.

In this embodiment of this application, after the link training succeeds, the second device stores at least one of the training rate, the cable information of the cable (including an identification code of the cable), the device information of the first device (including port information of the first transmit end), the forward/reverse insertion status of the cable, and the configured value of the parameter of the second receive end (including a value of a continuous time linear equalization parameter and a value of a decision feedback equalization (Decision Feedback Equalization, DFE) parameter that are of each of the at least one first link). When the first device and the second device perform training again by using the cable, these parameter values may be directly used, to reduce training time and improve a training rate.

It should be noted that, for beneficial effects of the second aspect, refer to the description of the first aspect. Details are not described herein again.

According to a third aspect, an embodiment of this application provides a link training method, applied to a first device. The first device is connected to a second device through a cable, the first device includes a first transmit end, the first device stores device information of the first device, the second device includes a second receive end, the second device stores device information of the second device, the cable includes a main link, and the cable stores cable information of the cable. The method includes: obtaining the device information of the first device, obtaining the cable information of the cable from the cable, and obtaining the device information of the second device from the second device through an auxiliary link; determining a first rate based on the device information of the first device, the cable information of the cable, and the device information of the second device, and determining at least one first link from the first transmit end to the second receive end in the main link; determining a first training parameter value based on the first rate; and when a parameter of the first transmit end is set to the first training parameter value, performing clock locking, equalization calculation, and link check on the at least one first link at the first rate.

In this embodiment of this application, the first device stores the device information of the first device, the second device stores the device information of the second device, and the cable stores the cable information of the cable. Therefore, the first device may obtain the device information of the first device stored in the first device, obtain the cable information of the cable from the cable, obtain the device information of the second device from the second device through the auxiliary link, determine the first rate of link training based on the three pieces of information, and further estimate or obtain through matching, based on the first rate, a group of first training parameter values required for training. The first device can further determine the at least one first link from the first transmit end to the second receive end in the main link. Therefore, when the parameter of the first transmit end is set to the first training parameter value, clock locking, equalization calculation, and link check are performed on the at least one first link at the first rate, to implement link training on the at least one first link. In this way, training does not need to be started under a condition that a rate is the lowest and the parameter of the first transmit end is set to an initial value, but training may be started under a condition that a rate is the determined first rate and the parameter of the first transmit end is set to the determined first training parameter value. This helps implement training at a relatively high rate and reduce training time.

In a possible implementation, the cable further includes the auxiliary link, and the method further includes: sending the first rate to the second device through the auxiliary link, where the first rate is a link training rate of the at least one first link.

In a possible implementation, the cable further includes the auxiliary link, and the performing clock locking, equalization calculation, and link check on the at least one first link includes: sending a first clock recovery sequence to the second receive end through the first transmit end; receiving a first clock locking result from the second device through the auxiliary link, where the first clock locking result is that the clock locking succeeds or the clock locking fails; sending a first equalization sequence to the second receive end through the first transmit end when the first clock locking result is that the clock locking succeeds, where the first equalization sequence is used by the second device to perform equalization calculation; and receiving a first equalization calculation result or a first link check result from the second device through the auxiliary link, where the first equalization calculation result is that the equalization calculation fails, and the first link check result is that the link check succeeds or the link check fails.

In a possible implementation, the first clock locking result includes a clock locking result of each of the at least one first link, and when a first link on which clock locking fails exists in the at least one first link, the first clock locking result is that the clock locking fails; or when no first link on which clock locking fails exists in the at least one first link, the first clock locking result is that the clock locking succeeds.

In a possible implementation, the parameter of the first transmit end includes a voltage swing of each first link, and the method further includes: determining whether a configuration of a voltage swing of the first link on which the clock locking fails in the at least one first link traverses all preset voltage swing values; if the configuration of the voltage swing of the first link on which the clock locking fails in the at least one first link does not traverse all the preset voltage swing values, updating the configuration of the voltage swing of the first link on which the clock locking fails from a first value to a second value, where all the preset voltage swing values include the first value and the second value, and the second value is a value that has not been configured for the voltage swing of the first link on which the clock locking fails; and sending, to the second device through the auxiliary link, information indicating that configuration update of the voltage swing of the first link on which the clock locking fails is completed, where the first training parameter value includes a voltage swing training value, and the first value is the voltage swing training value when the configuration of the voltage swing of the first link on which the clock locking fails is updated for the first time.

In a possible implementation, the first equalization calculation result includes an equalization calculation result of each of the at least one first link, and when a first link on which equalization calculation fails exists in the at least one first link, the first equalization calculation result is that the equalization calculation fails.

In a possible implementation, the first equalization calculation result further includes a clock loss-of-lock status of each of the at least one first link, and the method further includes: determining whether a first link on which a clock loss-of-lock occurs exists in the at least one first link; and if the first link on which the clock loss-of-lock occurs exists in the at least one first link, sending the first rate to the second device through the auxiliary link, and sending the first clock recovery sequence to the second receive end through the first transmit end.

In a possible implementation, the parameter of the first transmit end includes a transmit-end feedforward equalization parameter of each first link, and if no first link on which a clock loss-of-lock occurs exists in the at least one first link, the method further includes: determining whether a configuration of a transmit-end feedforward equalization parameter of the first link on which the equalization calculation fails in the at least one first link traverses all preset transmit-end feedforward equalization values; if the configuration of the transmit-end feedforward equalization parameter of the first link on which the equalization calculation fails in the at least one first link does not traverse all the preset transmit-end feedforward equalization values, updating the configuration of the transmit-end feedforward equalization parameter of the first link on which the equalization calculation fails from a third value to a fourth value, where all the preset transmit-end feedforward equalization values include the third value and the fourth value, and the fourth value is a value that has not been configured for the transmit-end feedforward equalization parameter of the first link on which the equalization calculation fails; and sending, to the second device through the auxiliary link, information indicating that configuration update of the transmit-end feedforward equalization parameter of the first link on which the equalization calculation fails is completed, where the first training parameter value includes a transmit-end feedforward equalization training value, and the third value is the transmit-end feedforward equalization training value when the configuration of the transmit-end feedforward equalization parameter of the first link on which the equalization calculation fails is updated for the first time.

In a possible implementation, the first link check result includes a link check result of each of the at least one first link, and when a first link on which link check fails exists in the at least one first link, the first link check result is that the link check fails; or when no first link on which link check fails exists in the at least one first link, the first link check result is that the link check succeeds, and the link training on the at least one first link succeeds.

In a possible implementation, the method further includes: storing at least one of the following information: the first rate, the cable information of the cable, the device information of the second device, a forward/reverse insertion status of the cable, or a configured value of the parameter of the first transmit end that is determined after the link training on the at least one first link succeeds.

It should be noted that, for beneficial effects of the third aspect, refer to the description of the first aspect. Details are not described herein again.

According to a fourth aspect, an embodiment of this application provides a link training method, applied to a second device. The second device is connected to a first device through a cable, the first device includes a first transmit end, the second device includes a second receive end, the cable includes a main link and an auxiliary link, and the cable stores cable information of the cable. The method includes: obtaining the cable information of the cable from the cable; receiving a first rate from the first device through the auxiliary link; determining a second training parameter value based on the cable information of the cable and the first rate; and when a parameter of the second receive end is set to the second training parameter value, performing clock locking, equalization calculation, and link check on at least one first link at the first rate, where the at least one first link is a link from the first transmit end to the second receive end, and the at least one first link is determined by the first device in the main link.

In a possible implementation, the performing clock locking, equalization calculation, and link check on at least one first link includes: receiving a first clock recovery sequence from the first transmit end through the second receive end; performing clock locking based on the first clock recovery sequence, and sending a first clock locking result to the first device through the auxiliary link, where the first clock locking result is that the clock locking succeeds or the clock locking fails; when the clock locking succeeds, receiving a first equalization sequence from the first transmit end through the second receive end; performing equalization calculation based on the first equalization sequence; and when the equalization calculation fails, sending a first equalization calculation result to the first device through the auxiliary link, where the first equalization calculation result is that the equalization calculation fails; or when the equalization calculation succeeds, performing link check, and sending a first link check result to the first device through the auxiliary link, where the first link check result is that the link check succeeds or the link check fails.

In a possible implementation, the clock locking fails when a first link on which clock locking fails exists in the at least one first link; or the clock locking succeeds when no first link on which clock locking fails exists in the at least one first link.

In a possible implementation, the equalization calculation fails when a first link that does not meet at least one of the following conditions exists in the at least one first link: character delimitation succeeds, periodic synchronization succeeds, or a bit error rate is less than a bit error rate 1; or the equalization calculation succeeds when no first link that does not meet at least one of the following conditions exists in the at least one first link: character delimitation succeeds, periodic synchronization succeeds, or a bit error rate is less than a bit error rate 1.

In a possible implementation, the parameter configured for the second receive end includes a continuous time linear equalization parameter, and before the performing equalization calculation based on the first equalization sequence, the method further includes: determining whether a first link on which a clock loss-of-lock occurs exists in the at least one first link; and if the first link on which the clock loss-of-lock occurs exists in the at least one first link, updating a configuration of a continuous time linear equalization parameter of the first link on which the clock loss-of-lock occurs, and sending, to the first device through the auxiliary link, clock loss-of-lock information of the first link on which the clock loss-of-lock occurs.

In this embodiment of this application, an equalization calculation failure may be caused by a clock loss-of-lock of a link during equalization calculation. Therefore, before performing equalization calculation, the second device determines whether the first link on which the clock loss-of-lock occurs exists in the at least one first link. If the first link on which the clock loss-of-lock occurs exists, the configuration of the continuous time linear equalization parameter of the first link on which the clock loss-of-lock occurs is updated, and then the clock loss-of-lock information of the first link on which the clock loss-of-lock occurs is notified through the auxiliary link. In this case, the first device may re-send the first rate to the second device through the auxiliary link, and re-send the first clock recovery sequence to the second receive end through the first transmit end. After re-receiving the first rate and the first clock recovery sequence, the second device re-performs link training. This helps the link training succeed.

In a possible implementation, the link check fails when a first link that does not meet at least one of the following conditions exists in the at least one first link: a channel is aligned or a bit error rate is less than a bit error rate 2; or when no first link that does not meet at least one of the following conditions exists in the at least one first link: a channel is aligned or a bit error rate is less than a bit error rate 2, the link check succeeds, and the link training on the at least one first link succeeds.

In a possible implementation, the method further includes: storing at least one of the following information: the first rate, the cable information of the cable, device information of the first device, a forward/reverse insertion status of the cable, or a configured value of the parameter of the second receive end that is determined after the link training on the at least one first link succeeds, where the device information of the first device is obtained from the first device through the auxiliary link.

In this embodiment of this application, after the link training succeeds, the second device stores at least one of the training rate, the cable information of the cable (including an identification code of the cable), the device information of the first device (including port information of the first transmit end), the forward/reverse insertion status of the cable, and the configured value of the parameter of the second receive end (including a value of a continuous time linear equalization parameter and a value of a decision feedback equalization parameter that are of each of the at least one first link). When the first device and the second device perform training again by using the cable, these parameter values may be directly used, to reduce training time and improve a training rate.

It should be noted that, for beneficial effects of the fourth aspect, refer to the description of the first aspect or the third aspect. Details are not described herein again.

According to a fifth aspect, an embodiment of this application provides a link training apparatus, used in a first device. The first device is connected to a second device through a cable, the cable includes at least one first link and at least one second link, and the link training apparatus includes: a training unit, configured to perform link training on the at least one first link, where the at least one first link is a link from the first device to the second device; and a sending unit, configured to: when link training is not performed on the at least one second link, or before link training on the at least one second link succeeds, send data to the second device through at least one first link on which link training succeeds, where the at least one second link is a link from the second device to the first device.

In a possible implementation, the first device includes a first transmit end, the second device includes a second receive end, the at least one first link is a link from the first transmit end to the second receive end, and the cable further includes an auxiliary link. When performing link training on the at least one first link, the training unit is specifically configured to: send a first rate to the second device through the auxiliary link, where the first rate is a link training rate of the at least one first link; and perform clock locking, equalization calculation, and link check on the at least one first link at the first rate when a parameter of the first transmit end is set to a first training parameter value.

In a possible implementation, when performing clock locking, equalization calculation, and link check on the at least one first link, the training unit is specifically configured to: send a first clock recovery sequence to the second receive end through the first transmit end; receive a first clock locking result from the second device through the auxiliary link, where the first clock locking result is that the clock locking succeeds or the clock locking fails; send a first equalization sequence to the second receive end through the first transmit end when the first clock locking result is that the clock locking succeeds, where the first equalization sequence is used by the second device to perform equalization calculation; and receive a first equalization calculation result or a first link check result from the second device through the auxiliary link, where the first equalization calculation result is that the equalization calculation fails, and the first link check result is that the link check succeeds or the link check fails.

In a possible implementation, the first clock locking result includes a clock locking result of each of the at least one first link, and when a first link on which clock locking fails exists in the at least one first link, the first clock locking result is that the clock locking fails; or when no first link on which clock locking fails exists in the at least one first link, the first clock locking result is that the clock locking succeeds.

In a possible implementation, the parameter of the first transmit end includes a voltage swing of each first link, and the training unit is further configured to: determine whether a configuration of a voltage swing of the first link on which the clock locking fails in the at least one first link traverses all preset voltage swing values; if the configuration of the voltage swing of the first link on which the clock locking fails in the at least one first link does not traverse all the preset voltage swing values, update the configuration of the voltage swing of the first link on which the clock locking fails from a first value to a second value, where all the preset voltage swing values include the first value and the second value, and the second value is a value that has not been configured for the voltage swing of the first link on which the clock locking fails; and send, to the second device through the auxiliary link, information indicating that configuration update of the voltage swing of the first link on which the clock locking fails is completed, where the first training parameter value includes a voltage swing training value, and the first value is the voltage swing training value when the configuration of the voltage swing of the first link on which the clock locking fails is updated for the first time.

In a possible implementation, the first equalization calculation result includes an equalization calculation result of each of the at least one first link, and when a first link on which equalization calculation fails exists in the at least one first link, the first equalization calculation result is that the equalization calculation fails.

In a possible implementation, the first equalization calculation result further includes a clock loss-of-lock status of each of the at least one first link, and the training unit is further configured to: determine whether a first link on which a clock loss-of-lock occurs exists in the at least one first link; and if the first link on which the clock loss-of-lock occurs exists in the at least one first link, send the first rate to the second device through the auxiliary link, and send the first clock recovery sequence to the second receive end through the first transmit end.

In a possible implementation, the parameter of the first transmit end includes a transmit-end feedforward equalization parameter of each first link, and if no first link on which a clock loss-of-lock occurs exists in the at least one first link, the training unit is further configured to: determine whether a configuration of a transmit-end feedforward equalization parameter of the first link on which the equalization calculation fails in the at least one first link traverses all preset transmit-end feedforward equalization values; if the configuration of the transmit-end feedforward equalization parameter of the first link on which the equalization calculation fails in the at least one first link does not traverse all the preset transmit-end feedforward equalization values, update the configuration of the transmit-end feedforward equalization parameter of the first link on which the equalization calculation fails from a third value to a fourth value, where all the preset transmit-end feedforward equalization values include the third value and the fourth value, and the fourth value is a value that has not been configured for the transmit-end feedforward equalization parameter of the first link on which the equalization calculation fails; and send, to the second device through the auxiliary link, information indicating that configuration update of the transmit-end feedforward equalization parameter of the first link on which the equalization calculation fails is completed, where the first training parameter value includes a transmit-end feedforward equalization training value, and the third value is the transmit-end feedforward equalization training value when the configuration of the transmit-end feedforward equalization parameter of the first link on which the equalization calculation fails is updated for the first time.

In a possible implementation, the first link check result includes a link check result of each of the at least one first link, and when a first link on which link check fails exists in the at least one first link, the first link check result is that the link check fails; or when no first link on which link check fails exists in the at least one first link, the first link check result is that the link check succeeds, and the link training on the at least one first link succeeds.

In a possible implementation, the cable stores cable information of the cable, the first device stores device information of the first device, the second device stores device information of the second device, and the training unit is further configured to: obtain the device information of the first device, obtain the cable information of the cable from the cable, and obtain the device information of the second device from the second device through the auxiliary link; determine the first rate based on the device information of the first device, the cable information of the cable, and the device information of the second device; and determine the first training parameter value based on the first rate.

In a possible implementation, the training unit is further configured to: store at least one of the following information: the first rate, the cable information of the cable, the device information of the second device, a forward/reverse insertion status of the cable, or a configured value of the parameter of the first transmit end that is determined after the link training on the at least one first link succeeds.

It should be noted that, for beneficial effects of the fifth aspect, refer to the description of the first aspect. Details are not described herein again.

According to a sixth aspect, an embodiment of this application provides a link training apparatus, used in a second device. The second device is connected to a first device through a cable, the cable includes at least one first link and at least one second link, and the link training apparatus includes: a training unit, configured to perform link training on the at least one first link, where the at least one first link is a link from the first device to the second device; and a receiving unit, configured to: when link training is not performed on the at least one second link, or before link training on the at least one second link succeeds, receive data from the first device through at least one first link on which link training succeeds, where the at least one second link is a link from the second device to the first device.

In a possible implementation, the first device includes a first transmit end, the second device includes a second receive end, the at least one first link is a link from the first transmit end to the second receive end, and the cable further includes an auxiliary link. When performing link training on the at least one first link, the training unit is specifically configured to: receive a first rate from the first device through the auxiliary link; and perform clock locking, equalization calculation, and link check on the at least one first link at the first rate when a parameter of the second receive end is set to a second training parameter value.

In a possible implementation, when performing clock locking, equalization calculation, and link check on the at least one first link, the training unit is specifically configured to: receive a first clock recovery sequence from the first transmit end through the second receive end; perform clock locking based on the first clock recovery sequence, and send a first clock locking result to the first device through the auxiliary link, where the first clock locking result is that the clock locking succeeds or the clock locking fails; when the clock locking succeeds, receive a first equalization sequence from the first transmit end through the second receive end; perform equalization calculation based on the first equalization sequence; and when the equalization calculation fails, send a first equalization calculation result to the first device through the auxiliary link, where the first equalization calculation result is that the equalization calculation fails; or when the equalization calculation succeeds, perform link check, and send a first link check result to the first device through the auxiliary link, where the first link check result is that the link check succeeds or the link check fails.

In a possible implementation, the clock locking fails when a first link on which clock locking fails exists in the at least one first link; or the clock locking succeeds when no first link on which clock locking fails exists in the at least one first link.

In a possible implementation, the equalization calculation fails when a first link that does not meet at least one of the following conditions exists in the at least one first link: character delimitation succeeds, periodic synchronization succeeds, or a bit error rate is less than a bit error rate 1; or the equalization calculation succeeds when no first link that does not meet at least one of the following conditions exists in the at least one first link: character delimitation succeeds, periodic synchronization succeeds, or a bit error rate is less than a bit error rate 1.

In a possible implementation, the parameter configured for the second receive end includes a continuous time linear equalization parameter, and before performing equalization calculation based on the first equalization sequence, the training unit is further configured to: determine whether a first link on which a clock loss-of-lock occurs exists in the at least one first link; and if the first link on which the clock loss-of-lock occurs exists in the at least one first link, update a configuration of a continuous time linear equalization parameter of the first link on which the clock loss-of-lock occurs, and send, to the first device through the auxiliary link, clock loss-of-lock information of the first link on which the clock loss-of-lock occurs.

In a possible implementation, the link check fails when a first link that does not meet at least one of the following conditions exists in the at least one first link: a channel is aligned or a bit error rate is less than a bit error rate 2; or when no first link that does not meet at least one of the following conditions exists in the at least one first link: a channel is aligned or a bit error rate is less than a bit error rate 2, the link check succeeds, and the link training on the at least one first link succeeds.

In a possible implementation, the cable stores cable information of the cable, and the training unit is further configured to: obtain the cable information of the cable from the cable; and determine the second training parameter value based on the cable information of the cable and the first rate.

In a possible implementation, the training unit is further configured to: store at least one of the following information: the first rate, the cable information of the cable, device information of the first device, a forward/reverse insertion status of the cable, or a configured value of the parameter of the second receive end that is determined after the link training on the at least one first link succeeds, where the device information of the first device is obtained from the first device through the auxiliary link.

It should be noted that, for beneficial effects of the sixth aspect, refer to the description of the first aspect. Details are not described herein again.

According to a seventh aspect, an embodiment of this application provides a link training apparatus. The link training apparatus includes a processor, and a first transmit end and a first receive end that are coupled to the processor. The link training apparatus is connected to a second device through a cable, the second device includes a second transmit end and a second receive end, and the cable includes at least one first link from the first transmit end to the second receive end and at least one second link from the second transmit end to the first receive end. The processor is configured to: perform link training on the at least one first link; and when link training is not performed on the at least one second link, or before link training on the at least one second link succeeds, send data to the second device through at least one first link on which link training succeeds.

In a possible implementation, the cable further includes an auxiliary link. When performing link training on the at least one first link, the processor is specifically configured to: send a first rate to the second device through the auxiliary link, where the first rate is a link training rate of the at least one first link; and perform clock locking, equalization calculation, and link check on the at least one first link at the first rate when a parameter of the first transmit end is set to a first training parameter value.

In a possible implementation, when performing clock locking, equalization calculation, and link check on the at least one first link, the processor is specifically configured to: send a first clock recovery sequence to the second receive end through the first transmit end; receive a first clock locking result from the second device through the auxiliary link, where the first clock locking result is that the clock locking succeeds or the clock locking fails; send a first equalization sequence to the second receive end through the first transmit end when the first clock locking result is that the clock locking succeeds, where the first equalization sequence is used by the second device to perform equalization calculation; and receive a first equalization calculation result or a first link check result from the second device through the auxiliary link, where the first equalization calculation result is that the equalization calculation fails, and the first link check result is that the link check succeeds or the link check fails.

In a possible implementation, the first clock locking result includes a clock locking result of each of the at least one first link, and when a first link on which clock locking fails exists in the at least one first link, the first clock locking result is that the clock locking fails; or when no first link on which clock locking fails exists in the at least one first link, the first clock locking result is that the clock locking succeeds.

In a possible implementation, the parameter of the first transmit end includes a voltage swing of each first link, and the processor is further configured to: determine whether a configuration of a voltage swing of the first link on which the clock locking fails in the at least one first link traverses all preset voltage swing values; if the configuration of the voltage swing of the first link on which the clock locking fails in the at least one first link does not traverse all the preset voltage swing values, update the configuration of the voltage swing of the first link on which the clock locking fails from a first value to a second value, where all the preset voltage swing values include the first value and the second value, and the second value is a value that has not been configured for the voltage swing of the first link on which the clock locking fails; and send, to the second device through the auxiliary link, information indicating that configuration update of the voltage swing of the first link on which the clock locking fails is completed, where the first training parameter value includes a voltage swing training value, and the first value is the voltage swing training value when the configuration of the voltage swing of the first link on which the clock locking fails is updated for the first time.

In a possible implementation, the first equalization calculation result includes an equalization calculation result of each of the at least one first link, and when a first link on which equalization calculation fails exists in the at least one first link, the first equalization calculation result is that the equalization calculation fails.

In a possible implementation, the first equalization calculation result further includes a clock loss-of-lock status of each of the at least one first link, and the processor is further configured to: determine whether a first link on which a clock loss-of-lock occurs exists in the at least one first link; and if the first link on which the clock loss-of-lock occurs exists in the at least one first link, send the first rate to the second device through the auxiliary link, and send the first clock recovery sequence to the second receive end through the first transmit end.

In a possible implementation, the parameter of the first transmit end includes a transmit-end feedforward equalization parameter of each first link, and if no first link on which a clock loss-of-lock occurs exists in the at least one first link, the processor is further configured to: determine whether a configuration of a transmit-end feedforward equalization parameter of the first link on which the equalization calculation fails in the at least one first link traverses all preset transmit-end feedforward equalization values; if the configuration of the transmit-end feedforward equalization parameter of the first link on which the equalization calculation fails in the at least one first link does not traverse all the preset transmit-end feedforward equalization values, update the configuration of the transmit-end feedforward equalization parameter of the first link on which the equalization calculation fails from a third value to a fourth value, where all the preset transmit-end feedforward equalization values include the third value and the fourth value, and the fourth value is a value that has not been configured for the transmit-end feedforward equalization parameter of the first link on which the equalization calculation fails; and send, to the second device through the auxiliary link, information indicating that configuration update of the transmit-end feedforward equalization parameter of the first link on which the equalization calculation fails is completed, where the first training parameter value includes a transmit-end feedforward equalization training value, and the third value is the transmit-end feedforward equalization training value when the configuration of the transmit-end feedforward equalization parameter of the first link on which the equalization calculation fails is updated for the first time.

In a possible implementation, the first link check result includes a link check result of each of the at least one first link, and when a first link on which link check fails exists in the at least one first link, the first link check result is that the link check fails; or when no first link on which link check fails exists in the at least one first link, the first link check result is that the link check succeeds, and the link training on the at least one first link succeeds.

In a possible implementation, the cable stores cable information of the cable, the first device stores device information of the first device, the second device stores device information of the second device, and the processor is further configured to: obtain the device information of the first device, obtain the cable information of the cable from the cable, and obtain the device information of the second device from the second device through the auxiliary link; determine the first rate based on the device information of the first device, the cable information of the cable, and the device information of the second device; and determine the first training parameter value based on the first rate.

In a possible implementation, the processor is further configured to: store at least one of the following information: the first rate, the cable information of the cable, the device information of the second device, a forward/reverse insertion status of the cable, or a configured value of the parameter of the first transmit end that is determined after the link training on the at least one first link succeeds.

It should be noted that, for beneficial effects of the fifth aspect, refer to the description of the first aspect. Details are not described herein again.

According to an eighth aspect, an embodiment of this application provides a link training apparatus. The link training apparatus includes a processor, and a second transmit end and a second receive end that are coupled to the processor. The link training apparatus is connected to a first device through a cable, the first device includes a first transmit end and a first receive end, and the cable includes at least one first link from the first transmit end to the second receive end and at least one second link from the second transmit end to the first receive end. The processor is configured to: perform link training on the at least one first link; and when link training is not performed on the at least one second link, or before link training on the at least one second link succeeds, receive data from the first device through at least one first link on which link training succeeds.

In a possible implementation, the cable further includes an auxiliary link. When performing link training on the at least one first link, the processor is specifically configured to: receive a first rate from the first device through the auxiliary link; and perform clock locking, equalization calculation, and link check on the at least one first link at the first rate when a parameter of the second receive end is set to a second training parameter value.

In a possible implementation, when performing clock locking, equalization calculation, and link check on the at least one first link, the processor is specifically configured to: receive a first clock recovery sequence from the first transmit end through the second receive end; perform clock locking based on the first clock recovery sequence, and send a first clock locking result to the first device through the auxiliary link, where the first clock locking result is that the clock locking succeeds or the clock locking fails; when the clock locking succeeds, receive a first equalization sequence from the first transmit end through the second receive end; perform equalization calculation based on the first equalization sequence; and when the equalization calculation fails, send a first equalization calculation result to the first device through the auxiliary link, where the first equalization calculation result is that the equalization calculation fails; or when the equalization calculation succeeds, perform link check, and send a first link check result to the first device through the auxiliary link, where the first link check result is that the link check succeeds or the link check fails.

In a possible implementation, the clock locking fails when a first link on which clock locking fails exists in the at least one first link; or the clock locking succeeds when no first link on which clock locking fails exists in the at least one first link.

In a possible implementation, the equalization calculation fails when a first link that does not meet at least one of the following conditions exists in the at least one first link: character delimitation succeeds, periodic synchronization succeeds, or a bit error rate is less than a bit error rate 1; or the equalization calculation succeeds when no first link that does not meet at least one of the following conditions exists in the at least one first link: character delimitation succeeds, periodic synchronization succeeds, or a bit error rate is less than a bit error rate 1.

In a possible implementation, the parameter configured for the second receive end includes a continuous time linear equalization parameter, and before performing equalization calculation based on the first equalization sequence, the processor is further configured to: determine whether a first link on which a clock loss-of-lock occurs exists in the at least one first link; and if the first link on which the clock loss-of-lock occurs exists in the at least one first link, update a configuration of a continuous time linear equalization parameter of the first link on which the clock loss-of-lock occurs, and send, to the first device through the auxiliary link, clock loss-of-lock information of the first link on which the clock loss-of-lock occurs.

In a possible implementation, the link check fails when a first link that does not meet at least one of the following conditions exists in the at least one first link: a channel is aligned or a bit error rate is less than a bit error rate 2; or when no first link that does not meet at least one of the following conditions exists in the at least one first link: a channel is aligned or a bit error rate is less than a bit error rate 2, the link check succeeds, and the link training on the at least one first link succeeds.

In a possible implementation, the cable stores cable information of the cable, and the processor is further configured to: obtain the cable information of the cable from the cable; and determine the second training parameter value based on the cable information of the cable and the first rate.

In a possible implementation, the processor is further configured to: store at least one of the following information: the first rate, the cable information of the cable, device information of the first device, a forward/reverse insertion status of the cable, or a configured value of the parameter of the second receive end that is determined after the link training on the at least one first link succeeds, where the device information of the first device is obtained from the first device through the auxiliary link.

It should be noted that, for beneficial effects of the sixth aspect, refer to the description of the first aspect. Details are not described herein again.

According to a ninth aspect, an embodiment of this application provides a first device, including a processor, a memory, a communication interface, and one or more programs. The one or more programs are stored in the memory and configured to be executed by the processor, and the program includes instructions for performing the steps in the method according to any one of the first aspect or the third aspect.

According to a tenth aspect, an embodiment of this application provides a second device, including a processor, a memory, a communication interface, and one or more programs. The one or more programs are stored in the memory and configured to be executed by the processor, and the program includes instructions for performing the steps in the method according to any one of the second aspect or the fourth aspect.

According to an eleventh aspect, an embodiment of this application provides a link training apparatus, including a processor and a transmission interface. The processor is configured to invoke a program stored in a memory, so that the link training apparatus implements the method according to any one of the first aspect to the fourth aspect.

According to a twelfth aspect, an embodiment of this application provides a computer-readable storage medium. The computer-readable storage medium includes a computer program, and when the computer program is run on a computer or a processor, the computer or the processor is enabled to perform the method according to any one of the first aspect to the fourth aspect.

According to a thirteenth aspect, an embodiment of this application provides a computer program product. The computer program product includes a computer program, and when the computer program is run on a computer or a processor, the computer or the processor is enabled to perform the method according to any one of the first aspect to the fourth aspect.

### BRIEF DESCRIPTION OF DRAWINGS

FIG. 1 is a schematic diagram of a state of link training of a high definition multimedia interface according to an embodiment of this application;
FIG. 2A and FIG. 2B are a schematic flowchart of a clock recovery phase during link training of a display port according to an embodiment of this application;
FIG. 3A and FIG. 3B are a schematic flowchart of an equalization phase during link training of a display port according to an embodiment of this application;
FIG. 4 is a schematic diagram of a state of link training of a universal serial bus according to an embodiment of this application;
FIG. 5 is a schematic flowchart of link training of a universal serial bus according to an embodiment of this application;
FIG. 6 is a transition diagram of a link training state (Link Training States, LTS) according to an embodiment of this application;
FIG. 7A to FIG. 7C are a schematic flowchart of link training performed by a transmit end device according to an embodiment of this application;
FIG. 8A to FIG. 8C are a schematic flowchart of link training performed by a receive end device according to an embodiment of this application;
FIG. 9 is a schematic diagram of an architecture of a communication system according to an embodiment of this application;
FIG. 10 is a schematic diagram of an internal connection between interfaces according to an embodiment of this application;
FIG. 11 is a schematic flowchart of a link training method according to an embodiment of this application;
FIG. 12 is a schematic diagram of a structure of a link training apparatus according to an embodiment of this application;
FIG. 13 is a schematic diagram of a structure of another link training apparatus according to an embodiment of this application;
FIG. 14 is a schematic diagram of a structure of an electronic device according to an embodiment of this application; and
FIG. 15 is a schematic diagram of a structure of another electronic device according to an embodiment of this application.

### DESCRIPTION OF EMBODIMENTS

To make the solutions of this application more comprehensible for a person skilled in the art, the following clearly and completely describes the technical solutions in embodiments of this application with reference to the accompanying drawings in embodiments of this application. It is clear that the described embodiments are merely some rather than all of embodiments of this application. Based on embodiments of this application, all other embodiments obtained by a person of ordinary skill in the art without creative efforts fall within the protection scope of this application.

The terms "include", "have", and any other variants thereof in the specification, claims, and accompanying drawings of this application are intended to cover non-exclusive inclusion. For example, a process, method, system, product, or device that includes a series of steps or units is not limited to the listed steps or units, but optionally further includes an unlisted step or unit, or optionally further includes another inherent step or unit for the process, method, product, or device.

It should be understood that, in this application, "at least one (item)" refers to one or more, and "a plurality of" refers to two or more. The term "and/or" describes an association relationship of associated objects, and indicates that three relationships may exist. For example, "A and/or B" may indicate the following three cases: Only A exists, only B exists, and both A and B exist. A and B may be singular or plural. The character "/" generally indicates an "or" relationship between associated objects. "At least one of the following items (pieces)" or a similar expression thereof refers to any combination of these items, including a single item (piece) or any combination of a plurality of items (pieces). For example, at least one of a, b, or c may represent a, b, c, "a and b", "a and c", "b and c", or "a, b, and c", where a, b, and c may be singular or plural.

The "embodiment" mentioned herein means that specific features, structures, or characteristics described with reference to the embodiments may be included in at least one embodiment of this application. Appearance of the phrase at various locations in the specification does not necessarily refer to a same embodiment, or an independent or alternative embodiment mutually exclusive with another embodiment. A person skilled in the art explicitly and implicitly understands that the embodiments described in this specification may be combined with other embodiments.

First, acronyms, term definitions, and term explanations that may be used in this application are provided, to facilitate understanding by a person skilled in the art.
(1) Cable information (CableInfo): includes information such as cable capability information, vendor information, a cable identification code, insertion loss information, and a length. The cable information may represent a capability of a cable.
(2) Insertion loss information: is an insertion loss of a cable at each supported rate.
(3) Device information: includes information that can identify a specific device, for example, device capability information, a device name, a serial number, and production time, and port information of a port in the device. The device information may represent a capability of the device.
(4) Port information: includes information that can identify a specific port of a device, for example, a port number. The port information may represent a capability of the port.

Then, to facilitate understanding of embodiments of this application, a technical problem to be specifically resolved in this application is further analyzed and provided. Currently, there are a plurality of link training scenarios. The following three scenarios are listed herein as examples.

### Scenario 1: HDMI2.1

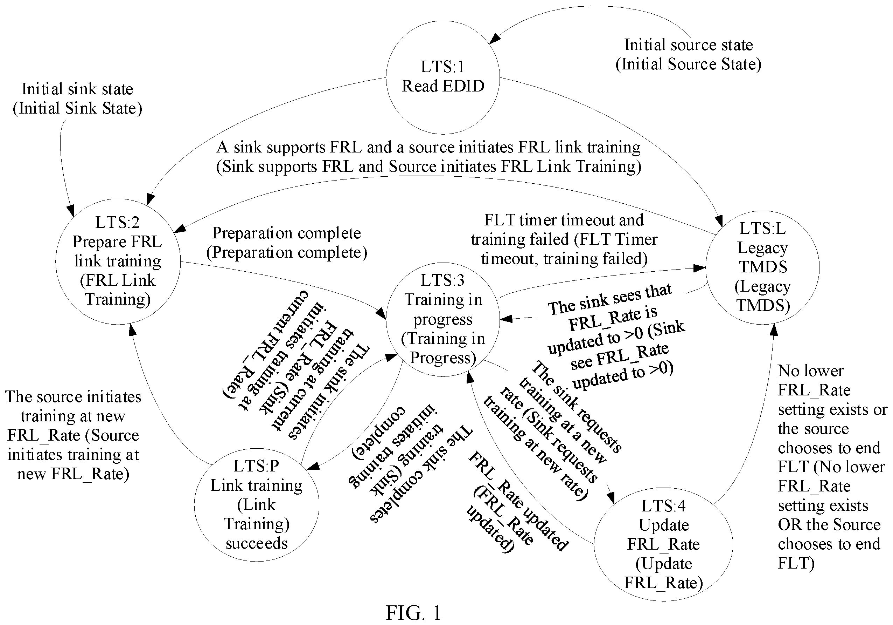

As shown in FIG. 1, training of HDMI 2.1 includes six states in total: LTS:1, LTS:2, LTS:3, LTS:4, LTS:P, and LTS:L. A core state is LTS:3. In the LTS:3 state, an access source device (Source, also referred to as a source) and an access terminal device (Sink, also referred to as a sink) interact with each other, and adjust parameters of the access source device and the access terminal device based on respective states, to achieve equalized matching.

Link training in the HDMI 2.1 scenario has the following disadvantages.
1. Only unidirectional training is supported.
2. Training at a single rate takes a maximum of 200 ms, which is time-consuming. Before each time of training, training-related parameters of a transmit end and a receive end are reset to default values. In a case that a device and a cable are not changed (for example, a case of removal and insertion, or a case of standby wake-up), same time is still required for re-training, and parameters in previous training cannot be referenced to accelerate training.
3. In a training process, for example, in the LTS:3 state or the LTS:P state, only a transmit end can actively query an equalization state from a receive end, and a query interval cannot exceed 2 ms, resulting in high requirements on software and high overheads.
4. In the LTS:3 state, a condition in which a receive end requests a transmit end to adjust transmit-end feedforward equalization (TxFFE) is unclear, and the request may be in a coarse equalization adjustment phase or a fine equalization adjustment phase. As a result, an entire training process is prolonged.

### Scenario 2: DP 1.4

Training of a display port (Display Port, DP) mainly includes two phases: clock recovery (Clock Recovery, CR) and equalization (Equalization, EQ).

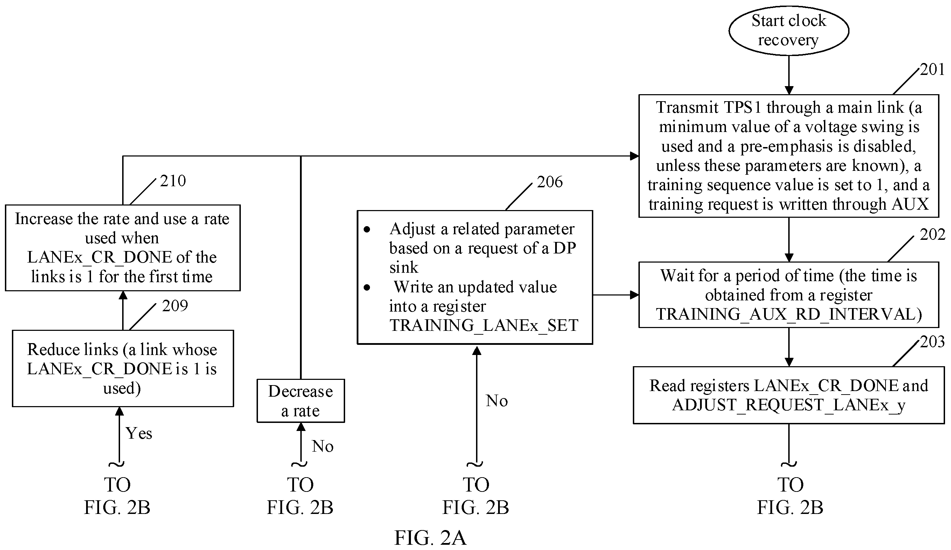

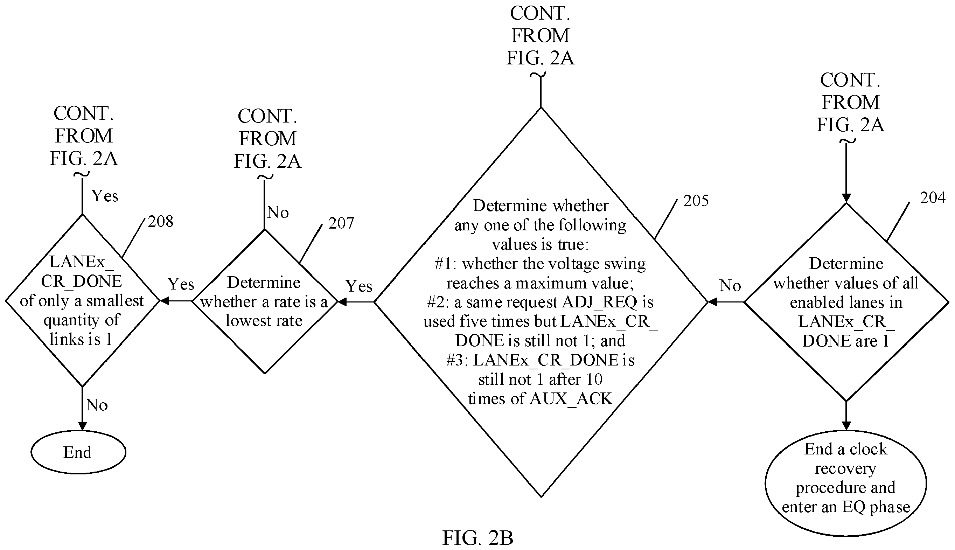

As shown in FIG. 2A and FIG. 2B, in the clock recovery phase, a display port transmit end (DP Tx) selects a maximum quantity of links and a maximum rate to start training, resets all parameters, and sends TPS1. A display port receive end (DP Rx) starts clock recovery. If the clock recovery phase at the receive end fails, the transmit end may adjust a voltage swing (Voltage Swing, Swing for short) and a pre-emphasis (Pre-emphasis). When the receive end cannot recover a clock after all voltage swings and pre-emphases are adjusted, the DP Tx decreases the rate. If the clock cannot be recovered after the rate is decreased to the minimum, the quantity of links is decreased (4 links->2 links->1 link).

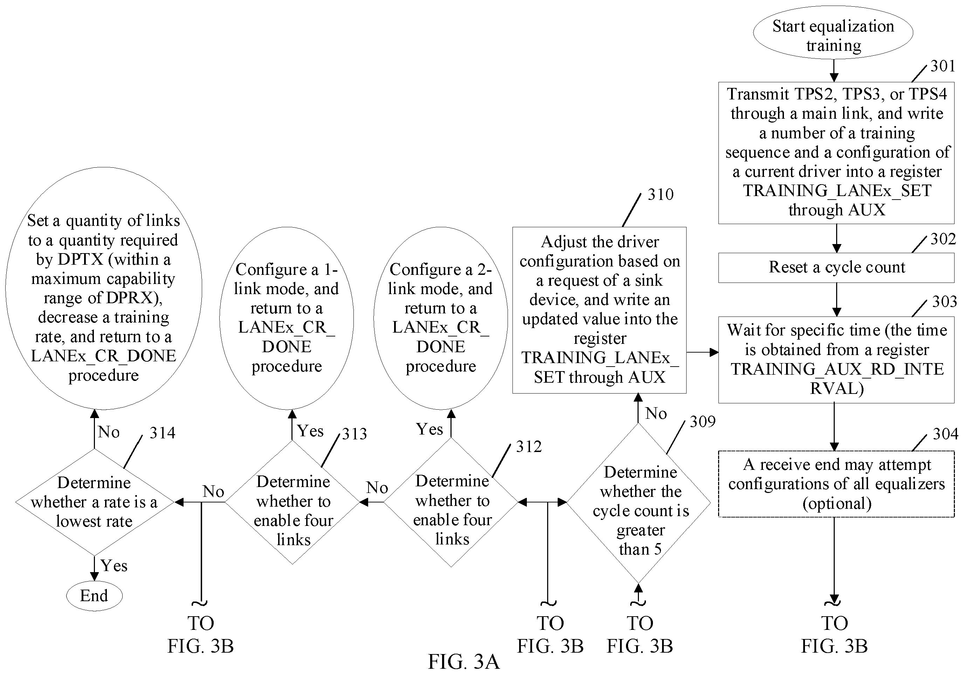

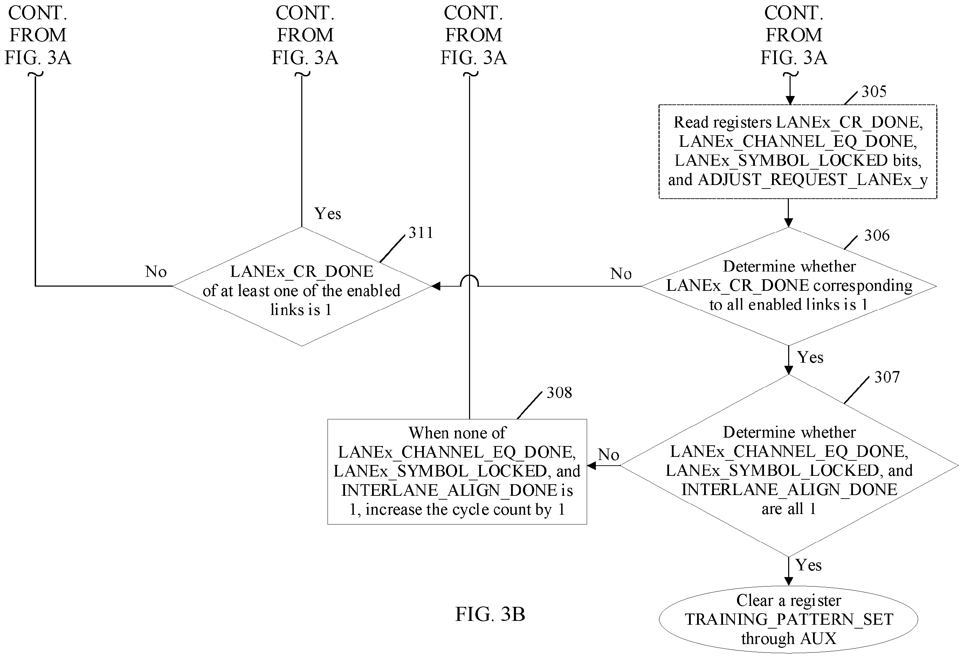

As shown in FIG. 3A and FIG. 3B, in the equalization phase, the DP Rx checks LANEx_CR_Done (Lane x clock recovery done), LANEx_CHANNEL EQ DONE (Lane x equalization calculation done), LANEx_SYMBOL_LOCKED (Lane x symbol locked), and INTERLANE_ALIGN_DONE (inter-lane alignment done) of all links. When all the four conditions are met, training succeeds. If the CR fails, the quantity of links is decreased and the CR phase is re-entered. If the other three conditions are not met, the DP Tx is requested to adjust the voltage swing and the pre-emphasis and cyclic detection is performed (a maximum of five times). If the cyclic detection fails, the rate is successively decreased and the CR phase is re-entered.

Link training in the DP 1.4 scenario has the following disadvantages.
1. Only unidirectional training is supported.
2. In a training process, a transmit end needs to continuously query state information of a receive end, resulting in high software overheads.
3. Before each time of training, training-related parameters of a transmit end and a receive end are reset to default values. In a case that a device and a cable are not changed (for example, a case of removal and insertion, or a case of standby wake-up), same time is still required for re-training, and parameters in previous training cannot be referenced to accelerate training.

### Scenario 3: USB 4.0

USB 4.0 can support bidirectional transmission and training. Training of USB 4.0 includes two states: CLd and training (Training).

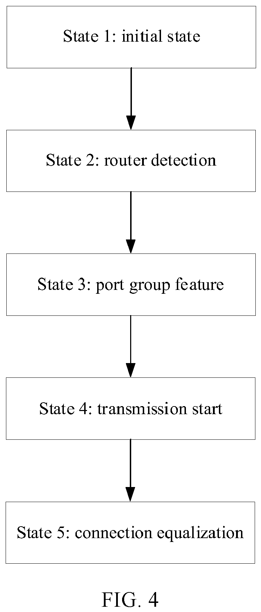

As shown in FIG. 4, the CLd state is as follows: A main function is to initialize each link by using an auxiliary link. A transmit end and a receive end negotiate a group of optimal TxFFE parameters to complete coarse equalization adjustment. There are five sub-states. CLd represents only one state. In this state, both a transmitter and a receiver of a link adapter are in an inactive (active) state.

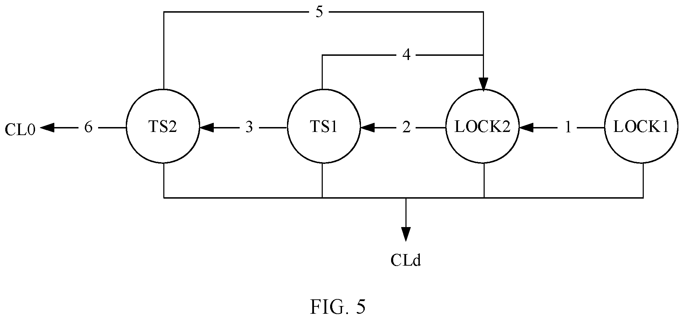

As shown in FIG. 5, the training state is as follows: A main function is to transmit link parameters (including link numbers respectively used during training between a USB host and a storage device, a sent training sequence number, and the like) through two ends of a link and perform symbol synchronization (that is, find a boundary of a sequence). There are four sub-states. A USB protocol supports bidirectional training. However, during bidirectional training, a pair of links (two directions) is trained in cooperation at the same time, training processes in the two directions are coupled, and training rates and link quantities in the two directions need to be completely consistent.

Link training in the USB 4.0 scenario has the following disadvantages.
1. During training, a pair of links in an upstream direction and a downstream direction is trained at the same time. Only when training in the two directions succeeds, it is considered that the pair of links is successfully trained. If training in a direction fails, total training time is prolonged, and even a service cannot be transmitted.
2. In an x2 mode, two pairs of links work at the same time. The two pairs of links are trained independently. The two pairs of links can work in the x2 mode only after the two pairs of links are successfully trained.
3. During training, a downstream rate and an upstream rate need to be completely consistent, and rates and modes of the two pairs of links need to be completely consistent. A constraint is strong and flexibility is low. A USB link can work in several modes such as Gen 1, Gen 2, or Gen 3. Transmission manners are different in different modes.
4. Before each time of training, training-related parameters of a transmit end and a receive end are reset to default values. In a case that a device and a cable are not changed (for example, a case of removal and insertion, or a case of standby wake-up), same time is still required for re-training, and parameters in previous training cannot be referenced to accelerate training.
5. Service transmission can be performed only after bidirectional training succeeds. In audio and video service scenarios, light-on time is later.

Therefore, technical problems to be resolved in this application may include the following.
1. Resolve a problem that training processes in two directions are coupled and rates and link quantities are strongly bound, so that application is more flexible.
2. Resolve a problem that a re-training rate is low and re-training time is long when a hardware environment is not changed.
3. Resolve a problem that service transmission is late during bidirectional training.
4. Resolve a problem that training information exchange imposes high requirements on software and overheads are high.

The following describes in detail technical solutions provided in this application with reference to specific implementations.

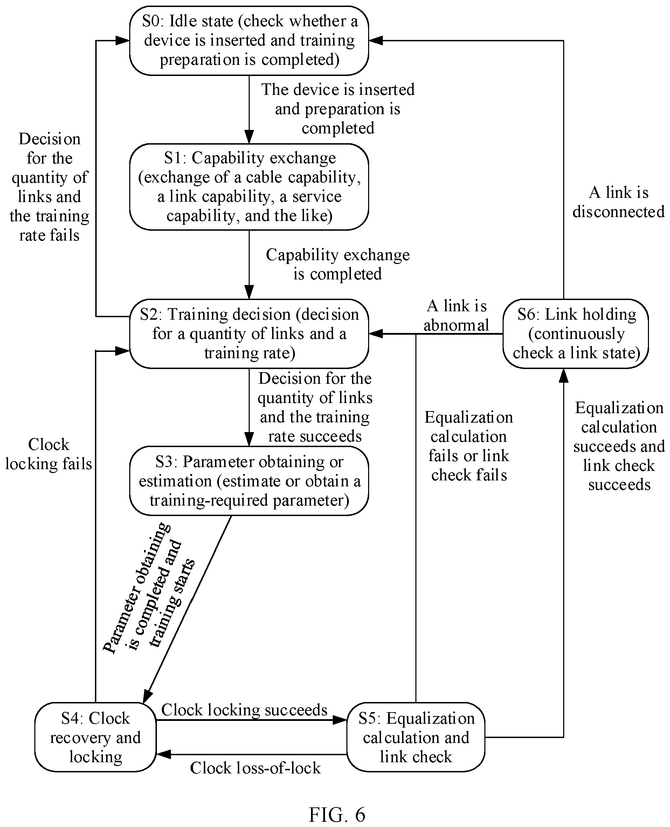

FIG. 6 is a transition diagram of a link training state according to an embodiment of this application. The link training state includes but is not limited to the following states.

### S0: Idle state

The idle state indicates that a link is in the idle state or a link is in a non-transmission state, that is, no data is transmitted. In this state, whether the link is inserted and ready is checked, that is, whether devices that need to be connected by using two ends of a cable are inserted and ready to perform link training is checked. Specifically, whether a device in which a transmit end of the link is located (transmit end device for short) and a device in which a receive end of the link is located (receive end device for short) are inserted and ready to perform link training is checked. If the devices are inserted and ready to perform link training, a capability interaction state S1 is entered.

### S1: Capability exchange

Capability exchange is performed between the devices connected by using the two ends of the cable, and between the cable and the devices connected by using the two ends of the cable. Capabilities that need to be exchanged include a capability of the cable and a capability of the device. The capability of the device includes a link capability and another service capability of the device. The link capability includes a quantity of supported links, a maximum transmission rate supported in a downstream direction, a maximum transmission rate supported in an upstream direction, and the like. The devices connected by using the two ends of the cable exchange capabilities by using an auxiliary link in the cable. Specifically, the transmit end device obtains cable information of the cable (including information such as cable capability information, vendor information, a cable identification code, insertion loss information, and a length) from the cable, and obtains device information of the receive end device (including port information of the receive end) from the receive end device through the auxiliary link. The receive end device obtains the cable information of the cable from the cable, and obtains device information of the transmit end device (including port information of the transmit end) from the transmit end device through the auxiliary link. It should be noted that, only one of the devices connected by using the two ends of the cable may obtain the cable information of the cable from the cable, and then send the cable information to the other device through the auxiliary link. A specific manner is not specifically limited in this application. After the capability exchange is completed, a training decision state S2 is entered.

### S2: Training decision

During training decision, a quantity of links and a training rate that are used for training are decided based on the capability of the cable and the capabilities of the devices connected by using the two ends of the cable. The devices connected by using the two ends of the cable may be classified into a master device (or referred to as a downstream device) and a slave device (or referred to as an upstream device). The master device includes a downstream port (Main Downstream Port, MDP), and the slave device includes an upstream port (Main Upstream Port, MUP). A downstream direction is a direction from the downstream port to the upstream port, that is, a direction from the master device to the slave device, the master device is a transmit end device, and the slave device is a receive end device. An upstream direction is a direction from the upstream port to the downstream port, that is, a direction from the slave device to the master device, the slave device is a transmit end device, and the master device is a receive end device.

The master device decides quantities of links used for training in the upstream direction and the downstream direction. When the slave device has a special requirement, the slave device may request, through the auxiliary link, the master device to adjust the quantities of links used for training in the upstream direction and the downstream direction.

For link training in any direction, a training rate of the link training is decided by the transmit end device and sent to the receive end device. During link training in the upstream direction, the slave device decides a training rate in the upstream direction, and sends the training rate to the master device. During link training in the downstream direction, the master device decides a rate in the downstream direction, and sends the rate to the slave device. When the link training in the upstream direction fails, the slave device needs to decide, according to a policy of the slave device, to decelerate training or re-perform training. When the link training in the downstream direction fails, the master device needs to decide, according to a policy of the master device, to decelerate training or re-perform training.

If decision for the quantity of links and the training rate fails, the idle state S0 is returned to. If decision for the quantity of links and the training rate succeeds, a parameter obtaining or estimation state S3 is entered.

### S3: Parameter obtaining or estimation

Parameter obtaining or estimation varies for first link training and non-first link training. Before link training is performed for the first time, the devices connected by using the two ends of the cable do not perform data transmission through the cable before; or link training is not performed in a case of connection through the cable; or link training is performed in a case of connection through the cable but the link training fails; or link training is performed in a case of connection through the cable and the link training succeeds, but related information about the successful link training is not stored.

If the devices connected by using the two ends of the cable perform link training for the first time, the transmit end device determines, based on the capability of the cable, the capability of the transmit end device, and the capability of the receive end device, a value of a training parameter required for current training (training parameter value for short). Specifically, the transmit end device determines a training rate based on the capability of the cable, the capability of the transmit end device, and the capability of the receive end device, and then determines the training parameter value for the current training based on the training rate. For example, a mapping relationship between a training rate and a preset training parameter value is preset. After the training rate is determined, the training parameter value for the current training may be determined from the preset training parameter value based on the mapping relationship. If only the capability of the cable can be obtained, the training parameter value for the current training is estimated based on the capability of the cable. For example, a group of training parameter values are estimated as training parameter values for the current training based on the insertion loss information in the cable information. The receive end device determines, based on the training rate sent by the transmit end device, a group of training parameter values for current training.

If the devices connected by using the two ends of the cable do not perform link training for the first time, it indicates that the devices connected by using the two ends of the cable have performed training before, and the devices connected by using the two ends of the cable have stored related information about previous successful link training. In this case, the devices connected by using the two ends of the cable separately obtain training parameter values stored by the devices as parameter values required for current training. Specifically, the transmit end device may obtain, through matching, a group of training parameter values from the stored related information about the previous successful link training based on the training rate of the current training, the cable information, and the device information of the receive end device (including the port information of the receive end of the link), and use the group of training parameter values as training parameter values for the current training. If the group of training parameter values cannot be obtained through matching, a group of training parameter values may be estimated based on the insertion loss information in the cable information as training parameter values for the current training. The receive end device may obtain, through matching, a group of training parameter values from the stored related information about the previous successful link training based on the training rate of the current training, the cable information, and the device information of the transmit end device (including the port information of the transmit end of the link), and use the group of training parameter values as training parameter values for the current training. If the group of training parameter values cannot be obtained through matching, a group of training parameter values may be estimated based on the insertion loss information in the cable information as training parameter values for the current training.

Training parameters required by the transmit end device include a voltage swing (Voltage Swing) and transmit-end pre-emphasis strength (TxFFE, also referred to as transmit-end feedforward equalization parameter). Training parameters required by the receive end device include a parameter of a receive end continuous time linear equalizer (CTLE) (continuous time linear equalization parameter for short) and a parameter of a receive end decision feedback equalizer (DFE) (decision feedback equalization parameter for short). It should be noted that, when the training parameter value for the current training cannot be obtained or estimated, a default initial value is used for the current link training.

After the training rate is decided and the training parameter value is configured, the training may be initiated, and a clock recovery and locking state S4 may be entered. Training in the downstream direction and training in the upstream direction may be performed synchronously or asynchronously. The training in the downstream direction and the training in the upstream direction are independent of each other and do not interfere with or affect each other.

### S4: Clock recovery and locking

In this state, the transmit end device sends a clock recovery sequence to the receive end device on the link. After receiving the clock recovery sequence, the receive end device performs clock recovery and locking based on the clock recovery sequence. If the clock locking fails, the training decision state S2 is returned to; or if the clock locking succeeds, an equalization calculation and link check state S5 is entered.

### S5: Equalization calculation and link check

In this state, the transmit end device sends an equalization sequence to the receive end device on the link. After receiving the equalization sequence, the receive end device first checks whether a clock is loss-of-lock on all working link. If a clock loss-of-lock occurs on a link, the clock recovery and locking state S4 is returned to; or if no clock loss-of-lock occurs on a link, equalization calculation is performed. The receive end device performs equalization calculation based on the received equalization sequence. If the equalization calculation fails, the training decision state S2 is returned to. If the equalization calculation succeeds, the receive end device needs to perform link check, where the link check includes bit error rate check, channel alignment check, and the like. If the link check fails, the training decision state S2 is returned to. If the link check succeeds, a link holding state S6 is entered.

### S6: Link holding

In this state, the receive end device continuously checks a link state, and actively notifies the transmit end device through the auxiliary link when a link is abnormal. If the receive end device detects a link exception, the receive end device may actively report the link exception to the transmit end device. The transmit end device may also query a current link state from the receive end device according to a requirement. When the link is abnormal, the training decision state S2 is returned to. When the link is disconnected, the idle state S0 is returned to.

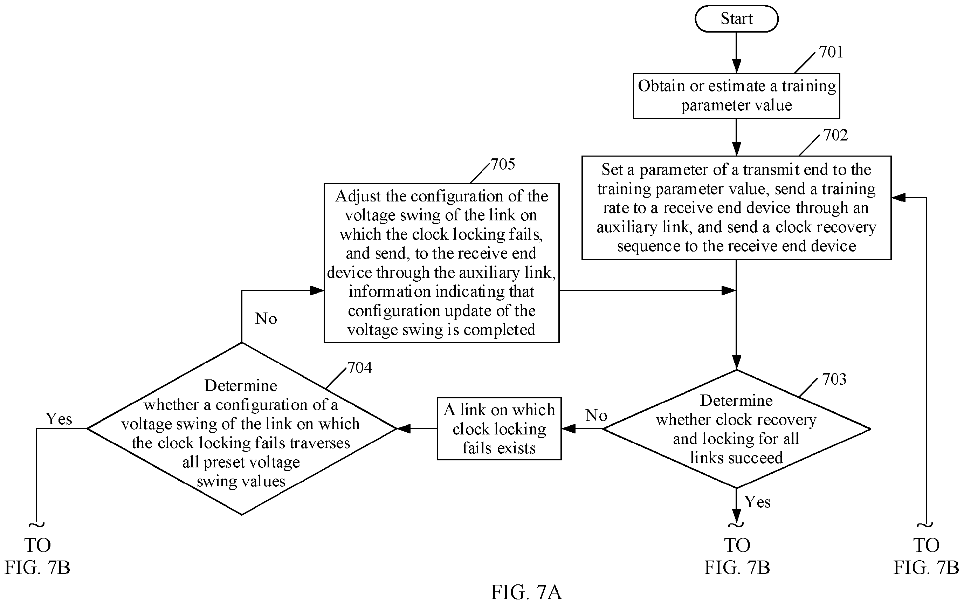

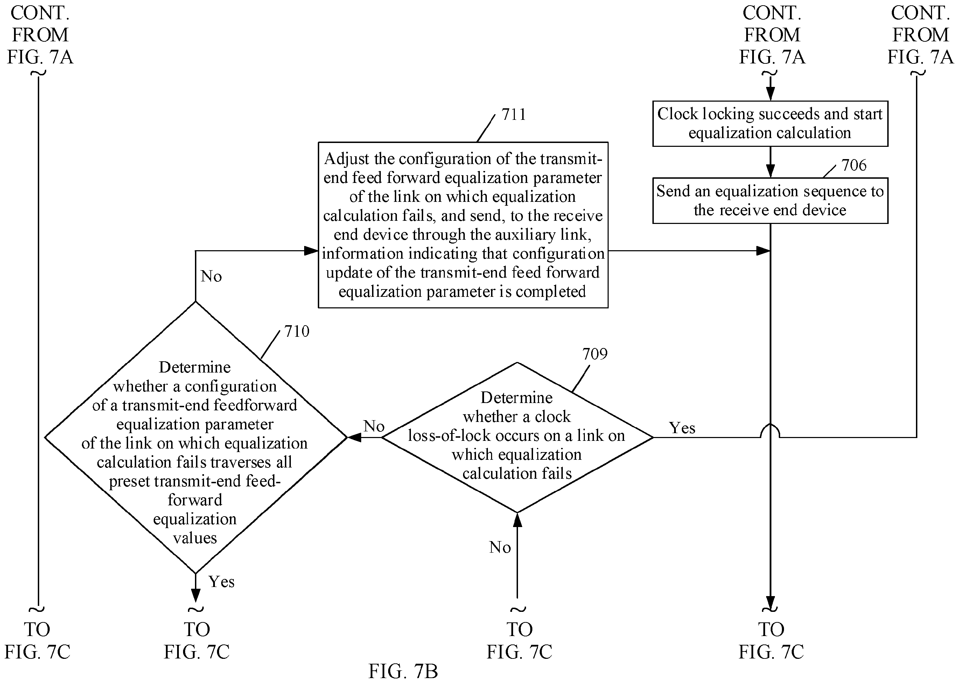

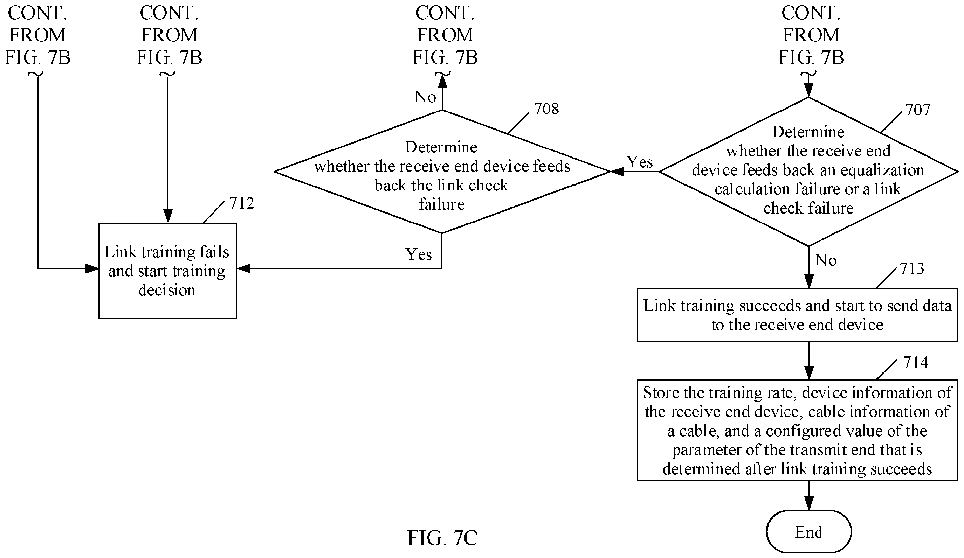

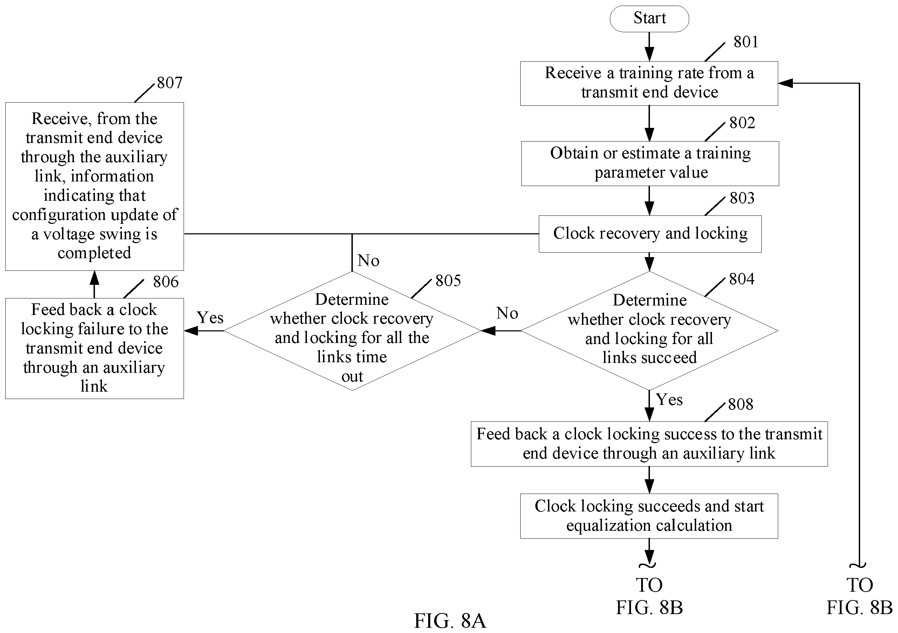

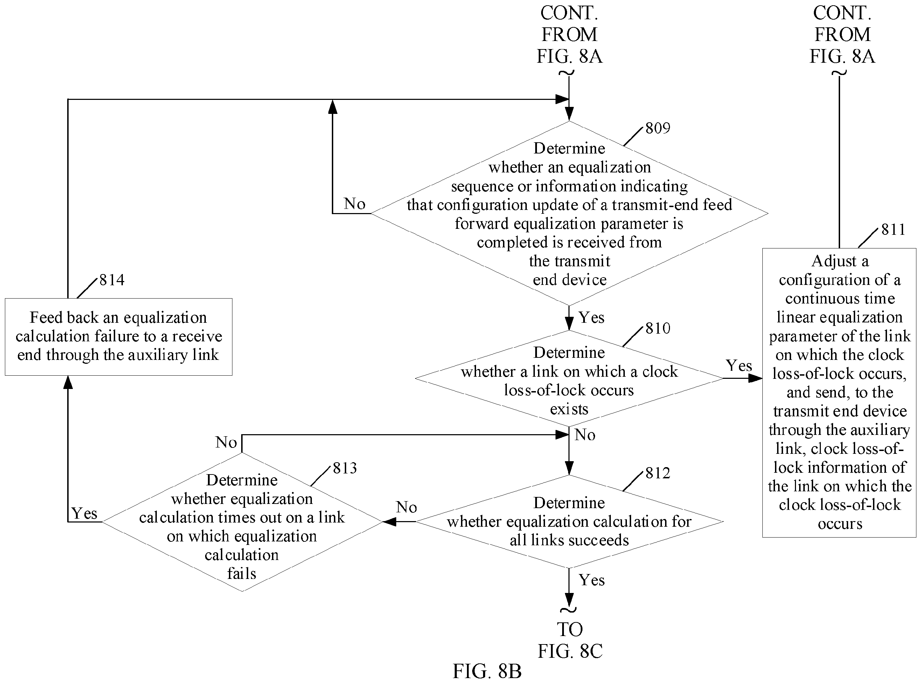

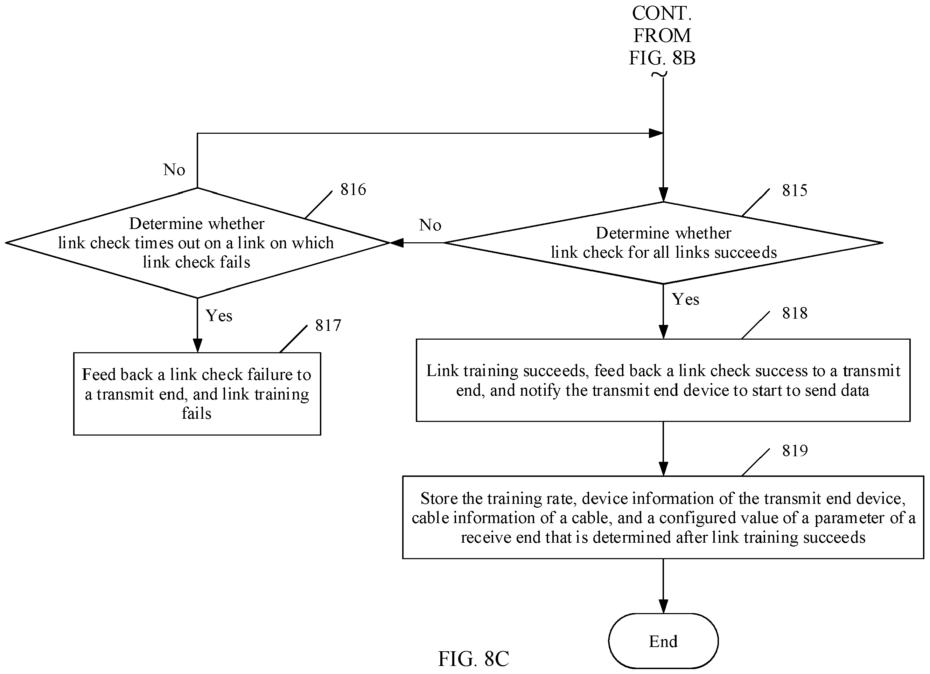

FIG. 7A to FIG. 7C are a schematic flowchart of link training performed by a transmit end device according to an embodiment of this application. A cable in FIG. 7A to FIG. 7C includes at least one link from a transmit end of the transmit end device to a receive end of a receive end device and an auxiliary link. The auxiliary link includes at least one first auxiliary link from the transmit end device to the receive end device and at least one second auxiliary link from the receive end device to the transmit end device. The receive end device may be a receive end device in FIG. 8A to FIG. 8C. A link training procedure includes but is not limited to the following steps.

701: Obtain or estimate a training parameter value.

A training rate needs to be determined before the training parameter value is obtained or estimated. For a process of determining the training rate, refer to the training decision state S2. For a process of obtaining the training parameter value, refer to the parameter obtaining or estimation state S3.

During first training, the transmit end device determines the training rate based on a capability of the cable, a capability of the transmit end device, and a capability of the receive end device. For example, the transmit end device determines the training rate based on device information of the transmit end device, cable information of the cable, and device information of the receive end device, and then determines the training parameter value based on the training rate.

The transmit end device has a non-volatile memory (Non-Volatile memory, NVM), and the non-volatile memory may be configured to store a parameter value related to link training when the link training succeeds. After any time of link training succeeds, a parameter value related to the link training is stored in the non-volatile memory. During next training, the parameter value for the previous successful link training may be used. During non-first training, the transmit end device obtains, through matching, a group of training parameter values from the non-volatile memory based on the cable information of the cable, the device information of the receive end device (port information of the receive end), and the training rate determined through training. If the cable does not store the cable information, after the training succeeds, if the transmit end device is not powered off and is not disconnected (for example, removed and inserted), the parameter value for the previous successful training may be used for training again.

When the transmit end device cannot obtain the training parameter value through matching, for example, the transmit end has no non-volatile memory but has the cable information of the cable, a value of a parameter related to link training may be estimated by using the cable information of the cable. If the transmit end device cannot obtain the training parameter value through matching, and no cable information of the cable can be used to estimate the training parameter value, the transmit end device resets a training-related parameter at the transmit end to an initial value.

It should be noted that the training parameter value obtained or estimated by the transmit end device is a training value of a parameter to be configured at the transmit end, that is, the training parameter value obtained or estimated by the transmit end device is to be configured at the transmit end. In addition, step 701 is an optional operation. For example, the transmit end device may perform link training at a default rate by using an initial value of a parameter, so that step 701 may not be performed.

702: Set a parameter of the transmit end to the training parameter value, send the training rate to the receive end device through the auxiliary link, and send a clock recovery sequence to the receive end device.

Because there is at least one link between the transmit end device and the receive end device, the parameter of the transmit end is set to the training parameter value, that is, a transmit-end parameter of each of the at least one link is set to the training parameter value.

The clock recovery sequence is sent by the transmit end of the transmit end device to the receive end of the receive end device, the clock recovery sequence is transmitted through at least one link from the transmit end device to the receive end device, and each of the at least one link needs to transmit the clock recovery sequence. The clock recovery sequence may be understood as alternating data of 0101, and the clock recovery sequence is used by the receive end device to perform clock recovery and locking on each of the at least one link. Then, the transmit end device waits for the receive end device to feed back a clock locking result.

A rate at which the transmit end device sends the clock recovery sequence to the receive end device is the training rate of the current training.

703: Determine whether clock recovery and locking for all links succeed.

The transmit end device receives the clock locking result from the receive end device through the auxiliary link, and the received clock locking result includes a clock locking result of each of the at least one link. When clock locking for each of the at least one link succeeds, it indicates that clock locking in the current training succeeds; or when a link on which clock locking fails exists in the at least one link, it indicates that clock locking in the current training fails. Steps 704 and 705 are performed for any link on which clock locking fails.

704: Determine whether a configuration of a voltage swing of the link on which the clock locking fails traverses all preset voltage swing values.

For any link, a voltage swing that can be adjusted for the link has a plurality of values, that is, there are a plurality of preset voltage swing values. In addition, all links have a plurality of same preset voltage swing values. Only one of the plurality of preset voltage swing values is obtained in step 701 of obtaining or estimating a training parameter value. If a value of a voltage swing configured at the transmit end is excessively small or excessively large, a clock at the receive end cannot be locked. Therefore, when the clock locking fails, the transmit end device may adjust the value of the voltage swing configured at the transmit end, and after the receive end device is notified through the auxiliary link, the receive end device continues to perform clock locking and recovery until the clock locking succeeds or the configuration of the voltage swing has traversed all the preset voltage swing values. Therefore, if the configuration of the voltage swing of the link on which the clock locking fails does not traverse all the preset voltage swing values, step 705 is performed. If the configuration of the voltage swing of the link on which the clock locking fails has traversed all the preset voltage swing values, step 712 is performed. To be specific, when a configuration of a voltage swing of a link has traversed all the preset voltage swing values, but the receive end still cannot complete clock recovery and locking, training decision is made to determine whether to decelerate training or re-perform training.

705: Adjust the configuration of the voltage swing of the link on which the clock locking fails, and send, to the receive end device through the auxiliary link, information indicating that configuration update of the voltage swing is completed.

The voltage swing configured at the transmit end may be adjusted between a plurality of preset voltage swing values, that is, the transmit end may support voltage swing adjustment between a plurality of levels from a level 0. If the configuration of the voltage swing of the link on which the clock locking fails does not traverse all the preset voltage swing values, the voltage swing of the link on which the clock locking fails is adjusted to a next level, and the receive end device is notified through the auxiliary link. When adjusting the voltage swing, the transmit end device may adjust the voltage swing in a specific order, for example, sequentially upward or downward, or may not adjust the voltage swing in order, for example, may dynamically adjust the voltage swing based on a status of the receive end. After adjusting the voltage swing, the transmit end device re-determines whether clock recovery and locking for all the links succeed. If the clock recovery and locking for all the links succeed, equalization calculation is started, and step 706 is performed.

706: Send an equalization sequence to the receive end device.

When the transmit end device receives the clock locking result sent by the receive end device through the auxiliary link and determines that clock locking on all the links succeeds, the transmit end device starts to send the equalization sequence to the receive end. The equalization sequence is sent by the transmit end of the transmit end device to the receive end of the receive end device, the equalization sequence is transmitted through at least one link from the transmit end device to the receive end device, and each of the at least one link needs to transmit the equalization sequence. The equalization sequence refers to data in a specific format. The receive end performs equalization calculation based on the data. After sending the equalization sequence to the receive end device, the transmit end device waits to receive an equalization calculation result or a link check result fed back by the receive end device.

A rate at which the transmit end device sends the equalization sequence to the receive end device is the training rate of the current training.

707: Determine whether the receive end device feeds back an equalization calculation failure or a link check failure.

If the receive end device does not feed back a link check success, it indicates that the link training succeeds, and step 713 is performed; or if the receive end device feeds back the equalization calculation failure or the link check failure, it indicates that the link training fails, and step 708 is performed.

708: Determine whether the receive end device feeds back the link check failure.

A reason for a link training failure includes the equalization calculation failure and the link check failure. When the link training fails, it further needs to be determined whether the link training failure is caused by the equalization calculation failure or the link check failure. Therefore, whether the receive end device feeds back the link check failure is determined. If the receive end device feeds back the link check failure, it indicates that the link training failure is caused by the link check failure, and step 712 is performed; or if the receive end device does not feed back the link check failure, step 709 is performed.

The transmit end device receives the link check result from the receive end device through the auxiliary link, and the received link check result includes a link check result of each of the at least one link. When link check for each of the at least one link succeeds, it indicates that link check in the current training succeeds; or when a link on which equalization calculation fails exists in the at least one link, it indicates that equalization calculation in the current training fails. Therefore, when a link on which link check fails exists in the at least one link, it may be considered that the receive end device feeds back the link check failure. When the link check fails, step 712 is performed.

Link check can be performed only after the equalization calculation succeeds. If the equalization calculation at the receive end fails, the receive end needs to notify the transmit end that the equalization calculation fails. If the equalization calculation at the receive end succeeds, the receive end may choose whether to notify the transmit end that the equalization calculation succeeds. The transmit end device receives the equalization calculation result from the receive end device through the auxiliary link, and the received equalization calculation result includes an equalization calculation result of each of the at least one link. When equalization calculation for each of the at least one link succeeds, it indicates that equalization calculation in the current training succeeds; or when a link on which equalization calculation fails exists in the at least one link, it indicates that equalization calculation in the current training fails. Therefore, when a link on which equalization calculation fails exists in the at least one link, it may be considered that the receive end device feeds back the equalization calculation failure. It should be noted that, if the equalization calculation succeeds, the receive end may not feed back the equalization calculation result. When the equalization calculation fails, step 709 is performed for a link on which equalization calculation fails, to determine a reason why the equalization calculation fails.

709: Determine whether a clock loss-of-lock occurs on the link on which the equalization calculation fails.

For the link on which the equalization calculation fails, whether the clock loss-of-lock occurs on the link is determined. If the clock loss-of-lock occurs, the current training rate remains unchanged, training is re-initiated, and step 702 is performed. If no clock loss-of-lock occurs, step 710 is performed.

710: Determine whether a configuration of a transmit-end feedforward equalization parameter of the link on which the equalization calculation fails traverses all preset transmit-end feedforward equalization values.

For any link, a transmit-end feedforward equalization parameter that can be adjusted for the link has a plurality of values, that is, there are a plurality of preset transmit-end feedforward equalization values. In addition, all links have a plurality of same preset transmit-end feedforward equalization values. Only one of the plurality of preset transmit-end feedforward equalization values is obtained in step 701 of obtaining or estimating the training parameter value. The value of the transmit-end feedforward equalization parameter configured at the transmit end is related to whether equalization calculation at the receive end can succeed. Therefore, when the equalization calculation fails, the transmit end device may adjust the value of the transmit-end feedforward equalization parameter configured at the transmit end, and after the receive end device is notified through the auxiliary link, the receive end device continues to perform equalization calculation until the equalization calculation succeeds or the configuration of the transmit-end feedforward equalization parameter has traversed all the preset transmit-end feedforward equalization values. Therefore, if the configuration of the transmit-end feedforward equalization parameter of the link on which the equalization calculation fails does not traverse all the preset transmit-end feedforward equalization values, step 711 is performed. If the configuration of the transmit-end feedforward equalization parameter of the link on which the equalization calculation fails has traversed all the preset transmit-end feedforward equalization values, step 713 is performed. To be specific, when a configuration of a transmit-end feedforward equalization parameter of a link has traversed all the preset transmit-end feedforward equalization values, but the receive end still cannot succeed in performing equalization calculation, training decision is made to determine whether to decelerate training or re-perform training.

711: Adjust the configuration of the transmit-end feedforward equalization parameter of the link on which the equalization calculation fails, and send, to the receive end device through the auxiliary link, information indicating that configuration update of the transmit-end feedforward equalization parameter is completed.

The transmit-end feedforward equalization parameter configured at the transmit end may be adjusted between a plurality of preset transmit-end feedforward equalization values, that is, the transmit end may support transmit-end feedforward equalization parameter adjustment between a plurality of levels from a level 0. If the configuration of the transmit-end feedforward equalization parameter of the link on which the equalization calculation fails does not traverse all the preset transmit-end feedforward equalization values, the transmit-end feedforward equalization parameter of the link on which the equalization calculation fails is adjusted to a next level, and the receive end device is notified through the auxiliary link. When adjusting the transmit-end feedforward equalization parameter, the transmit end device may adjust the transmit-end feedforward equalization parameter in a specific order, for example, sequentially upward or downward, or may not adjust the transmit-end feedforward equalization parameter in order, for example, may dynamically adjust the transmit-end feedforward equalization parameter based on a status of the receive end. After adjusting the transmit-end feedforward equalization parameter, the transmit end device re-determines whether the receive end device feeds back an equalization calculation failure. If the receive end device does not feed back the equalization calculation failure, step 712 is performed.

712: Link training fails and start training decision.

When the link training fails, the training decision is made to determine whether to re-perform training at a reduced training rate or re-perform training at the current rate.

713: Link training succeeds and start to send data to the receive end device.

If the link in the cable includes a bidirectional link, after a link in one direction is successfully trained, service data may be transmitted according to a requirement through the successfully trained link without waiting for a success of link training in the other direction. It should be understood that the training rate is also a transmission rate during data transmission.

714: Store the training rate, the device information of the receive end device, the cable information of the cable, and a configured value of the parameter of the transmit end that is determined after the link training succeeds.

After the training succeeds, a value of the voltage swing, a value of the transmit-end feedforward equalization parameter, and the like that are finally used by the transmit end are stored in the non-volatile component, to facilitate subsequent use to improve a training rate. Specifically, parameters that need to be stored include: the training rate, the cable information of the cable (including an identification code of the cable), a value configured for a voltage swing of each link and a value configured for a transmit-end feedforward equalization parameter when the training succeeds, the device information of the receive end device (including port information of the receive end), a forward/reverse insertion status of the cable, and the like. One or more groups of parameters can be stored. It should be noted that step 714 is an optional operation. For example, the transmit end device may not store the training rate, the device information of the receive end device, the cable information of the cable, and the configured value of the parameter of the transmit end that is determined after the link training succeeds.

It should be noted that, for a specific procedure of link training performed by the transmit end device described in FIG. 7A to FIG. 7C, refer to related descriptions in the embodiment shown in FIG. 6.

FIG. 8A to FIG. 8C are a schematic flowchart of link training performed by a receive end device according to an embodiment of this application. A cable in FIG. 8A to FIG. 8C includes at least one link from a transmit end of a transmit end device to a receive end of the receive end device and an auxiliary link. The auxiliary link includes at least one first auxiliary link from the transmit end device to the receive end device and at least one second auxiliary link from the receive end device to the transmit end device. The transmit end device may be the transmit end device in FIG. 7A to FIG. 7C. A link training procedure includes but is not limited to the following steps.

801: Receive a training rate from the transmit end device.

For a process of determining the training rate, refer to the training decision state S2. The training rate is determined by the transmit end device, and is sent to the receive end device. During first training, the training rate from the transmit end device is received, and then a training parameter value is determined based on the training rate.

802: Obtain or estimate the training parameter value.

For a process of obtaining the training parameter value, refer to the foregoing parameter obtaining or estimation state S3. The receive end device has a non-volatile memory, and the non-volatile memory may be configured to store a parameter value related to link training when the link training succeeds. After any time of link training succeeds, a parameter value related to the link training is stored in the non-volatile memory. During next training, the parameter value for the previous successful link training may be used. During non-first training, the receive end device obtains, through matching, a group of training parameter values from the non-volatile memory based on cable information of the cable, device information of the receive end device (port information of the receive end), and the received training rate. If the cable does not store the cable information, after the training succeeds, if the receive end device is not powered off and is not disconnected (for example, removed and inserted), the parameter value for the previous successful training may be used for training again.

When the receive end device cannot obtain the training parameter value through matching, for example, the transmit end has no non-volatile memory but has the cable information of the cable, a value of a parameter related to link training may be estimated by using the cable information of the cable. If the receive end device cannot obtain the training parameter value through matching, and no cable information of the cable can be used to estimate the training parameter value, the receive end device resets a training-related parameter at the transmit end to an initial value.

It should be noted that the training parameter value obtained or estimated by the receive end device is a training value of a parameter to be configured at the receive end, that is, the training parameter value obtained or estimated by the receive end device is to be configured at the receive end. In addition, parameter obtaining or estimation is an optional operation. For example, the receive end device performs link training when the parameter of the transmit end is set to the initial value.

803: Perform clock recovery and locking.

Before the clock recovery and locking, the parameter of the receive end is further set to the training parameter value. Because there is at least one link between the transmit end device and the receive end device, the parameter of the receive end is set to the training parameter value, that is, a receive-end parameter of each of the at least one link is set to the training parameter value.

Before the clock recovery and locking, a clock recovery sequence from the transmit end device is further received. The clock recovery sequence is sent by the transmit end of the transmit end device to the receive end of the receive end device, the clock recovery sequence is transmitted through at least one link from the transmit end device to the receive end device, and each of the at least one link needs to transmit the clock recovery sequence. The receive end device receives the clock recovery sequence on each of the at least one link. The clock recovery sequence may be understood as alternating data of 0101, and the clock recovery sequence is used by the receive end device to perform clock recovery and locking on each of the at least one link.

For each of the at least one link, after the clock recovery sequence is received, clock recovery and locking need to be performed based on the clock recovery sequence, that is, a specific circuit is used to keep consistency between an internal working clock and an input clock sequence based on the clock recovery sequence.

804: Determine whether clock recovery and locking for all links succeed.

When clock locking on each of the at least one link succeeds, it indicates that clock locking in the current training succeeds. When a link on which clock locking fails exists in the at least one link, it indicates that clock locking in the current training fails. If clock recovery and locking do not succeed on all of the at least one link, step 805 is performed; or if clock recovery and locking succeed on all of the at least one link, step 808 is performed.

805: Determine whether clock recovery and locking for all the links time out.

The clock recovery and locking operations need to be completed within preset duration. For any one of the at least one link, if a clock locking failure is determined on the link, a possible reason is that duration of the clock recovery and locking operations does not reach the preset duration, that is, the clock recovery and locking operations on the link are not completed. Therefore, when it is determined that clock recovery and locking do not succeed on all links, whether the clock recovery and locking on all the links time out may be further determined, that is, whether clock recovery and locking operations on all the links are completed. If the clock recovery and locking operations on all the links are completed, it indicates that clock locking on a link fails. For the link on which the clock locking fails, step 806 is performed. If the clock recovery and locking operations on all the links are not completed, after the clock recovery and locking operations on all the links are completed, step 804 is performed to determine whether the clock recovery and locking on all the links succeed.

806: Feed back a clock locking failure to the transmit end device through the auxiliary link.

After the clock locking fails, the receive end device feeds back a clock locking result to the transmit end device through the auxiliary link, where the clock locking result is the clock locking failure, and the clock locking result includes a clock locking result of each of the at least one link. Therefore, the transmit end device learns of a specific link on which clock locking fails in the at least one link. For the link on which the clock locking fails, the transmit end device may adjust a configuration of a voltage swing of the link on which the clock locking fails, and after adjusting the configuration of the voltage swing of the link on which the clock locking fails, notify, through the auxiliary link, the receive end device that the configuration of the voltage swing of the link on which the clock locking fails is adjusted.

807: Receive, from the transmit end device through the auxiliary link, information indicating that configuration update of the voltage swing is completed.

After receiving the information indicating that the configuration update of the voltage swing is completed, the receive end device may learn that the transmit end device updates the configuration of the voltage swing of the link on which the clock locking fails. The receive end device resets a timer of the link, and continues to perform clock recovery and locking. After information indicating that voltage swing configuration update is completed is received for all links on which clock locking fails, after clock recovery and locking continue to be performed, step 804 is performed again. Step 808 is performed after clock locking on all of the at least one link succeeds.

808: Feed back a clock locking success to the transmit end device through the auxiliary link.

After detecting that clock locking on all the links succeeds, the receive end device sends a clock locking result to the transmit end device through the auxiliary link, where the clock locking result is the clock locking success. Then, equalization calculation is performed, and an equalization sequence sent by the transmit end device is waited.

809: Determine whether the equalization sequence or information indicating that configuration update of a transmit-end feedforward equalization parameter is completed is received from the transmit end device.

Because the receive end device needs to perform equalization calculation based on the equalization sequence, the receive end device first needs to determine whether the equalization sequence from the transmit end device is received. Only when the equalization sequence from the transmit end device is received, a subsequent specific equalization calculation operation is performed. However, after equalization calculation is performed, when the equalization calculation fails, the transmit end device adjusts a configuration of the transmit-end feedforward equalization parameter at the transmit end, and then notifies, by using the information indicating that the configuration update of the transmit-end feedforward equalization parameter is completed, the receive end device to perform equalization calculation again. Therefore, when equalization calculation is not performed for the first time, it needs to be determined whether the information indicating that the configuration update of the transmit-end feedforward equalization parameter is completed is received from the transmit end device, to determine whether to perform equalization calculation again. It should be understood that if the equalization sequence is not updated, that is, the receive end device does not receive a new equalization sequence, an equalization sequence used for equalization calculation again is still the previously received equalization sequence. To ensure that equalization calculation is performed normally, before equalization calculation is performed, it needs to be ensured whether clock locking is stable. Therefore, after the equalization sequence or the information indicating that the configuration update of the transmit-end feedforward equalization parameter is completed is received from the transmit end device, step 810 is performed to determine whether a link on which a clock loss-of-lock occurs exists.

810: Determine whether a link on which a clock loss-of-lock occurs exists.

Whether a clock is stable currently on all of the at least one link is checked. If the link on which the clock loss-of-lock occurs exists, step 811 is performed for the link on which the clock loss-of-lock occurs. If no link on which a clock loss-of-lock occurs exists, equalization calculation is started, and step 812 is performed to wait for an equalization calculation result.

The equalization calculation compensates for non-ideality of a channel and eliminates inter-symbol interference by using some circuit designs. A process of the equalization calculation is to continuously adjust some parameters in these circuit designs to determine whether a signal reaches an ideal state. After receiving the equalization sequence, the receive end performs equalization calculation, continuously adjusts a configuration of the receive end, and identifies and determines the equalization sequence.

811: Adjust a configuration of a continuous time linear equalization parameter of the link on which the clock loss-of-lock occurs, and send, to the transmit end device through the auxiliary link, clock loss-of-lock information of the link on which the clock loss-of-lock occurs.

For any one of links on which a clock loss-of-lock occurs, a continuous time linear equalization parameter of a receive end of the link is properly adjusted, and a result that the clock loss-of-lock occurs on the link is notified to the transmit end device through the auxiliary link. The transmit end is waited to re-initiate training, that is, re-perform clock recovery and locking. In this case, to ensure that the clock recovery and locking can succeed, when clock recovery and locking are performed again, the continuous time linear equalization parameter configured at the receive end should be adjusted, and the original value cannot be used.

812: Determine whether equalization calculation for all the links succeeds.

When equalization calculation on each of the at least one link succeeds, equalization calculation in the current training succeeds. When a link on which equalization calculation fails exists in the at least one link, equalization calculation in the current training fails. The equalization calculation is receive-end coarse equalization adjustment, and needs to meet that character delimitation on all the links succeeds, periodic synchronization of each link succeeds, and a bit error rate of each link is less than a bit error rate 1, where the bit error rate 1 is a specific value. Therefore, for any one of the at least one link, whether the link meets that character delimitation succeeds, periodic synchronization succeeds, and a bit error rate is less than the bit error rate 1 is checked. If all the conditions are met, equalization calculation on the link succeeds. If not all the conditions are met, equalization calculation on the link fails. For a link that does not meet that character delimitation succeeds, periodic synchronization succeeds, and a bit error rate is less than the bit error rate 1, step 813 is performed. When equalization calculation on each of the at least one link succeeds, step 815 is performed.

813: Determine whether equalization calculation times out on the link on which the equalization calculation fails.

An equalization calculation operation needs to be completed within preset duration. For any one of the at least one link, when the link does not meet that character delimitation succeeds, periodic synchronization succeeds, and a bit error rate is less than the bit error rate 1, a possible reason is that duration of the equalization calculation operation does not reach the preset duration, that is, the equalization calculation operation on the link is not completed. Therefore, when it is determined that the any one link does not meet that character delimitation succeeds, periodic synchronization succeeds, and a bit error rate is less than the bit error rate 1, whether equalization calculation on the any one link times out may be further determined, that is, whether an equalization calculation operation on the any one link is completed is determined. If the equalization calculation operation on the any one link is completed, it indicates that the equalization calculation on the any one link fails, and step 814 is performed for the link on which the equalization calculation fails. If the equalization calculation operation on the any one link is not completed, after the equalization calculation operation on the any one link is completed, step 812 is performed to determine whether the equalization calculation on the any one link succeeds.

814: Feed back an equalization calculation failure to the receive end through the auxiliary link.

If equalization calculation on a link fails and times out, it indicates that the equalization calculation fails, and an equalization result is notified to the transmit end device through the auxiliary link. The transmit end device receives the equalization calculation result from the receive end device through the auxiliary link, where the received equalization calculation result includes an equalization calculation result of each of the at least one link. For the link on which the equalization calculation fails, the transmit end device adjusts a configuration of a transmit-end feedforward equalization parameter of the link. After the configuration is completed, the transmit end device sends, to the receive end device through the auxiliary link, information indicating that configuration update of the transmit-end feedforward equalization parameter is completed. After receiving the information indicating that the configuration update of the transmit-end feedforward equalization parameter of the link is completed, the receive end device restarts a timer and continues to perform equalization calculation. Therefore, after step 814 is performed, step 809 is performed.

815: Determine whether link check for all the links succeeds.

After it is detected that the equalization calculation succeeds, link check is performed on each of the at least one link. When the link check on each of the at least one link succeeds, link check in the current training succeeds. When a link on which equalization calculation fails exists in the at least one link, equalization calculation in the current training fails. The link check is a fine equalization adjustment, and needs to meet that a channel is aligned between all the links, and a bit error rate of each link is less than a bit error rate 2. The bit error rate 2 is similar to the bit error rate 1, and the bit error rate 2 is less than the bit error rate 1. Therefore, for any one of the at least one link, whether the link meets that a channel is aligned and a bit error rate is less than the bit error rate 2 is checked. If all the conditions are met, link check on the link succeeds. If not all the conditions are met, link check on the link fails. For a link that does not meet that a channel is aligned and a bit error rate is less than the bit error rate 2, step 816 is performed. When the link check on each of the at least one link succeeds, step 818 is performed.

816: Determine whether link check times out on a link on which link check fails.

A link check operation needs to be completed within preset duration. For any one of the at least one link, when the link does not meet that a channel is aligned and a bit error rate is less than the bit error rate 2, a possible reason is that duration of the link check operation does not reach the preset duration, that is, the link check operation on the link is not completed. Therefore, when it is determined that the any one link does not meet that a channel is aligned and a bit error rate is less than the bit error rate 2, whether link check on the any one link times out may be further determined, that is, whether a link check operation on the any one link is completed is determined. If the link check operation on the any one link is completed, it indicates that the link check on the any one link fails, and step 817 is performed for the link on which the link check fails. If the link check operation on the any one link is not completed, after the link check operation on the any one link is completed, step 815 is performed to determine whether the link check on the any one link succeeds.

817: Feed back a link check failure to the transmit end, and link training fails.

If a link on which link check fails exists in the at least one link, it indicates that the link training fails, and the receive end device sends a link check result to the transmit end device through the auxiliary link, where the link check result includes a link check result of each of the at least one link, and the link check result is the link check failure.

818: Link training succeeds, feed back a link check success to the transmit end, and notify the transmit end device to start to send data.

If the link check on each of the at least one link succeeds, it indicates that the link training succeeds, and a link check result is sent to the transmit end device through the auxiliary link, where the link check result includes a link check result of each of the at least one link, and the link check result is the link check success.

It should be noted that, if the link in the cable includes a bidirectional link, after a link in one direction is successfully trained, service data may be transmitted according to a requirement through the successfully trained link without waiting for a success of link training in the other direction. Therefore, after the link training succeeds, the receive end device may notify the transmit end device that data transmission can be started.

819: Store the training rate, the device information of the transmit end device, the cable information of the cable, and a configured value of the parameter of the receive end that is determined after the link training succeeds.

After the training succeeds, a value of the continuous time linear equalization parameter, a value of the decision feedback equalization parameter, and the like that are finally used by the receive end are stored in the non-volatile component, to facilitate subsequent use to improve a training rate. Specifically, parameters that need to be stored include: the training rate, the cable information of the cable (including an identification code of the cable), a value configured for a continuous time linear equalization parameter of each link and a value configured for a decision feedback equalization parameter when the training succeeds, the device information of the transmit end device (including port information of the transmit end), a forward/reverse insertion status of the cable, and the like. One or more groups of parameters can be stored. It should be noted that step 819 is an optional operation. For example, the receive end device may not store the training rate, the device information of the transmit end device, the cable information of the cable, and the configured value of the parameter of the receive end that is determined after the link training succeeds.

It should be noted that, for a specific procedure of link training performed by the receive end device described in FIG. 8A to FIG. 8C, refer to related descriptions in the embodiments shown in FIG. 6 and FIG. 7A to FIG. 7C.

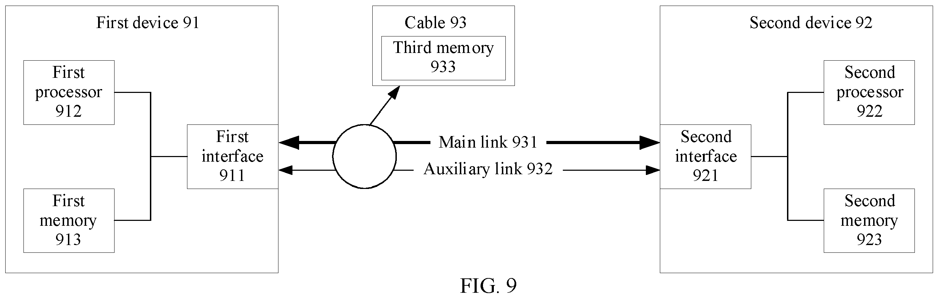

FIG. 9 is a schematic diagram of an architecture of a communication system according to an embodiment of this application. As shown in FIG. 9, the communication system includes a first device 91, a second device 92, and a cable 93 that connects the first device 91 and the second device 92. The first device 91 includes at least one first interface 911, a first processor 912, and a first memory 913. The second device 92 includes at least one second interface 921, a second processor 922, and a second memory 923. The cable 93 includes a main link (Main-Link) 931, an auxiliary link 932, and a third memory 933.

The first memory 913 stores device information of the first device 91, and may be configured to store information such as a training parameter for link training. The second memory 923 stores device information of the second device 92, and may be configured to store information such as a training parameter for link training. The third memory 933 stores cable information of the cable 93. The first memory 913, the second memory 923, and the third memory 933 each may be a non-volatile component, and the non-volatile component includes an erasable programmable read-only memory (Electrically Erasable Programmable read only memory, EEPROM), a flash memory (FLASH), an embedded multimedia card (Embedded Multimedia Card, eMMC), or the like.

When the first device 91 and the second device 92 are classified into a master device and a slave device, the first interface 911 and the second interface 921 are classified into an upstream port and a downstream port. When the first interface 911 is an upstream port, the second interface 921 is a downstream port. When the first interface 911 is a downstream port, the second interface 921 is an upstream port. For ease of description, the technical solutions provided in this application are described below by using an example in which the first device 91 is a master device, the first interface 911 is a downstream port, the second device 92 is a slave device, and the second interface 921 is an upstream port. However, this is not specifically limited herein.

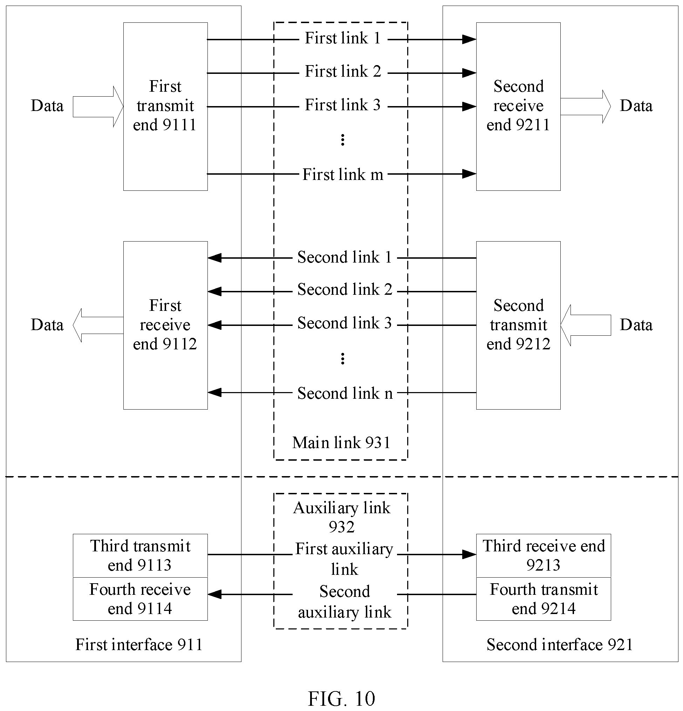

It should be understood that an interface having a bidirectional channel should include at least one transmit end and at least one receive end. The transmit end and the receive end are obtained by classifying a plurality of pins on the interface based on functions of the pins. For example, the first interface 911 of the first device 91 includes a plurality of pins, and the plurality of pins may include, for example, a plurality of transmit pins and a plurality of receive pins. In an optional case, a first transmit end 9111 may include some of the plurality of transmit pins, and a first receive end 9112 may include some of the plurality of receive pins. FIG. 10 is a schematic diagram of an internal connection between the first interface 911 and the second interface 921. As shown in FIG. 10, the plurality of pins on the first interface 911 are classified into the first transmit end 9111, the first receive end 9112, a third transmit end 9113, and a fourth receive end 9114 based on functions, and the plurality of pins on the second interface 921 are classified into a second receive end 9211, a second transmit end 9212, a third receive end 9213, and a fourth transmit end 9214 based on functions. The first transmit end 9111 is connected to the second receive end 9211 through a main link 931, and there are m first links between the first transmit end 9111 and the second receive end 9211, where m is an integer greater than 0. The second transmit end 9212 is connected to the first receive end 9112 through the main link 931, and there are n second links between the second transmit end 9212 and the first receive end 9112, where n is an integer greater than 0. The third transmit end 9113 is connected to the third receive end 9213 through an auxiliary link 932, and there is at least one first auxiliary link between the third transmit end 9113 and the third receive end 9213. The fourth transmit end 9214 is connected to the fourth receive end 9114 through the auxiliary link 932, and there is at least one second auxiliary link between the fourth transmit end 9214 and the fourth receive end 9114.

Therefore, there are m+n+2 links in the cable 93, which are respectively m first links, n second links, one first auxiliary link, and one second auxiliary link. The first auxiliary link and the second auxiliary link are fixed, and the first auxiliary link is used by the first device 91 to send data to the second device 92 or used by the second device 92 to receive data from the first device 91. The second auxiliary link is used by the first device 91 to receive data from the second device 92 or used by the second device 92 to send data to the first device 91. Therefore, functions of pins included in the third transmit end 9113, the third receive end 9213, the fourth transmit end 9214, and the fourth receive end 9114 are unchanged. Functions of pins included in the third transmit end 9113 and the fourth transmit end 9214 are only sending functions, and functions of pins included in the third receive end 9213 and the fourth receive end 9114 are only receiving functions. A quantity of the m first links and a quantity the n second links may be adjusted according to a requirement, for example, the quantity of first links is increased, and the quantity of second links is decreased, or the quantity of first links is decreased, and the quantity of second links is increased. Therefore, functions of the first transmit end 9111, the first receive end 9112, the second receive end 9211, and the second transmit end 9212 are variable. In other words, functions of pins included in the first transmit end 9111, the first receive end 9112, the second receive end 9211, and the second transmit end 9212 may be sending functions or receiving functions. This is specifically determined by the first device 91 or determined by the first device 91 according to a requirement of the second device 92.

For the first link, the first device 91 is a transmit end device, and the second device 92 is a receive end device. For the second link, the first device 91 is a receive end device, and the second device 92 is a transmit end device.

With reference to FIG. 9 and FIG. 10, the following describes a link training solution provided in this application.

### 1. Idle state

The first device 91 checks whether the cable 93 is inserted into both the first device 91 and the second device 92, and checks whether both the first device 91 and the second device 92 are ready to perform link training. The second device 92 also checks whether the cable 93 is inserted into both the first device 91 and the second device 92, and checks whether both the first device 91 and the second device 92 are ready to perform link training.

### 2. Capability exchange

Capability exchange is performed between the first device 91 and the second device 92. The first device 91 obtains the device information of the second device 92 (including port information of the second receive end 9211 and the second transmit end 9212) from the second memory 923 through the auxiliary link 932, and obtains the cable information of the cable 93 from the third memory 933. The second device 92 obtains the device information of the first device 91 (including port information of the first transmit end 9111 and the first receive end 9112) from the first memory 913 through the auxiliary link 932, and obtains the cable information of the cable 93 from the third memory 933.

### 3. Training decision

The first device 91 determines quantities of links in an upstream direction and a downstream direction, that is, the first device 91 determines quantities of first links and second links. Specifically, values of m and n are determined. For example, data transmission in the downstream direction is usually greater than data transmission in the upstream direction. Therefore, a value of m may be greater than a value of n. When the second device 92 has a special requirement, the second device 92 may request, through the auxiliary link 932, the first device 91 to adjust the quantity of links used for training in the upstream direction and the quantity of links used for training in the downstream direction. The first device 91 determines a training rate in the downstream direction, that is, the first device 91 determines a training rate on the first link, which is denoted as a first rate. Specifically, the first device 91 determines the training rate on the first link based on a capability of the first device 91, a capability of the second device 92, and a capability of the cable 93. The second device 92 determines a training rate in the upstream direction, that is, the second device 92 determines a training rate on the second link, which is denoted as a second rate. Specifically, the second device 92 determines the training rate on the second link based on the capability of the first device 91, the capability of the second device 92, and the capability of the cable 93. When training on the first link fails, the first device 91 determines to decelerate training or re-perform training; and when training on the second link fails, the second device 92 determines to decelerate training or re-perform training.

### 4. Parameter obtaining or estimation

### (1) For the first link:

During first training, the first device 91 determines a first rate on the first link in the current training based on the device information of the first device 91, the device information of the second device 92, and the cable information of the cable 93, and then determines a group of first training parameter values based on the first rate in the current training. When obtaining only the cable information of the cable 93, the first device 91 may estimate a group of first training parameter values based on the cable information of the cable 93. Then, a parameter value of the first transmit end 9111 is set to the first training parameter value. Parameters of transmit ends of the m first links are all set to the first training parameter value. The first device 91 sends the determined first rate in the current training to the second device 92, and the second device 92 determines a group of second training parameter values based on the first rate in the current training. Alternatively, the second device 92 may estimate a group of second training parameter values based on the cable information of the cable 93. Then, a parameter value of the second receive end 9211 is set to the second training parameter value. Parameters of receive ends of the m first links are all set to the second training parameter value. Then, link training on the first link may be performed.

During non-first training, the first device 91 obtains, through matching, a group of first training parameter values from the first memory 913 based on at least one of a first rate in the current training, the device information of the second device 92 (including the port information of the second receive end 9211), the cable information of the cable 93 (including an identification code of the cable 93), and a forward/reverse insertion status of the cable 93. When the group of first training parameter values cannot be obtained through matching, a group of first training parameter values may be estimated based on the cable information of the cable 93. Then, a parameter value of the first transmit end 9111 is set to the first training parameter value. Parameters of transmit ends of the m first links are all set to the first training parameter value. Similarly, the second device 92 obtains, through matching, a group of second training parameter values from the second memory 923 based on at least one of a first rate in the current training, the device information of the first device 91 (including the port information of the first transmit end 9111), the cable information of the cable 93 (including the identification code of the cable 93), and a forward/reverse insertion status of the cable 93. When the group of second training parameter values cannot be obtained through matching, a group of second training parameter values may be estimated based on the cable information of the cable 93. Then, a parameter value of the second receive end 9211 is set to the second training parameter value. Parameters of receive ends of the m first links are all set to the second training parameter value. Then, link training on the first link may be performed.

### (2) For the second link:

During first training, the second device 92 determines a second rate on the second link in the current training based on the device information of the first device 91, the device information of the second device 92, and the cable information of the cable 93, and then determines a group of third training parameter values based on the second rate in the current training. When obtaining only the cable information of the cable 93, the second device 92 may estimate a group of third training parameter values based on the cable information of the cable 93. Then, a parameter value of the second transmit end 9212 is set to the third training parameter value. Parameters of transmit ends of the n second links are all set to the third training parameter value. The second device 92 sends the determined second rate in the current training to the first device 91, and the first device 91 determines a group of fourth training parameter values based on the second rate in the current training. Alternatively, the first device 91 may estimate a group of fourth training parameter values based on the cable information of the cable 93. Then, a parameter value of the first receive end 9112 is set to the fourth training parameter value. Parameters of receive ends of the n second links are all set to the fourth training parameter value. Then, link training on the second link may be performed.

During non-first training, the second device 92 obtains, through matching, a group of third training parameter values from the second memory 923 based on at least one of a second rate in the current training, the device information of the first device 91 (including the port information of the first receive end 9112), the cable information of the cable 93, and a forward/reverse insertion status of the cable 93. When the group of third training parameter values cannot be obtained through matching, a group of third training parameter values may be estimated based on the cable information of the cable 93. Then, a parameter value of the second transmit end 9212 is set to the third training parameter value. Parameters of transmit ends of the n second links are all set to the third training parameter value. Similarly, the first device 91 obtains, through matching, a group of fourth training parameter values from the first memory 913 based on at least one of a second rate in the current training, the device information of the second device 92 (including the port information of the second transmit end 9212), the cable information of the cable 93 (including the identification code of the cable 93), and a forward/reverse insertion status of the cable 93. When the group of fourth training parameter values cannot be obtained through matching, a group of fourth training parameter values may be estimated based on the cable information of the cable 93. Then, a parameter value of the first receive end 9112 is set to the fourth training parameter value. Parameters of receive ends of the n second links are all set to the fourth training parameter value. Then, link training on the second link may be performed.

### 5. Clock recovery and locking

### (1) For the first link:

The first device 91 sends a first clock recovery sequence to the second receive end 9211 at the first rate through the first transmit end 9111. After receiving the first clock recovery sequence through the second receive end 9211, the second device 92 performs clock recovery and locking based on the first clock recovery sequence. The first clock recovery sequence needs to be transmitted on all the m first links, and clock recovery and locking need to be performed on each of the m first links.

Each time after clock recovery and locking are completed, the second device 92 sends a first clock locking result to the first device 91. To be specific, the second device 92 sends the first clock locking result to the fourth receive end 9114 through the fourth transmit end 9214, and the first device 91 receives the first clock locking result through the fourth receive end 9114. The first clock locking result includes a clock locking result of each of the m first links. When a first link on which clock locking fails exists in the m first links, the clock locking on the link between the first transmit end 9111 and the second receive end 9211 fails. When no first link on which clock locking fails exists in the m first links, the clock locking on the link between the first transmit end 9111 and the second receive end 9211 succeeds.

For any first link in the first link on which the clock locking fails, the first device 91 adjusts a configuration of a voltage swing of the first link, and then the first device 91 sends, to the third receive end 9213 through the third transmit end 9113, information indicating that configuration update of the voltage swing is completed. After receiving, through the third receive end 9213, the information indicating that the configuration update of the voltage swing is completed, the second device 92 continues to perform clock recovery and locking, and after clock locking on all first links succeeds, starts equalization calculation and link check. If all preset voltage swing values for adjustment have been traversed, but the clock locking on all the first links still cannot succeed, it indicates that the link training on the first link fails, and training decision needs to be performed again.

### (2) For the second link:

The second device 92 sends a second clock recovery sequence to the first receive end 9112 at the second rate through the second transmit end 9212. After receiving the second clock recovery sequence through the first receive end 9112, the first device 91 performs clock recovery and locking based on the second clock recovery sequence. The second clock recovery sequence needs to be transmitted on all the n second links, and clock recovery and locking need to be performed on each of the n second links.

Each time after clock recovery and locking are completed, the first device 91 sends a second clock locking result to the second device 92. To be specific, the first device 91 sends the second clock locking result to the third receive end 9213 through the third transmit end 9113, and the second device 92 receives the second clock locking result through the third receive end 9213. The second clock locking result includes a clock locking result of each of the n second links. When a second link on which clock locking fails exists in the n second links, the clock locking on the link between the second transmit end 9212 and the first receive end 9112 fails. When no second link on which clock locking fails exists in the n second links, the clock locking on the link between the second transmit end 9212 and the first receive end 9112 succeeds.

For any second link in the second link on which the clock locking fails, the second device 92 adjusts a configuration of a voltage swing of the second link, and then the second device 92 sends, to the fourth receive end 9114 through the fourth transmit end 9214, information indicating that configuration update of the voltage swing is completed. After receiving, through the fourth receive end 9114, the information indicating that the configuration update of the voltage swing is completed, the first device 91 continues to perform clock recovery and locking, and after clock locking on all second links succeeds, starts equalization calculation and link check. If all preset voltage swing values for adjustment have been traversed, but the clock locking on all the second links still cannot succeed, it indicates that the link training on the second link fails, and training decision needs to be performed again.

### 6. Equalization calculation and link check

### (1) For the first link:

The first device 91 sends a first equalization sequence to the second receive end 9211 at the first rate through the first transmit end 9111. After receiving the first equalization sequence through the second receive end 9211, the second device 92 first checks whether there is a first link on which a clock loss-of-lock occurs. If there is the first link on which the clock loss-of-lock occurs, a configuration of a continuous time linear equalization parameter of the first link on which the clock loss-of-lock occurs is adjusted, and clock loss-of-lock information of the first link on which the clock loss-of-lock occurs is sent to the first device 91 through the auxiliary link 932. That is, the second device 92 sends, to the fourth receive end 9114 through the fourth transmit end 9214, the clock loss-of-lock information of the first link on which the clock loss-of-lock occurs. The first device 91 receives, through the fourth receive end 9114, the clock loss-of-lock information of the first link on which the clock loss-of-lock occurs, and then re-performs training. If there is no first link on which a clock loss-of-lock occurs, equalization calculation is performed based on the first equalization sequence. The first equalization sequence needs to be transmitted on all the m first links, and equalization calculation needs to be performed on each of the m first links.

Each time after equalization calculation is completed, the second device 92 sends a first equalization calculation result to the first device 91. To be specific, the second device 92 sends the first equalization calculation result to the fourth receive end 9114 through the fourth transmit end 9214, and the first device 91 receives the first equalization calculation result through the fourth receive end 9114. The first equalization calculation result includes an equalization calculation result of each of the m first links. When a first link on which equalization calculation fails exists in the m first links, the equalization calculation on the link between the first transmit end 9111 and the second receive end 9211 fails. When no first link on which equalization calculation fails exists in the m first links, the equalization calculation on the link between the first transmit end 9111 and the second receive end 9211 succeeds.

For any first link in the first link on which the equalization calculation fails, the first device 91 adjusts a configuration of a transmit-end feedforward equalization parameter of the first link, and then the first device 91 sends, to the third receive end 9213 through the third transmit end 9113, information indicating that configuration update of the transmit-end feedforward equalization parameter is completed. After receiving, through the third receive end 9213, the information indicating that the configuration update of the transmit-end feedforward equalization parameter is completed, the second device 92 continues to perform equalization calculation, and after equalization calculation on all first links succeeds, starts link check. If all preset transmit-end feedforward equalization values for adjustment have been traversed, but the equalization calculation on all the first links still cannot succeed, it indicates that the link training on the first link fails.

After equalization calculation on all the m first links succeeds, the second device 92 starts to perform link check. Each time after link check is completed, the second device 92 sends a first link check result to the first device 91. To be specific, the second device 92 sends the first link check result to the fourth receive end 9114 through the fourth transmit end 9214, and the first device 91 receives the first link check result through the fourth receive end 9114. The first link check result includes a link check result of each of the m first links. When a first link on which link check fails exists in the m first links, the link check on the link between the first transmit end 9111 and the second receive end 9211 fails, that is, the link training on the link between the first transmit end 9111 and the second receive end 9211 fails. When no first link on which link check fails exists in the m first links, the link training on the link between the first transmit end 9111 and the second receive end 9211 succeeds.

### (2) For the second link:

The second device 92 sends a second equalization sequence to the first receive end 9112 at the second rate through the second transmit end 9212. After receiving the second equalization sequence through the first receive end 9112, the first device 91 first checks whether there is a second link on which a clock loss-of-lock occurs. If there is the second link on which the clock loss-of-lock occurs, a configuration of a continuous time linear equalization parameter of the second link on which the clock loss-of-lock occurs is adjusted, and clock loss-of-lock information of the second link on which the clock loss-of-lock occurs is sent to the second device 92 through the auxiliary link 932. That is, the first device 91 sends, to the third receive end 9213 through the third transmit end 9113, the clock loss-of-lock information of the second link on which the clock loss-of-lock occurs. The second device 92 receives, through the third receive end 9213, the clock loss-of-lock information of the second link on which the clock loss-of-lock occurs, and then re-performs training. If there is no second link on which a clock loss-of-lock occurs, equalization calculation is performed based on the second equalization sequence. The second equalization sequence needs to be transmitted on all the n second links, and equalization calculation needs to be performed on each of the n second links.

Each time after equalization calculation is completed, the first device 91 sends a second equalization calculation result to the second device 92. To be specific, the first device 91 sends the second equalization calculation result to the third receive end 9213 through the third transmit end 9113, and the second device 92 receives the second equalization calculation result through the third receive end 9213. The second equalization calculation result includes an equalization calculation result of each of the n second links. When a second link on which equalization calculation fails exists in the n second links, the equalization calculation on the link between the second transmit end 9212 and the first receive end 9112 fails. When no second link on which equalization calculation fails exists in the n second links, the equalization calculation on the link between the second transmit end 9212 and the first receive end 9112 succeeds.

For any second link in the second link on which the equalization calculation fails, the second device 92 adjusts a configuration of a transmit-end feedforward equalization parameter of the second link, and then the second device 92 sends, to the fourth receive end 9114 through the fourth transmit end 9214, information indicating that configuration update of the transmit-end feedforward equalization parameter is completed. After receiving, through the fourth receive end 9114, the information indicating that the configuration update of the transmit-end feedforward equalization parameter is completed, the first device 91 continues to perform equalization calculation, and after equalization calculation on all second links succeeds, starts link check. If all preset transmit-end feedforward equalization values for adjustment have been traversed, but the equalization calculation on all the second links still cannot succeed, it indicates that the link training on the second link fails.

After equalization calculation on all the n second links succeeds, the first device 91 starts to perform link check. Each time after link check is completed, the first device 91 sends a second link check result to the second device 92. To be specific, the first device 91 sends the second link check result to the third receive end 9213 through the third transmit end 9113, and the second device 92 receives the second link check result through the third receive end 9213. The second link check result includes a link check result of each of the n second links. When a second link on which link check fails exists in the n second links, the link check on the link between the second transmit end 9212 and the first receive end 9112 fails, that is, the link training on the link between the second transmit end 9212 and the first receive end 9112 fails. When no second link on which link check fails exists in the n second links, the link training on the link between the second transmit end 9212 and the first receive end 9112 succeeds.

It should be noted that, if the link training on the link between the first transmit end 9111 and the second receive end 9211 succeeds earlier than the link training on the link between the second transmit end 9212 and the first receive end 9112, after the link training on the link between the first transmit end 9111 and the second receive end 9211 succeeds, the first transmit end 9111 may send data to the second receive end 9211, without waiting for a success of the link training on the link between the second transmit end 9212 and the first receive end 9112. If the link training on the link between the second transmit end 9212 and the first receive end 9112 succeeds earlier than the link training on the link between the first transmit end 9111 and the second receive end 9211, after the link training on the link between the second transmit end 9212 and the first receive end 9112 succeeds, the second transmit end 9212 may send data to the first receive end 9112, without waiting for a success of the link training on the link between the first transmit end 9111 and the second receive end 9211.

### 7. Link holding

### (1) For the first link:

The second device 92 continuously checks a link state of the first link, and when the first link is abnormal, notifies the first device 91 through the auxiliary link. The first device 91 may also query the second device 92 for a current link state of the first link according to a requirement.

### (2) For the second link:

The first device 91 continuously checks a link state of the second link, and when the second link is abnormal, notifies the second device 92 through the auxiliary link. The second device 92 may also query the first device 91 for a current link state of the second link according to a requirement.

It should be noted that the link training operation performed by the first device 91 may be performed by using the first processor 912, and the link training operation performed by the second device 92 may be performed by using the second processor 922. However, when the first interface 911 has a processing capability, that is, when the first interface 911 includes a first slave processor, and the first slave processor is coupled to the first transmit end 9111, the first receive end 9112, the third transmit end 9113, and the fourth receive end 9114, for example, the first slave processor is a chip having a processing capability, the first device 91 performs the link training operation by using the first slave processor in the first interface 911. That is, the link training operation in this embodiment of this application may be performed by hardware logic or a processor in an interface circuit. Similarly, when the second interface 921 includes a second slave processor, and the second slave processor is coupled to the second receive end 9211, the second transmit end 9212, the third receive end 9213, and the fourth transmit end 9214, for example, the second slave processor is a chip having a processing capability, the second device 92 performs the link training operation by using the second slave processor in the second interface 921.

It should be noted that, for operations performed by the first device 91 and the second device 92 described in FIG. 9 and FIG. 10, refer to related descriptions in the embodiments shown in FIG. 6 to FIG. 8A to FIG. 8C.

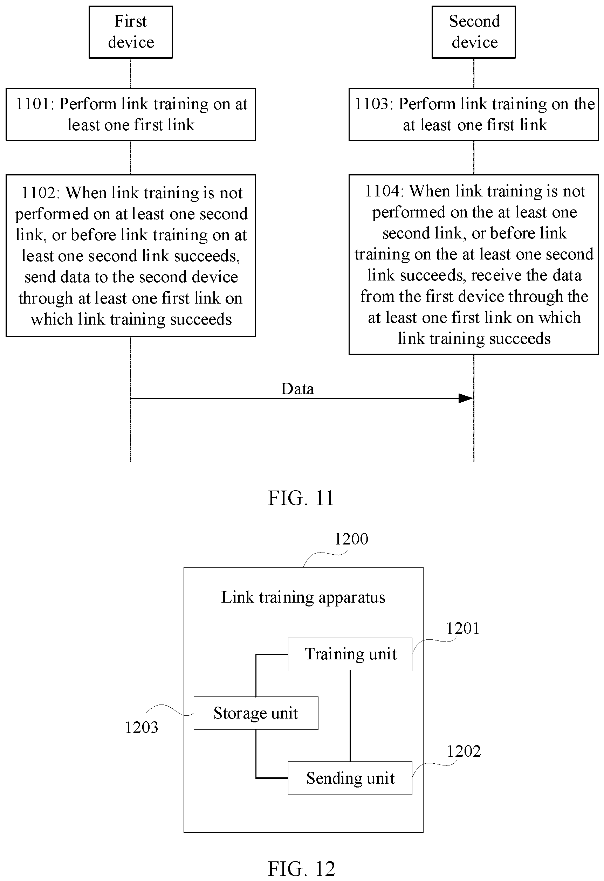

FIG. 11 is a schematic flowchart of a link training method according to an embodiment of this application. The method is applied to a communication system. The communication system includes a first device, a second device, and a cable connecting the first device and the second device. The first device includes a first transmit end and a first receive end. The second device includes a second transmit end and a second receive end. The cable includes at least one first link from the first transmit end to the second receive end and at least one second link from the second transmit end to the first receive end. The method may be applied to the communication system shown in FIG. 9. The method includes but is not limited to the following steps.

1101: The first device performs link training on the at least one first link.

1102: When link training is not performed on the at least one second link, or before link training on the at least one second link succeeds, the first device sends data to the second device through at least one first link on which link training succeeds.

1103: The second device performs link training on the at least one first link.

1104: When link training is not performed on the at least one second link or before link training on the at least one second link succeeds, the second device receives the data from the first device through the at least one first link on which link training succeeds.

In this embodiment of this application, links between the first device and the second device include the at least one first link from the first transmit end of the first device to the second receive end of the second device and the at least one second link from the second transmit end of the second device to the first receive end of the first device. Performing link training on the links between the first device and the second device includes performing link training on the at least one first link and performing link training on the at least one second link, that is, performing link training on a bidirectional transmission link. When link training is not performed on the at least one second link, or before the link training on the at least one second link succeeds, if the link training on the at least one first link succeeds, the data may be sent to the second device through the at least one first link on which the link training succeeds. Specifically, the data is sent to the second receive end through the first transmit end. Therefore, in this embodiment of this application, mutually independent link training of the bidirectional transmission link can be implemented, and training procedures in all directions are not coupled to each other. Therefore, training rates and link quantities of the bidirectional transmission link are not strongly bound, and link training flexibility is greatly improved. After link training in one direction of the bidirectional transmission link succeeds, service transmission may be performed in the direction. Service transmission can be started without waiting for a success of link training in both directions. Therefore, service transmission is earlier, and more complex and more scenarios can be adapted to.

In a possible implementation, the cable further includes an auxiliary link, and that the first device performs link training on the at least one first link includes: The first device sends a first rate to the second device through the auxiliary link, where the first rate is a link training rate of the at least one first link; and the first device performs clock locking, equalization calculation, and link check on the at least one first link at the first rate when a parameter of the first transmit end is set to a first training parameter value.

In this embodiment of this application, the cable further includes the auxiliary link, link training is performed on the at least one first link, the first device sends the first rate to the second device through the auxiliary link, and the first rate is the link training rate of the at least one first link. Therefore, the second device can learn of the training rate of the at least one first link. The first device further sets the parameter of the first transmit end to the first training parameter value, and then performs clock locking, equalization calculation, and link check on the at least one first link at the first rate. The second device also cooperates with the first device at the first rate to perform clock locking, equalization calculation, and link check on the at least one first link. When the clock locking, the equalization calculation, and the link check all succeed, the link training on the at least one first link succeeds. The first device sends the training rate to the second device through the auxiliary link, so that the first device and the second device perform link training at the same training rate. This facilitates a success of the link training on the at least one first link.

In a possible implementation, that the first device performs clock locking, equalization calculation, and link check on the at least one first link includes: The first device sends a first clock recovery sequence to the second receive end through the first transmit end; the first device receives a first clock locking result from the second device through the auxiliary link, where the first clock locking result is that the clock locking succeeds or the clock locking fails; the first device sends a first equalization sequence to the second receive end through the first transmit end when the first clock locking result is that the clock locking succeeds, where the first equalization sequence is used by the second device to perform equalization calculation; and the first device receives a first equalization calculation result or a first link check result from the second device through the auxiliary link, where the first equalization calculation result is that the equalization calculation fails, and the first link check result is that the link check succeeds or the link check fails.

In this embodiment of this application, the first device sends the first clock recovery sequence to the second receive end through the first transmit end, and the first clock recovery sequence is used by the second device to perform clock recovery and locking, so that a clock of the second device is synchronized with a clock of the first device. After completing clock recovery and locking, the second device sends the first clock locking result to the first device through the auxiliary link. When the clock locking performed by the second device succeeds, the first clock locking result is that the clock locking succeeds. When the clock locking performed by the second device fails, the first clock locking result is that the clock locking fails. If the clock locking performed by the second device times out, it is also considered that the clock locking performed by the second device fails. When the first clock locking result is that the clock locking succeeds, the first device sends the first equalization sequence to the second receive end through the first transmit end, and the first equalization sequence is used by the second device to perform equalization calculation. When the equalization calculation performed by the second device fails, the second device sends the first equalization calculation result through the auxiliary link, and the first equalization calculation result is that the equalization calculation fails. When the equalization calculation performed by the second device succeeds, the second device performs link check, and sends the first link check result to the first device through the auxiliary link after the link check is completed. When the link check performed by the second device fails, the first link check result is that the link check fails. When the link check performed by the second device succeeds, the first link check result is that the link check succeeds. In this way, during link training, if the clock locking succeeds, the first device can be clock-synchronized with the second device. The equalization calculation and the link check can make a link equalized. When the clock locking, the equalization calculation, and the link check on the at least one first link all succeeds, it may be considered that the link training on the at least one first link succeeds. For example, when the equalization calculation performed by the second device succeeds, the second device may also choose to send the first equalization calculation result through the auxiliary link. In this case, the first equalization calculation result is that the equalization calculation succeeds.

In a possible implementation, the first clock locking result includes a clock locking result of each of the at least one first link, and when a first link on which clock locking fails exists in the at least one first link, the first clock locking result is that the clock locking fails; or when no first link on which clock locking fails exists in the at least one first link, the first clock locking result is that the clock locking succeeds.

In this embodiment of this application, the first clock locking result received by the first device from the second device includes the clock locking result of each of the at least one first link. A success of the clock locking on the at least one first link requires that clock locking on each of the at least one first link succeeds. The clock locking on the at least one first link fails provided that the first link on which the clock locking fails exists in the at least one first link. Therefore, the second device sends the clock locking result of each of the at least one first link to the first device by using the first clock locking result. This helps the first device determine the clock locking result of the at least one first link.

In a possible implementation, the parameter of the first transmit end includes a voltage swing of each first link, and the method further includes: The first device determines whether a configuration of a voltage swing of the first link on which the clock locking fails in the at least one first link traverses all preset voltage swing values; if the configuration of the voltage swing of the first link on which the clock locking fails in the at least one first link does not traverse all the preset voltage swing values, the first device updates the configuration of the voltage swing of the first link on which the clock locking fails from a first value to a second value, where all the preset voltage swing values include the first value and the second value, and the second value is a value that has not been configured for the voltage swing of the first link on which the clock locking fails; and the first device sends, to the second device through the auxiliary link, information indicating that configuration update of the voltage swing of the first link on which the clock locking fails is completed, where the first training parameter value includes a voltage swing training value, and the first value is the voltage swing training value when the configuration of the voltage swing of the first link on which the clock locking fails is updated for the first time.

In this embodiment of this application, the parameter of the first transmit end includes the voltage swing of each first link. If a value of a voltage swing configured by the first transmit end is excessively high or excessively low, clock locking performed at the second receive end cannot succeed, that is, clock locking performed by the second device cannot succeed. When the clock locking performed at the second receive end fails, that is, the first link on which the clock locking fails exists in the at least one first link, the first device determines whether the configuration of the voltage swing of the first link on which the clock locking fails traverses all the preset voltage swing values. If the configuration of the voltage swing of the first link on which the clock locking fails does not traverse all the preset voltage swing values, the first device adjusts the configuration of the voltage swing of the first link on which the clock locking fails, for example, updates the configuration of the voltage swing of the first link on which the clock locking fails to a value that has not been configured for the voltage swing. Then, the first device notifies, through the auxiliary link, the second device that the configuration update of the voltage swing of the first link on which the clock locking fails is completed. In this way, the second device may perform clock recovery and locking again. Therefore, when the clock locking performed by the second device cannot succeed, the voltage swing of the first link is adjusted, so that the clock locking performed by the second device succeeds.

In a possible implementation, the first equalization calculation result includes an equalization calculation result of each of the at least one first link, and when a first link on which equalization calculation fails exists in the at least one first link, the first equalization calculation result is that the equalization calculation fails.

In this embodiment of this application, the first equalization calculation result received by the first device from the second device includes the equalization calculation result of each of the at least one first link. A success of the equalization calculation on the at least one first link requires that equalization calculation on each of the at least one first link succeeds. The equalization calculation on the at least one first link fails provided that the first link on which the equalization calculation fails exists in the at least one first link. Therefore, the second device sends the equalization calculation result of each of the at least one first link to the first device by using the first equalization calculation result. This helps the first device determine the equalization calculation result of the at least one first link.

In a possible implementation, the first equalization calculation result further includes a clock loss-of-lock status of each of the at least one first link, and the method further includes: The first device determines whether a first link on which a clock loss-of-lock occurs exists in the at least one first link; and if the first link on which the clock loss-of-lock occurs exists in the at least one first link, the first device sends the first rate to the second device through the auxiliary link, and sends the first clock recovery sequence to the second receive end through the first transmit end.

In this embodiment of this application, an equalization calculation failure may be caused by a clock loss-of-lock of a link during equalization calculation. Therefore, when the equalization calculation performed by the second device fails, the first equalization calculation result received by the first device from the second device further includes the clock loss-of-lock status of each of the at least one first link. If the first link on which the clock loss-of-lock occurs exists in the at least one first link, it indicates that the equalization calculation failure of the second device may be caused by the link loss-of-lock of the first link. In this case, the first device may re-send the first rate to the second device through the auxiliary link, and re-send the first clock recovery sequence to the second receive end through the first transmit end. After re-receiving the first rate and the first clock recovery sequence, the second device re-performs link training. This helps the link training succeed.

In a possible implementation, the parameter of the first transmit end includes a transmit-end feedforward equalization parameter of each first link, and if no first link on which a clock loss-of-lock occurs exists in the at least one first link, the method further includes: The first device determines whether a configuration of a transmit-end feedforward equalization parameter of the first link on which the equalization calculation fails in the at least one first link traverses all preset transmit-end feedforward equalization values; if the configuration of the transmit-end feedforward equalization parameter of the first link on which the equalization calculation fails in the at least one first link does not traverse all the preset transmit-end feedforward equalization values, the first device updates the configuration of the transmit-end feedforward equalization parameter of the first link on which the equalization calculation fails from a third value to a fourth value, where all the preset transmit-end feedforward equalization values include the third value and the fourth value, and the fourth value is a value that has not been configured for the transmit-end feedforward equalization parameter of the first link on which the equalization calculation fails; and the first device sends, to the second device through the auxiliary link, information indicating that configuration update of the transmit-end feedforward equalization parameter of the first link on which the equalization calculation fails is completed, where the first training parameter value includes a transmit-end feedforward equalization training value, and the third value is the transmit-end feedforward equalization training value when the configuration of the transmit-end feedforward equalization parameter of the first link on which the equalization calculation fails is updated for the first time.

In this embodiment of this application, the parameter of the first transmit end includes the transmit-end feedforward equalization parameter of each first link. A configuration of a value of the transmit-end feedforward equalization parameter affects link equalization, that is, affects whether the equalization calculation can succeed. When equalization calculation performed at the second receive end fails, that is, the first link on which the equalization calculation fails exists in the at least one first link, the first device determines whether the configuration of the transmit-end feedforward equalization parameter of the first link on which the equalization calculation fails traverses all the preset transmit-end feedforward equalization values. If the configuration of the transmit-end feedforward equalization parameter of the first link on which the equalization calculation fails in the at least one first link does not traverse all the preset transmit-end feedforward equalization values, the first device adjusts the configuration of the transmit-end feedforward equalization parameter of the first link on which the equalization calculation fails, for example, updates the configuration of the transmit-end feedforward equalization parameter of the first link on which the equalization calculation fails to a value that has not been configured for the transmit-end feedforward equalization parameter. Then, the first device notifies, through the auxiliary link, the second device that the configuration update of the transmit-end feedforward equalization parameter of the first link on which the equalization calculation fails is completed. In this way, the second device may perform equalization calculation again. Therefore, when the equalization calculation performed by the second device cannot succeed, the transmit-end feedforward equalization parameter of the first link is adjusted, so that the equalization calculation performed by the second device succeeds. This helps implement a success of the equalization calculation in the link training.

In a possible implementation, the first link check result includes a link check result of each of the at least one first link, and when a first link on which link check fails exists in the at least one first link, the first link check result is that the link check fails; or when no first link on which link check fails exists in the at least one first link, the first link check result is that the link check succeeds, and the link training on the at least one first link succeeds.

In this embodiment of this application, the first link check result received by the first device from the second device includes the link check result of each of the at least one first link. A success of the link check on the at least one first link requires that link check on each of the at least one first link succeeds. The link check on the at least one first link fails provided that the first link on which the link check fails exists in the at least one first link. Therefore, the second device sends the link check result of each of the at least one first link to the first device by using the first link check result. This helps the first device determine the link check result of the at least one first link.

In a possible implementation, the cable stores cable information of the cable, the first device stores device information of the first device, the second device stores device information of the second device, and the method further includes: The first device obtains the device information of the first device, obtains the cable information of the cable from the cable, and obtains the device information of the second device from the second device through the auxiliary link; the first device determines the first rate based on the device information of the first device, the cable information of the cable, and the device information of the second device; and the first device determines the first training parameter value based on the first rate.

In this embodiment of this application, the cable stores the cable information of the cable, and the cable information includes information such as cable capability information, vendor information, an identification code of the cable, insertion loss information, and length information. The first device stores the device information of the first device, and the second device stores the device information of the second device. The device information includes information such as device capability information, a device name, a serial number, production time, and port information of a port in the device. The first device obtains the device information of the first device stored in the first device, obtains the cable information of the cable from the cable, and obtains the device information of the second device from the second device through the auxiliary link. Because the cable information may represent a cable capability, and the device information may represent a device capability, the first device may determine a training rate based on the device information of the first device, the cable information of the cable, and the device information of the second device, and then determine, based on the training rate, the first training parameter value that needs to be configured at the first transmit end. For example, the first rate is determined based on the capability information of the first device, the capability information of the second device, and the capability information of the cable, and then the first training parameter value is determined based on the first rate and the insertion loss information in the cable information. In this way, training does not need to be started under a condition that a rate is the lowest and the parameter of the first transmit end is set to an initial value, but training may be started under a condition that a rate is the determined rate and the parameter of the first transmit end is set to the determined first training parameter value. This helps implement training at a relatively high rate and reduce training time.

In a possible implementation, the method further includes: The first device stores at least one of the following information: the first rate, the cable information of the cable, the device information of the second device, a forward/reverse insertion status of the cable, or a configured value of the parameter of the first transmit end that is determined after the link training on the at least one first link succeeds.

In this embodiment of this application, after the link training succeeds, the first device stores at least one of the training rate, the cable information of the cable (including the identification code of the cable), the device information of the second device (including port information of the second receive end), the forward/reverse insertion status of the cable, and the configured value of the parameter of the first transmit end (including a value of the voltage swing and a value of the transmit-end feedforward equalization parameter that are of each of the at least one first link). When the first device and the second device perform training again by using the cable, these parameter values may be directly used, to reduce training time and improve a training rate.

In a possible implementation, the cable further includes the auxiliary link, and that the second device performs link training on the at least one first link includes: The second device receives a first rate from the first device through the auxiliary link; and the second device performs clock locking, equalization calculation, and link check on the at least one first link at the first rate when a parameter of the second receive end is set to a second training parameter value.

In a possible implementation, that the second device performs clock locking, equalization calculation, and link check on the at least one first link includes: The second device receives a first clock recovery sequence from the first transmit end through the second receive end; the second device performs clock locking based on the first clock recovery sequence, and sends a first clock locking result to the first device through the auxiliary link, where the first clock locking result is that the clock locking succeeds or the clock locking fails; when the clock locking succeeds, the second device receives a first equalization sequence from the first transmit end through the second receive end; the second device performs equalization calculation based on the first equalization sequence; and when the equalization calculation fails, the second device sends a first equalization calculation result to the first device through the auxiliary link, where the first equalization calculation result is that the equalization calculation fails; or when the equalization calculation succeeds, the second device performs link check, and sends a first link check result to the first device through the auxiliary link, where the first link check result is that the link check succeeds or the link check fails. For example, when the equalization calculation performed by the second device succeeds, the second device may also choose to send the first equalization calculation result through the auxiliary link. In this case, the first equalization calculation result is that the equalization calculation succeeds.

In a possible implementation, the clock locking fails when a first link on which clock locking fails exists in the at least one first link; or the clock locking succeeds when no first link on which clock locking fails exists in the at least one first link.

In a possible implementation, the equalization calculation fails when a first link that does not meet at least one of the following conditions exists in the at least one first link: character delimitation succeeds, periodic synchronization succeeds, or a bit error rate is less than a bit error rate 1; or the equalization calculation succeeds when no first link that does not meet at least one of the following conditions exists in the at least one first link: character delimitation succeeds, periodic synchronization succeeds, or a bit error rate is less than a bit error rate 1.

In a possible implementation, the parameter configured for the second receive end includes a continuous time linear equalization parameter, and before the second device performs equalization calculation based on the first equalization sequence, the method further includes: The second device determines whether a first link on which a clock loss-of-lock occurs exists in the at least one first link; and if the first link on which the clock loss-of-lock occurs exists in the at least one first link, the second device updates a configuration of a continuous time linear equalization parameter of the first link on which the clock loss-of-lock occurs, and sends, to the first device through the auxiliary link, clock loss-of-lock information of the first link on which the clock loss-of-lock occurs.

In this embodiment of this application, an equalization calculation failure may be caused by a clock loss-of-lock of a link during equalization calculation. Therefore, before performing equalization calculation, the second device determines whether the first link on which the clock loss-of-lock occurs exists in the at least one first link. If the first link on which the clock loss-of-lock occurs exists, the configuration of the continuous time linear equalization parameter of the first link on which the clock loss-of-lock occurs is updated, and then the clock loss-of-lock information of the first link on which the clock loss-of-lock occurs is notified through the auxiliary link. In this case, the first device may re-send the first rate to the second device through the auxiliary link, and re-send the first clock recovery sequence to the second receive end through the first transmit end. After re-receiving the first rate and the first clock recovery sequence, the second device re-performs link training. This helps the link training succeed.

In a possible implementation, the link check fails when a first link that does not meet at least one of the following conditions exists in the at least one first link: a channel is aligned or a bit error rate is less than a bit error rate 2; or when no first link that does not meet at least one of the following conditions exists in the at least one first link: a channel is aligned or a bit error rate is less than a bit error rate 2, the link check succeeds, and the link training on the at least one first link succeeds.

In a possible implementation, the cable stores cable information of the cable, and the method further includes: obtaining the cable information of the cable from the cable; and determining the second training parameter value based on the cable information of the cable and the first rate. For example, the second training parameter value is determined based on the first rate and insertion loss information in the cable information.

In a possible implementation, the method further includes: The second device stores at least one of the following information: the first rate, the cable information of the cable, device information of the first device, a forward/reverse insertion status of the cable, or a configured value of the parameter of the second receive end that is determined after the link training on the at least one first link succeeds, where the device information of the first device is obtained from the first device through the auxiliary link.

In this embodiment of this application, after the link training succeeds, the second device stores at least one of the training rate, the cable information of the cable (including an identification code of the cable), the device information of the first device (including port information of the first transmit end), the forward/reverse insertion status of the cable, and the configured value of the parameter of the second receive end (including a value of a continuous time linear equalization parameter and a value of a decision feedback equalization parameter that are of each of the at least one first link). When the first device and the second device perform training again by using the cable, these parameter values may be directly used, to reduce training time and improve a training rate.

It should be noted that, for the specific procedure of the link training method described in this embodiment of this application, refer to related descriptions in the embodiments shown in FIG. 6 to FIG. 10. Details are not described herein again.

FIG. 12 is a schematic diagram of a structure of a link training apparatus according to an embodiment of this application. The link training apparatus 1200 is used in a first device. The first device is connected to a second device through a cable, the cable includes at least one first link and at least one second link, and the link training apparatus includes: a training unit 1201, configured to perform link training on the at least one first link, where the at least one first link is a link from the first device to the second device; and a sending unit 1202, configured to: when link training is not performed on the at least one second link, or before link training on the at least one second link succeeds, send data to the second device through at least one first link on which link training succeeds, where the at least one second link is a link from the second device to the first device.

In a possible implementation, the first device includes a first transmit end, the second device includes a second receive end, the at least one first link is a link from the first transmit end to the second receive end, and the cable further includes an auxiliary link. When performing link training on the at least one first link, the training unit 1201 is specifically configured to: send a first rate to the second device through the auxiliary link, where the first rate is a link training rate of the at least one first link; and perform clock locking, equalization calculation, and link check on the at least one first link at the first rate when a parameter of the first transmit end is set to a first training parameter value.

In a possible implementation, when performing clock locking, equalization calculation, and link check on the at least one first link, the training unit 1201 is specifically configured to: send a first clock recovery sequence to the second receive end through the first transmit end; receive a first clock locking result from the second device through the auxiliary link, where the first clock locking result is that the clock locking succeeds or the clock locking fails; send a first equalization sequence to the second receive end through the first transmit end when the first clock locking result is that the clock locking succeeds, where the first equalization sequence is used by the second device to perform equalization calculation; and receive a first equalization calculation result or a first link check result from the second device through the auxiliary link, where the first equalization calculation result is that the equalization calculation fails, and the first link check result is that the link check succeeds or the link check fails.

In a possible implementation, the first clock locking result includes a clock locking result of each of the at least one first link, and when a first link on which clock locking fails exists in the at least one first link, the first clock locking result is that the clock locking fails; or when no first link on which clock locking fails exists in the at least one first link, the first clock locking result is that the clock locking succeeds.

In a possible implementation, the parameter of the first transmit end includes a voltage swing of each first link, and the training unit 1201 is further configured to: determine whether a configuration of a voltage swing of the first link on which the clock locking fails in the at least one first link traverses all preset voltage swing values; if the configuration of the voltage swing of the first link on which the clock locking fails in the at least one first link does not traverse all the preset voltage swing values, update the configuration of the voltage swing of the first link on which the clock locking fails from a first value to a second value, where all the preset voltage swing values include the first value and the second value, and the second value is a value that has not been configured for the voltage swing of the first link on which the clock locking fails; and send, to the second device through the auxiliary link, information indicating that configuration update of the voltage swing of the first link on which the clock locking fails is completed, where the first training parameter value includes a voltage swing training value, and the first value is the voltage swing training value when the configuration of the voltage swing of the first link on which the clock locking fails is updated for the first time.

In a possible implementation, the first equalization calculation result includes an equalization calculation result of each of the at least one first link, and when a first link on which equalization calculation fails exists in the at least one first link, the first equalization calculation result is that the equalization calculation fails.

In a possible implementation, the first equalization calculation result further includes a clock loss-of-lock status of each of the at least one first link, and the training unit 1201 is further configured to: determine whether a first link on which a clock loss-of-lock occurs exists in the at least one first link; and if the first link on which the clock loss-of-lock occurs exists in the at least one first link, send the first rate to the second device through the auxiliary link, and send the first clock recovery sequence to the second receive end through the first transmit end.

In a possible implementation, the parameter of the first transmit end includes a transmit-end feedforward equalization parameter of each first link, and if no first link on which a clock loss-of-lock occurs exists in the at least one first link, the training unit 1201 is further configured to: determine whether a configuration of a transmit-end feedforward equalization parameter of the first link on which the equalization calculation fails in the at least one first link traverses all preset transmit-end feedforward equalization values; if the configuration of the transmit-end feedforward equalization parameter of the first link on which the equalization calculation fails in the at least one first link does not traverse all the preset transmit-end feedforward equalization values, update the configuration of the transmit-end feedforward equalization parameter of the first link on which the equalization calculation fails from a third value to a fourth value, where all the preset transmit-end feedforward equalization values include the third value and the fourth value, and the fourth value is a value that has not been configured for the transmit-end feedforward equalization parameter of the first link on which the equalization calculation fails; and send, to the second device through the auxiliary link, information indicating that configuration update of the transmit-end feedforward equalization parameter of the first link on which the equalization calculation fails is completed, where the first training parameter value includes a transmit-end feedforward equalization training value, and the third value is the transmit-end feedforward equalization training value when the configuration of the transmit-end feedforward equalization parameter of the first link on which the equalization calculation fails is updated for the first time.

In a possible implementation, the first link check result includes a link check result of each of the at least one first link, and when a first link on which link check fails exists in the at least one first link, the first link check result is that the link check fails; or when no first link on which link check fails exists in the at least one first link, the first link check result is that the link check succeeds, and the link training on the at least one first link succeeds.

In a possible implementation, the cable stores cable information of the cable, the first device stores device information of the first device, the second device stores device information of the second device, and the training unit 1201 is further configured to: obtain the device information of the first device, obtain the cable information of the cable from the cable, and obtain the device information of the second device from the second device through the auxiliary link; determine the first rate based on the device information of the first device, the cable information of the cable, and the device information of the second device; and determine the first training parameter value based on the first rate.

In a possible implementation, the training unit 1201 is further configured to: store at least one of the following information: the first rate, the cable information of the cable, the device information of the second device, a forward/reverse insertion status of the cable, or a configured value of the parameter of the first transmit end that is determined after the link training on the at least one first link succeeds.

It should be noted that, for implementation of the units in this embodiment of this application, refer to related descriptions in the embodiments shown in FIG. 6 to FIG. 11. Details are not described herein again. Certainly, the link training apparatus 1200 provided in this embodiment of this application includes but is not limited to the foregoing unit modules. For example, the link training apparatus 1200 may further include a storage unit 1203. The storage unit 1203 may be configured to store program code and data of the link training apparatus 1200.

In the link training apparatus 1200 described in FIG. 12, link training is performed on the at least one first link. When link training is not performed on the at least one second link, or before the link training on the at least one second link succeeds, if the link training on the at least one first link succeeds, the data may be sent to the second device through the at least one first link on which the link training succeeds. Therefore, in this embodiment of this application, mutually independent link training of the bidirectional transmission link can be implemented, and training procedures in all directions are not coupled to each other. Therefore, training rates and link quantities of the bidirectional transmission link are not strongly bound, and link training flexibility is greatly improved. After link training in one direction of the bidirectional transmission link succeeds, service transmission may be performed in the direction. Service transmission can be started without waiting for a success of link training in both directions. Therefore, service transmission is earlier, and more complex and more scenarios can be adapted to.

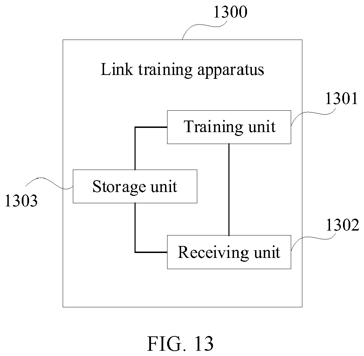

FIG. 13 is a schematic diagram of a structure of another link training apparatus according to an embodiment of this application. The link training apparatus 1300 is used in a first device. The first device is connected to a second device through a cable, the cable includes at least one first link and at least one second link, and the link training apparatus includes: a training unit 1301, configured to perform link training on the at least one first link, where the at least one first link is a link from the first device to the second device; and a receiving unit 1302, configured to: when link training is not performed on the at least one second link, or before link training on the at least one second link succeeds, receive data from the first device through at least one first link on which link training succeeds, where the at least one second link is a link from the second device to the first device.

In a possible implementation, the first device includes a first transmit end, the second device includes a second receive end, the at least one first link is a link from the first transmit end to the second receive end, and the cable further includes an auxiliary link. When performing link training on the at least one first link, the training unit 1301 is specifically configured to: receive a first rate from the first device through the auxiliary link; and perform clock locking, equalization calculation, and link check on the at least one first link at the first rate when a parameter of the second receive end is set to a second training parameter value.

In a possible implementation, when performing clock locking, equalization calculation, and link check on the at least one first link, the training unit 1301 is specifically configured to: receive a first clock recovery sequence from the first transmit end through the second receive end; perform clock locking based on the first clock recovery sequence, and send a first clock locking result to the first device through the auxiliary link, where the first clock locking result is that the clock locking succeeds or the clock locking fails; when the clock locking succeeds, receive a first equalization sequence from the first transmit end through the second receive end; perform equalization calculation based on the first equalization sequence; and when the equalization calculation fails, send a first equalization calculation result to the first device through the auxiliary link, where the first equalization calculation result is that the equalization calculation fails; or when the equalization calculation succeeds, perform link check, and send a first link check result to the first device through the auxiliary link, where the first link check result is that the link check succeeds or the link check fails.

In a possible implementation, the clock locking fails when a first link on which clock locking fails exists in the at least one first link; or the clock locking succeeds when no first link on which clock locking fails exists in the at least one first link.

In a possible implementation, the equalization calculation fails when a first link that does not meet at least one of the following conditions exists in the at least one first link: character delimitation succeeds, periodic synchronization succeeds, or a bit error rate is less than a bit error rate 1; or the equalization calculation succeeds when no first link that does not meet at least one of the following conditions exists in the at least one first link: character delimitation succeeds, periodic synchronization succeeds, or a bit error rate is less than a bit error rate 1.

In a possible implementation, the parameter configured for the second receive end includes a continuous time linear equalization parameter, and before performing equalization calculation based on the first equalization sequence, the training unit 1301 is further configured to: determine whether a first link on which a clock loss-of-lock occurs exists in the at least one first link; and if the first link on which the clock loss-of-lock occurs exists in the at least one first link, update a configuration of a continuous time linear equalization parameter of the first link on which the clock loss-of-lock occurs, and send, to the first device through the auxiliary link, clock loss-of-lock information of the first link on which the clock loss-of-lock occurs.

In a possible implementation, the link check fails when a first link that does not meet at least one of the following conditions exists in the at least one first link: a channel is aligned or a bit error rate is less than a bit error rate 2; or when no first link that does not meet at least one of the following conditions exists in the at least one first link: a channel is aligned or a bit error rate is less than a bit error rate 2, the link check succeeds, and the link training on the at least one first link succeeds.

In a possible implementation, the cable stores cable information of the cable, and the training unit 1301 is further configured to: obtain the cable information of the cable from the cable; and determine the second training parameter value based on the cable information of the cable and the first rate.

In a possible implementation, the training unit 1301 is further configured to: store at least one of the following information: the first rate, the cable information of the cable, device information of the first device, a forward/reverse insertion status of the cable, or a configured value of the parameter of the second receive end that is determined after the link training on the at least one first link succeeds, where the device information of the first device is obtained from the first device through the auxiliary link.

It should be noted that, for implementation of the units in this embodiment of this application, refer to related descriptions in the embodiments shown in FIG. 6 to FIG. 11. Details are not described herein again. Certainly, the link training apparatus 1300 provided in this embodiment of this application includes but is not limited to the foregoing unit modules. For example, the link training apparatus 1300 may further include a storage unit 1303. The storage unit 1303 may be configured to store program code and data of the link training apparatus 1300.

In the link training apparatus 1300 described in FIG. 13, link training is performed on the at least one first link. When link training is not performed on the at least one second link, or before the link training on the at least one second link succeeds, if the link training on the at least one first link succeeds, the data from the first device may be received through the at least one first link on which the link training succeeds. Therefore, in this embodiment of this application, mutually independent link training of the bidirectional transmission link can be implemented, and training procedures in all directions are not coupled to each other. Therefore, training rates and link quantities of the bidirectional transmission link are not strongly bound, and link training flexibility is greatly improved. After link training in one direction of the bidirectional transmission link succeeds, service transmission may be performed in the direction. Service transmission can be started without waiting for a success of link training in both directions. Therefore, service transmission is earlier, and more complex and more scenarios can be adapted to.

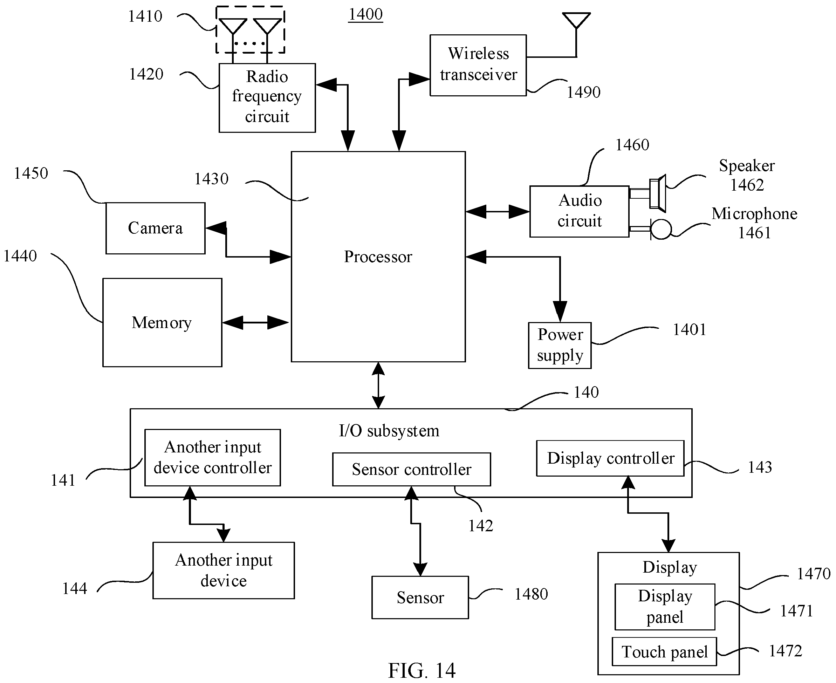

FIG. 14 is a schematic diagram of a structure of an electronic device according to an embodiment of this application. It should be understood that the electronic device 1400 may be the foregoing first device or second device. The electronic device 1400 may include an antenna system 1410, a radio frequency (Radio Frequency, RF) circuit 1420, a processor 1430, a memory 1440, a camera 1450, an audio circuit 1460, a display 1470, one or more sensors 1480, a wireless transceiver 1490, and the like.

The antenna system 1410 may be one or more antennas, or may be an antenna array including a plurality of antennas. The radio frequency circuit 1420 may include one or more analog radio frequency transceivers, the radio frequency circuit 1420 may further include one or more digital radio frequency transceivers, and the radio frequency circuit 1420 is coupled to the antenna system 1410. It should be understood that, in embodiments of this application, coupling refers to a mutual connection in a specific manner, including a direct connection or an indirect connection through another device, for example, a connection through various interfaces, transmission lines, buses, or the like. The radio frequency circuit 1420 may be used for various types of cellular wireless communication.

The processor 1430 may include a communication processor. The communication processor may be configured to control the radio frequency circuit 1420 to implement signal receiving and sending by using the antenna system 1410. The signal may be a voice signal, a media signal, or a control signal. The processor 1430 may include various general-purpose processing devices, for example, may be a general-purpose central processing unit (Central Processing Unit, CPU), a system-on-chip (System on Chip, SOC), a processor integrated on an SOC, an independent processor chip, or a controller. The processor 1430 may further include a dedicated processing device, for example, an application-specific integrated circuit (Application Specific Integrated Circuit, ASIC), a field programmable gate array (Field Programmable Gate Array, FPGA), a digital signal processor (Digital Signal Processor, DSP), a dedicated video or graphics processing unit, a graphics processing unit (Graphics Processing Unit, GPU), and a neural-network processing unit (Neural-network Processing Unit, NPU). The processor 1430 may be a processor group including a plurality of processors, and the plurality of processors are coupled to each other through one or more buses. The processor may include an analog-to-digital converter (Analog-to-Digital Converter, ADC) and a digital-to-analog converter (Digital-to-Analog Converter, DAC), to implement signal connection between different components of the apparatus.

The memory 1440 is coupled to the processor 1430. Specifically, the memory 1440 may be coupled to the processor 1430 by using one or more memory controllers. The memory 1440 may be configured to store computer program instructions, including a computer operating system (Operation System, OS), various user applications, user data, and the like. The processor 1430 may read the computer program instructions or the user data from the memory 1440, or store the computer program instructions or the user data into the memory 1440, to implement a related processing function. The memory 1440 may be a non-volatile memory, for example, an eMMC (Embedded Multimedia Card, embedded multimedia card), a UFS (Universal Flash Storage, universal flash storage), a read-only memory (Read-Only Memory, ROM), or another type of static storage device that can store static information and instructions; or may be a volatile memory (volatile memory), for example, a random access memory (Random Access Memory, RAM), a static random access memory (Static random-access memory, SRAM), or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM) or another optical disk memory, an optical disc memory (including a compact disc, a laser disc, a digital versatile disc, a Blu-ray disc, or the like), a magnetic disk storage medium, or another magnetic storage device, but is not limited thereto. Optionally, the memory 1440 may be independent of the processor 1430, or the memory 1440 may be integrated with the processor 1430.

The camera 1450 is configured to capture an image or a video, and the audio circuit 1460 is coupled to the processor 1430. The audio circuit 1460 may include a microphone 1461 and a speaker 1462. The microphone 1461 may receive sound input from the outside, and the speaker 1462 may play audio data.

The display 1470 is configured to provide various display interfaces or various menu information that can be selected for a user. For example, content displayed by the display 1470 includes but is not limited to a soft keyboard, a virtual mouse, a virtual button, an icon, and the like. The displayed content is associated with a specific internal module or function. The display 1470 may further receive user input. Specifically, the display 1470 may include a display panel 1471 and a touch panel 1472.

The sensor 1480 may include an image sensor, a motion sensor, a proximity sensor, an ambient noise sensor, a sound sensor, an accelerometer, a temperature sensor, a gyroscope, another type of sensor, or a combination of various forms thereof. The processor 1430 drives, by using a sensor controller 142 in an I/O subsystem 140, the sensor 1480 to receive various information such as audio information, image information, or motion information. The sensor 1480 transmits the received information to the processor 1430 for processing.

The wireless transceiver 1490 may provide a wireless connection capability for another device. The another device may be a peripheral device such as a wireless headset, a Bluetooth headset, a wireless mouse, or a wireless keyboard, or may be a wireless network, for example, a wireless fidelity (Wireless Fidelity, Wi-Fi) network, a wireless personal area network (Wireless Personal Area Network, WPAN), or a WLAN thereof. The wireless transceiver 1490 may be a Bluetooth-compatible transceiver, and is configured to wirelessly couple the processor 1430 to a peripheral device such as a Bluetooth headset or a wireless mouse. The wireless transceiver 1490 may alternatively be a Wi-Fi-compatible transceiver, and is configured to wirelessly couple the processor 1430 to a wireless network or another device.

The electronic device 1400 may further include another input device 144 that is coupled to the processor 1430 to receive various user input, for example, receive an input number, name, address, and media selection. The another input device 144 may include a keyboard, a physical button (a press button, a rocker button, or the like), a dial, a slide switch, or the like. The electronic device 1400 may further include the foregoing I/O subsystem 140 and a power supply 1401. It should be understood that the electronic device 1400 in FIG. 14 is merely an example, and does not constitute a limitation on a specific form of the electronic device 1400. The electronic device 1400 may further include another existing component that is not shown in FIG. 14 or another component that may be added in the future.

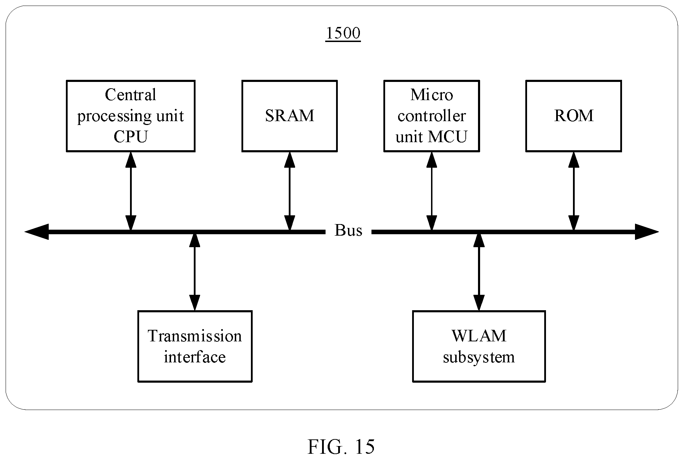

FIG. 15 is a schematic diagram of a structure of another electronic device according to an embodiment of this application. The electronic device may be the foregoing first device or second device. The electronic device 1500 includes at least one CPU, a memory, a microcontroller (Micro controller Unit, MCU), a WLAN subsystem, a bus, a transmission interface, and the like. A type of the memory may include, for example, an SRAM and a ROM. Although not shown in FIG. 15, the electronic device 1500 may further include another dedicated processor such as an application processor (Application Processor, AP) and an NPU, and another subsystem such as a power management subsystem, a clock management subsystem, and a power consumption management subsystem.

The foregoing parts of the electronic device 1500 are coupled by using a connector. For example, the connector includes various types of interfaces, transmission lines, buses, or the like. These interfaces are usually electrical communication interfaces, but may alternatively be mechanical interfaces or interfaces in another form. This is not limited in this embodiment.

Optionally, the CPU may be a single-core (single-CPU) processor or a multi-core (multi-CPU) processor. Optionally, the CPU may be a processor group including a plurality of processors, and the plurality of processors are coupled to each other by using one or more buses. In an optional case, the CPU implements any link training method in the foregoing method embodiments by invoking program instructions stored in an on-chip memory or an off-chip memory. In an optional case, the CPU and the MCU jointly implement any link training method in the foregoing method embodiments. For example, the CPU completes some steps in the link training method, and the MCU completes the other steps in the link training method. In an optional case, the AP or another dedicated processor implements any link training method in the foregoing method embodiments by invoking program instructions stored in an on-chip memory or an off-chip memory.

The transmission interface may be an interface for receiving and sending data by a processor chip. The transmission interface usually includes a plurality of interfaces. In an optional case, the transmission interface may include an inter-integrated circuit (Inter-Integrated Circuit, I2C) interface, a serial peripheral interface (Serial Peripheral Interface, SPI), a universal asynchronous receiver/transmitter (Universal asynchronous receiver-transmitter, UART) interface, a general-purpose input/output (General-purpose input/output, GPIO) interface, and the like. It should be understood that these interfaces may implement different functions by sharing a same physical interface.

In an optional case, the transmission interface may alternatively include a high definition multimedia interface (High Definition Multimedia Interface, HDMI), a V-By-One interface, an embedded display port (Embedded Display Port, eDP), a mobile industry processor interface (Mobile Industry Processor Interface, MIPI), a display port (DP), or the like.

In an optional case, the foregoing parts are integrated into a same chip. In another optional case, the memory may be an independent chip.

The WLAN subsystem may include, for example, a radio frequency circuit and a baseband.

The chip in embodiments of this application is a system manufactured on a same semiconductor substrate by using an integrated circuit technology, and is also referred to as a semiconductor chip. The chip may be a set of integrated circuits formed on the substrate (which is usually a semiconductor material such as silicon) by using the integrated circuit technology, and an outer layer of the chip is usually packaged with a semiconductor packaging material. The integrated circuit may include various function components. Each type of function component includes a logic gate circuit, a metal oxide semiconductor (Metal-Oxide-Semiconductor, MOS) transistor, or a transistor such as a bipolar transistor or a diode, and may also include another part such as a capacitor, a resistor, or an inductor. Each function component may independently operate or operate under action of necessary driver software, and may implement various functions such as communication, operation, or storage.

An embodiment of this application further provides a link training apparatus, including a processor and a transmission interface. The processor is configured to invoke a program stored in a memory, so that the link training apparatus implements the method in the foregoing method embodiments.

An embodiment of this application further provides a computer-readable storage medium. The computer-readable storage medium includes a computer program. When the computer program is run on a computer or a processor, the computer or the processor is enabled to perform the method in the foregoing method embodiments.

An embodiment of this application further provides a computer program product. The computer program product includes a computer program. When the computer program is run on a computer or a processor, the computer or the processor is enabled to perform the method in the foregoing method embodiments.

It can be learned from the foregoing that, after the first device and the second device are powered on and ready, the upstream port and the downstream port separately read capabilities from the peer device, the downstream port determines a quantity of links in an upstream direction and a quantity of links in a downstream direction, the upstream port determines a training rate in the upstream direction, and the downstream port determines a training rate in the downstream direction. Transmit ends and receive ends of the upstream port and the downstream port obtain parameter values of a historical training success based on the training rate, or estimate a group of training parameter values based on the insertion loss information in the cable information, and then the transmit end of the upstream port or the downstream port initiates training. The receive end performs clock recovery on each link based on a clock recovery sequence sent by the transmit end, and the receive end performs equalization calculation and link check on each link based on an equalization sequence sent by the transmit end. The transmit end waits for the receive end to feed back a training state of each link. If training of any link fails, the transmit end adjusts a voltage swing value or a transmit-end feedforward equalization value. After all links are in a successful state, training in this direction succeeds. After training in a direction succeeds, the transmit end and the receive end store training parameter values of the current training, and may directly obtain and use the training parameter values in next training, to improve a training speed. In addition, a service in this direction may start to be transmitted (for example, video or audio service transmission). The quantity of links in the upstream direction may not be equal to the quantity of links in the downstream direction, and the training rate in the upstream direction may not be equal to the training rate in the downstream direction. In the training process, a full-duplex auxiliary link completes auxiliary information exchange. Obtained or estimated parameter values include a voltage swing value and a feedforward equalization value of the transmit end, and a continuous time linear equalization value and a decision feedback equalization value of the receive end. Training in the upstream direction and training in the downstream direction may be performed synchronously or asynchronously. If a training-related parameter value cannot be obtained and there is no cable information, when the first device is not disconnected from the second device, a parameter value of a previous training success may still be used. After the first device is disconnected from the second device, the training-related parameter may be reset to an initial value. The equalization calculation is coarse equalization adjustment. Exit conditions include character delimitation, periodic synchronization, and bit error rate 1 check of all links. If any of the conditions is not met, the transmit end adjusts a transmit-end feedforward equalization value of the link. In the coarse adjustment phase, bit error rate check is added to reduce a failure probability of link check (fine equalization adjustment). The link check includes channel alignment check and bit error rate 2 check (bit error rate 2 < bit error rate 1) of each link. After the training succeeds, information that needs to be stored by the transmit end includes but is not limited to: the device information of the receive end device (including the port information of the receive end), the voltage swing value of each link, the transmit-end feedforward equalization value of each link, and the forward/reverse insertion status of the cable; and information that needs to be stored by the receive end includes but is not limited to: the device information of the transmit end device (including the port information of the transmit end), the continuous time linear equalization value of each link, the decision feedback equalization value of each link, and the forward/reverse insertion status of the cable. The storage medium is a non-volatile component, for example, an erasable programmable read-only memory, a flash memory, or an embedded multimedia memory. According to the training method, training of the bidirectional transmission link can be independent of each other, training processes are not coupled to each other, rates and link quantities in two directions are not strongly bound, and flexibility is greatly improved. After training in a direction succeeds, a service in the direction can be transmitted without waiting for a success of training in both directions. Service transmission is earlier, and can be adapted to more complex and more scenarios. A value of a training-related parameter can be estimated based on cable information, and a parameter value of a training success is stored in a non-volatile component. The parameter value can be updated and can be directly used in next training. This reduces training time and improves a training rate. In complex scenarios such as removal and insertion, cable replacement, and device replacement, a training speed can still be improved. Time for establishing a physical link can be effectively shortened, which is good for application scenarios such as quick screen-on upon system startup. Training-related information exchange is completed by using a bidirectional auxiliary link, and software polling is replaced with active notification. This can reduce requirements on software and reduce software overheads.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The steps of the method in embodiments of this application may be adjusted in sequence, combined, or deleted based on an actual requirement. In addition, for terms and explanations in embodiments of this application, refer to corresponding descriptions in other embodiments.

The modules in the apparatus in embodiments of this application may be combined, divided, and deleted based on an actual requirement.

The foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the scope of the technical solutions in embodiments of this application.

## Claims

1. A link training method, applied to a first device, wherein the first device is connected to a second device through a cable, the first device comprises a first transmit end and a first receive end, the second device comprises a second transmit end and a second receive end, the cable comprises at least one first link from the first transmit end to the second receive end and at least one second link from the second transmit end to the first receive end, and the method comprises:
performing link training on the at least one first link; and
when link training is not performed on the at least one second link, or before link training on the at least one second link succeeds, sending data to the second device through at least one first link on which link training succeeds.

2. The method according to claim 1, wherein a link quantity of the at least one first link and a link quantity of the at least one second link are determined by the first device, or a link quantity of the at least one first link and a link quantity of the at least one second link are determined by the first device based on a request of the second device.

3. The method according to claim 1 or 2, wherein the cable further comprises an auxiliary link, and the performing link training on the at least one first link comprises:
sending a first rate to the second device through the auxiliary link, wherein the first rate is a link training rate of the at least one first link; and
performing clock locking, equalization calculation, and link check on the at least one first link at the first rate when a parameter of the first transmit end is set to a first training parameter value.

4. The method according to claim 3, wherein the performing clock locking, equalization calculation, and link check on the at least one first link comprises:
sending a first clock recovery sequence to the second receive end through the first transmit end;
receiving a first clock locking result from the second device through the auxiliary link, wherein the first clock locking result is that the clock locking succeeds or the clock locking fails;
sending a first equalization sequence to the second receive end through the first transmit end when the first clock locking result is that the clock locking succeeds, wherein the first equalization sequence is used by the second device to perform equalization calculation; and
receiving a first equalization calculation result or a first link check result from the second device through the auxiliary link, wherein the first equalization calculation result is that the equalization calculation fails, and the first link check result is that the link check succeeds or the link check fails.

5. The method according to claim 4, wherein
the first clock locking result comprises a clock locking result of each of the at least one first link, and when a first link on which clock locking fails exists in the at least one first link, the first clock locking result is that the clock locking fails; or
when no first link on which clock locking fails exists in the at least one first link, the first clock locking result is that the clock locking succeeds.

6. The method according to claim 5, wherein the parameter of the first transmit end comprises a voltage swing of each first link, and the method further comprises:
determining whether a configuration of a voltage swing of the first link on which the clock locking fails in the at least one first link traverses all preset voltage swing values;
if the configuration of the voltage swing of the first link on which the clock locking fails in the at least one first link does not traverse all the preset voltage swing values, updating the configuration of the voltage swing of the first link on which the clock locking fails from a first value to a second value, wherein all the preset voltage swing values comprise the first value and the second value, and the second value is a value that has not been configured for the voltage swing of the first link on which the clock locking fails; and
sending, to the second device through the auxiliary link, information indicating that configuration update of the voltage swing of the first link on which the clock locking fails is completed, wherein
the first training parameter value comprises a voltage swing training value, and the first value is the voltage swing training value when the configuration of the voltage swing of the first link on which the clock locking fails is updated for the first time.

7. The method according to any one of claims 4 to 6, wherein
the first equalization calculation result comprises an equalization calculation result of each of the at least one first link, and when a first link on which equalization calculation fails exists in the at least one first link, the first equalization calculation result is that the equalization calculation fails.

8. The method according to claim 7, wherein the first equalization calculation result further comprises a clock loss-of-lock status of each of the at least one first link, and the method further comprises:
determining whether a first link on which a clock loss-of-lock occurs exists in the at least one first link; and
if the first link on which the clock loss-of-lock occurs exists in the at least one first link, sending the first rate to the second device through the auxiliary link, and sending the first clock recovery sequence to the second receive end through the first transmit end.

9. The method according to claim 8, wherein the parameter of the first transmit end comprises a transmit-end feedforward equalization parameter of each first link, and if no first link on which a clock loss-of-lock occurs exists in the at least one first link, the method further comprises:
determining whether a configuration of a transmit-end feedforward equalization parameter of the first link on which the equalization calculation fails in the at least one first link traverses all preset transmit-end feedforward equalization values;
if the configuration of the transmit-end feedforward equalization parameter of the first link on which the equalization calculation fails in the at least one first link does not traverse all the preset transmit-end feedforward equalization values, updating the configuration of the transmit-end feedforward equalization parameter of the first link on which the equalization calculation fails from a third value to a fourth value, wherein all the preset transmit-end feedforward equalization values comprise the third value and the fourth value, and the fourth value is a value that has not been configured for the transmit-end feedforward equalization parameter of the first link on which the equalization calculation fails; and
sending, to the second device through the auxiliary link, information indicating that configuration update of the transmit-end feedforward equalization parameter of the first link on which the equalization calculation fails is completed, wherein
the first training parameter value comprises a transmit-end feedforward equalization training value, and the third value is the transmit-end feedforward equalization training value when the configuration of the transmit-end feedforward equalization parameter of the first link on which the equalization calculation fails is updated for the first time.

10. The method according to any one of claims 4 to 9, wherein
the first link check result comprises a link check result of each of the at least one first link, and when a first link on which link check fails exists in the at least one first link, the first link check result is that the link check fails; or
when no first link on which link check fails exists in the at least one first link, the first link check result is that the link check succeeds, and the link training on the at least one first link succeeds.

11. The method according to any one of claims 4 to 10, wherein the cable stores cable information of the cable, the first device stores device information of the first device, the second device stores device information of the second device, and the method further comprises:
obtaining the device information of the first device, obtaining the cable information of the cable from the cable, and obtaining the device information of the second device from the second device through the auxiliary link;
determining the first rate based on the device information of the first device, the cable information of the cable, and the device information of the second device; and
determining the first training parameter value based on the first rate.

12. The method according to claim 11, wherein the method further comprises: storing at least one of the following information:
the first rate, the cable information of the cable, the device information of the second device, a forward/reverse insertion status of the cable, or a configured value of the parameter of the first transmit end that is determined after the link training on the at least one first link succeeds.

13. A link training method, applied to a second device, wherein the second device is connected to a first device through a cable, the first device comprises a first transmit end and a first receive end, the second device comprises a second transmit end and a second receive end, the cable comprises at least one first link from the first transmit end to the second receive end and at least one second link from the second transmit end to the first receive end, and the method comprises:
performing link training on the at least one first link; and
when link training is not performed on the at least one second link, or before link training on the at least one second link succeeds, receiving data from the first device through at least one first link on which link training succeeds.

14. The method according to claim 13, wherein a link quantity of the at least one first link and a link quantity of the at least one second link are determined by the first device, or a link quantity of the at least one first link and a link quantity of the at least one second link are determined by the first device based on a request of the second device.

15. The method according to claim 13 or 14, wherein the cable further comprises an auxiliary link, and the performing link training on the at least one first link comprises:
receiving a first rate from the first device through the auxiliary link; and
performing clock locking, equalization calculation, and link check on the at least one first link at the first rate when a parameter of the second receive end is set to a second training parameter value.

16. The method according to claim 15, wherein the performing clock locking, equalization calculation, and link check on the at least one first link comprises:
receiving a first clock recovery sequence from the first transmit end through the second receive end;
performing clock locking based on the first clock recovery sequence, and sending a first clock locking result to the first device through the auxiliary link, wherein the first clock locking result is that the clock locking succeeds or the clock locking fails;
when the clock locking succeeds, receiving a first equalization sequence from the first transmit end through the second receive end;
performing equalization calculation based on the first equalization sequence; and
when the equalization calculation fails, sending a first equalization calculation result to the first device through the auxiliary link, wherein the first equalization calculation result is that the equalization calculation fails; or
when the equalization calculation succeeds, performing link check, and sending a first link check result to the first device through the auxiliary link, wherein the first link check result is that the link check succeeds or the link check fails.

17. The method according to claim 16, wherein
the clock locking fails when a first link on which clock locking fails exists in the at least one first link; or
the clock locking succeeds when no first link on which clock locking fails exists in the at least one first link.

18. The method according to claim 16 or 17, wherein
the equalization calculation fails when a first link that does not meet at least one of the following conditions exists in the at least one first link: character delimitation succeeds, periodic synchronization succeeds, or a bit error rate is less than a bit error rate 1; or
the equalization calculation succeeds when no first link that does not meet at least one of the following conditions exists in the at least one first link: character delimitation succeeds, periodic synchronization succeeds, or a bit error rate is less than a bit error rate 1.

19. The method according to any one of claims 16 to 18, wherein the parameter configured for the second receive end comprises a continuous time linear equalization parameter, and before the performing equalization calculation based on the first equalization sequence, the method further comprises:
determining whether a first link on which a clock loss-of-lock occurs exists in the at least one first link; and
if the first link on which the clock loss-of-lock occurs exists in the at least one first link, updating a configuration of a continuous time linear equalization parameter of the first link on which the clock loss-of-lock occurs, and sending, to the first device through the auxiliary link, clock loss-of-lock information of the first link on which the clock loss-of-lock occurs.

20. The method according to any one of claims 16 to 19, wherein
the link check fails when a first link that does not meet at least one of the following conditions exists in the at least one first link: a channel is aligned or a bit error rate is less than a bit error rate 2; or
when no first link that does not meet at least one of the following conditions exists in the at least one first link: a channel is aligned or a bit error rate is less than a bit error rate 2, the link check succeeds, and the link training on the at least one first link succeeds.

21. The method according to any one of claims 15 to 20, wherein the cable stores cable information of the cable, and the method further comprises:
obtaining the cable information of the cable from the cable; and
determining the second training parameter value based on the cable information of the cable and the first rate.

22. The method according to claim 21, wherein the method further comprises: storing at least one of the following information:
the first rate, the cable information of the cable, device information of the first device, a forward/reverse insertion status of the cable, or a configured value of the parameter of the second receive end that is determined after the link training on the at least one first link succeeds, wherein
the device information of the first device is obtained from the first device through the auxiliary link.

23. A link training apparatus, used in a first device, wherein the first device is connected to a second device through a cable, the cable comprises at least one first link and at least one second link, and the link training apparatus comprises:
a training unit, configured to perform link training on the at least one first link, wherein the at least one first link is a link from the first device to the second device; and
a sending unit, configured to: when link training is not performed on the at least one second link, or before link training on the at least one second link succeeds, send data to the second device through at least one first link on which link training succeeds, wherein the at least one second link is a link from the second device to the first device.

24. A link training apparatus, used in a second device, wherein the second device is connected to a first device through a cable, the cable comprises at least one first link and at least one second link, and the link training apparatus comprises:
a training unit, configured to perform link training on the at least one first link, wherein the at least one first link is a link from the first device to the second device; and
a receiving unit, configured to: when link training is not performed on the at least one second link, or before link training on the at least one second link succeeds, receive data from the first device through at least one first link on which link training succeeds, wherein the at least one second link is a link from the second device to the first device.

25. A link training apparatus, comprising a processor and a transmission interface, wherein the processor is configured to invoke a program stored in a memory, so that the link training apparatus implements the method according to any one of claims 1 to 12 or claims 13 to 22.

26. A computer-readable storage medium, wherein the computer-readable storage medium comprises a computer program, and when the computer program is run on a computer or a processor, the computer or the processor is enabled to perform the method according to any one of claims 1 to 12 or claims 13 to 22.

27. A computer program product, wherein the computer program product comprises a computer program, and when the computer program is run on a computer or a processor, the computer or the processor is enabled to perform the method according to any one of claims 1 to 12 or claims 13 to 22.
